# EUROPEAN PATENT APPLICATION

(11) **EP 4 848 784 A1**
(43) Date of publication of application: **02.12.2026**
(21) Application number: 25751278.0
(22) Date of filing: 23.01.2025
(51) Int. Cl.: H04W 24/02, H04L 5/00, H04W 76/18

(54) **METHOD FOR MULTI-LINK SENSING MEASUREMENT, AND RELATED PRODUCT**

(30) Priority: 08.02.2024 CN 202410178080
(71) Applicant: Huawei Technologies Co., Ltd., Shenzhen, Guangdong 518129 (CN)
(72) Inventor: TANG, Zhuqing, Shenzhen, Guangdong 518129 (CN); HUANG, Lei, Shenzhen, Guangdong 518129 (CN); DU, Rui, Shenzhen, Guangdong 518129 (CN); NAREN, Gerile, Shenzhen, Guangdong 518129 (CN)
(74) Representative: Huawei European IPR
(86) International application number: PCT/CN2025/074211
(87) International publication number: WO 2025/167676

(57) **Abstract**

This application provides a communication method. The method may be used to support an IEEE protocol, for example, the 802.11be/Wi-Fi 7/Wi-Fi 8 protocol, the IEEE 802.11 Integrated mmWave protocol, the IEEE 802.11bf/sensing/sensing protocol, or the IEEE 802.15/UWB protocol. The method may also support the SparkLink protocol. The method includes: generating an SBP termination frame, where the SBP termination frame includes first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and sending the SBP termination frame. This helps improve efficiency of subsequently setting up an SBP procedure.

## Description

This application claims priority to Chinese Patent Application No. 202410178080.3, filed with the China National Intellectual Property Administration on February 08, 2024, and entitled "METHOD FOR MULTI-LINK SENSING MEASUREMENT AND RELATED PRODUCT", which is incorporated herein by reference in its entirety.

### TECHNICAL FIELD

This application relates to the field of sensing measurement, and in particular, to a method for multi-link sensing measurement and a related product.

### BACKGROUND

IEEE 802.11bf is a next-generation wireless standard for wireless local area network (wireless local area network, WLAN) sensing (sensing). WLAN sensing means that a device capable of WLAN sensing uses a received wireless signal to determine a feature of a target (for example, an object, an animal, or a person) in a given environment. The feature includes a distance, a direction, a speed, motion, behavior, and the like of the target. The target may include one or more of an object, a person, an animal, and the like. The environment may include one or more of a room, a house, a vehicle, an enterprise, and the like.

Currently, sensing in IEEE 802.11bf is still mainly focused on single-link scenarios. Wi-Fi 7 (IEEE 802.11be) has introduced a multi-link feature. With popularization of Wi-Fi 7, application of multi-link devices (multi-link device, MLD) will become increasingly widespread. An MLD may include one or more affiliated (affiliated) stations, and the MLD has a capability to set up multiple links simultaneously.

Currently, solutions regarding multi-link sensing by proxy are all based on a single link. In a single-link scenario, a sensing by proxy (sensing by proxy) initiator or an SBP responder sends an SBP termination frame to terminate an SBP procedure. However, an existing SBP termination frame is not applicable to a multi-link scenario.

### SUMMARY

This application provides a method for multi-link sensing measurement and a related product, to improve efficiency of subsequently setting up an SBP procedure by an SBP initiator.

According to a first aspect, an embodiment of this application provides a method for multi-link sensing measurement, where the method includes: generating a sensing by proxy (sensing by proxy, SBP) termination frame, where the SBP termination frame includes first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and sending the SBP termination frame.

In this embodiment of this application, the SBP termination frame is generated and sent. The SBP termination frame includes the first indication information or the second indication information, so that the SBP initiator can determine, based on the SBP termination frame, the reason why a sensing measurement session is unable to be set up between the SBP responder and the sensing responder or the reason why the sensing measurement session is terminated, thereby providing a reference for a subsequent behavior of the SBP initiator, and helping improve efficiency of subsequently setting up an SBP procedure.

In a possible implementation, the reason, indicated by the first indication information, why a sensing measurement session is unable to be set up between the SBP responder and the sensing responder includes that a requirement of setting up a sensing measurement session for a mandatory link or a number of mandatory links is not met.

In this implementation, the SBP initiator may determine, based on the first indication information, that the reason why a sensing measurement session is unable to be set up includes that the requirement of setting up the sensing measurement session for the mandatory link or the number of mandatory links is not met.

In a possible implementation, parameters negotiated by the SBP responder and an SBP initiator for setting up a sensing measurement session include a mandatory responder and a mandatory link or a number of mandatory links on the mandatory responder, and the reason, indicated by the first indication information, why a sensing measurement session is unable to be set up between the SBP responder and the sensing responder includes that the mandatory link or the number of mandatory links on the mandatory responder is not met.

In this implementation, the SBP initiator may determine, based on the first indication information, that the reason why a sensing measurement session is unable to be set up includes that the mandatory link or the number of mandatory links on the mandatory responder is not met.

In a possible implementation, parameters negotiated by the SBP responder and an SBP initiator for setting up a sensing measurement session include a number of mandatory responders, and a mandatory link or a number of mandatory links on the mandatory responder, and the reason, indicated by the first indication information, why a sensing measurement session is unable to be set up between the SBP responder and the sensing responder includes that a number of sensing responders meeting the mandatory link or the number of mandatory links is less than the number of mandatory responders.

In this implementation, the SBP initiator may determine, based on the first indication information, that the reason why a sensing measurement session is unable to be set up includes that the number of sensing responders meeting the mandatory link or the number of mandatory links is less than the number of mandatory responders.

In a possible implementation, parameters negotiated by the SBP responder and an SBP initiator for setting up a sensing measurement session include a mandatory link or a number of mandatory links, and the reason, indicated by the first indication information, why a sensing measurement session is unable to be set up between the SBP responder and the sensing responder includes that the SBP responder does not find a sensing responder meeting the mandatory link or the number of mandatory links.

In this implementation, the SBP initiator may determine, based on the first indication information, that the reason why a sensing measurement session is unable to be set up includes that the SBP responder does not find a sensing responder meeting the mandatory link or the number of mandatory links.

In a possible implementation, the second indication information includes identification information of a first link, and the reason why the sensing measurement session is terminated includes that the first link is deleted by the SBP responder.

In this implementation, the SBP initiator may determine, based on the second indication information, that the reason why the sensing measurement session is terminated includes that the first link is deleted by the SBP responder.

In a possible implementation, the second indication information includes identification information of a first link and identification information of a first responder, and the reason why the sensing measurement session is terminated includes that the first link is deleted by the first responder.

In this implementation, the SBP initiator may determine, based on the second indication information, that the reason why the sensing measurement session is terminated includes that the first link is deleted by the first responder.

In a possible implementation, the second indication information includes identification information of a first responder, and the reason why the sensing measurement session is terminated includes that the first responder deletes a link used in the sensing measurement session.

In this implementation, the SBP initiator may determine, based on the second indication information, that the reason why the sensing measurement session is terminated includes that the first responder deletes the link used in the sensing measurement session.

In a possible implementation, the SBP termination frame further includes third indication information, and the third indication information indicates parameter information recommended by the SBP responder for setting up a sensing measurement session, where the parameter information includes at least one of the following: a sensing measurement parameter, a responder list, a number of responders, a link list, or a number of links.

In this implementation, the third indication information indicates parameter information recommended by the SBP responder for setting up a sensing measurement session, helping improve efficiency of subsequently setting up the SBP procedure.

According to a second aspect, an embodiment of this application provides another method for multi-link sensing measurement, where the method includes: receiving an SBP termination frame, where the SBP termination frame includes first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and determining, based on the SBP termination frame, the reason why a sensing measurement session is unable to be set up between the SBP responder and the sensing responder or the reason why the sensing measurement session is terminated.

In this embodiment of this application, the SBP initiator determines, based on the SBP termination frame, the reason why a sensing measurement session is unable to be set up between the SBP responder and the sensing responder or the reason why the sensing measurement session is terminated, thereby providing a reference for a subsequent behavior of the SBP initiator, and helping improve efficiency of subsequently setting up an SBP procedure.

In a possible implementation, the determining, based on the SBP termination frame, that the reason why a sensing measurement session is unable to be set up between the SBP responder and the sensing responder includes: determining, based on the first indication information, that the reason why a sensing measurement session is unable to be set up between the SBP responder and the sensing responder includes that a requirement of setting up a sensing measurement session for a mandatory link or a number of mandatory links is not met.

In a possible implementation, parameters negotiated by the SBP responder and an SBP initiator for setting up a sensing measurement session include a mandatory responder and a mandatory link or a number of mandatory links on the mandatory responder; and the determining, based on the SBP termination frame, that the reason why a sensing measurement session is unable to be set up between the SBP responder and the sensing responder includes: determining, based on the first indication information, that the reason why a sensing measurement session is unable to be set up between the SBP responder and the sensing responder includes that the mandatory link or the number of mandatory links on the mandatory responder is not met.

In a possible implementation, parameters negotiated by the SBP responder and an SBP initiator for setting up a sensing measurement session include a number of mandatory responders, and a mandatory link or a number of mandatory links on the mandatory responder; and the determining, based on the SBP termination frame, that the reason why a sensing measurement session is unable to be set up between the SBP responder and the sensing responder includes: determining, based on the first indication information, that the reason why a sensing measurement session is unable to be set up between the SBP responder and the sensing responder includes that a number of sensing responders meeting the mandatory link or the number of mandatory links is less than the number of mandatory responders.

In a possible implementation, parameters negotiated by the SBP responder and an SBP initiator for setting up a sensing measurement session include a mandatory link or a number of mandatory links; and the determining, based on the SBP termination frame, that the reason why a sensing measurement session is unable to be set up between the SBP responder and the sensing responder includes: determining, based on the first indication information, that the reason why a sensing measurement session is unable to be set up between the SBP responder and the sensing responder includes that the SBP responder does not find a sensing responder meeting the mandatory link or the number of mandatory links.

In a possible implementation, the determining, based on the SBP termination frame, the reason why the sensing measurement session is terminated includes: when the second indication information includes identification information of a first link, determining that the reason why the sensing measurement session is terminated includes that the first link is deleted by the SBP responder.

In this implementation, it may be determined that the reason why the sensing measurement session is terminated includes that the first link is deleted by the SBP responder.

In a possible implementation, the determining, based on the SBP termination frame, the reason why the sensing measurement session is terminated includes: when the second indication information includes identification information of a first link and identification information of a first responder, determining that the reason why the sensing measurement session is terminated includes that the first link is deleted by the first responder.

In this implementation, it may be determined that the reason why the sensing measurement session is terminated includes that the first link is deleted by the first responder.

In a possible implementation, the determining, based on the SBP termination frame, the reason why the sensing measurement session is terminated includes: when the second indication information includes identification information of a first responder, determining that the reason why the sensing measurement session is terminated includes that the first responder deletes a link used in the sensing measurement session.

In this implementation, it may be determined that the reason why the sensing measurement session is terminated includes that the first responder deletes the link used in the sensing measurement session.

In a possible implementation, the method further includes: obtaining, based on third indication information in the SBP termination frame, parameter information recommended by the SBP responder for setting up a sensing measurement session, where the parameter information includes at least one of the following: a sensing measurement parameter, a responder list, a number of responders, a link list, or a number of links.

In this implementation, based on the third indication information in the SBP termination frame, the parameter information recommended by the SBP responder for setting up a sensing measurement session is obtained, helping improve efficiency of subsequently setting up the SBP procedure.

According to a third aspect, an embodiment of this application provides another method for multi-link sensing measurement, where the method includes: generating a first notification frame, where the first notification frame includes fourth indication information, and the fourth indication information is used to determine a closed link in multiple links used in a sensing measurement session set up by an SBP responder and one or more sensing responders and a new link set up after one or more links used in the sensing measurement session are closed; and sending the first notification frame.

In this embodiment of this application, the first notification frame including the fourth indication information is sent, so that an SBP initiator learns of the closed link in the multiple links used in the sensing measurement session set up by the SBP responder and one or more sensing responders, and the new link set up after one or more links used in the sensing measurement session are closed.

In a possible implementation, the first notification frame further includes fifth indication information, the fifth indication information indicates a second responder, and the second responder includes a responder associated with a new link set up after one or more links used in the sensing measurement session are closed.

In this implementation, the first notification frame further includes the fifth indication information, so that the SBP initiator learns of the responder associated with the newly set up link.

In a possible implementation, the fourth indication information includes a bitmap, K bits in the bitmap are in a one-to-one correspondence with K links of the SBP responder, when a first bit in the K bits takes a first value, a link corresponding to the first bit is a link used in the sensing measurement session, and when a second bit in the K bits takes a second value, a link corresponding to the second bit is a link not used in the sensing measurement session, where K is an integer greater than 0.

In this implementation, the link used and the link not used in the sensing measurement session are indicated through a bitmap, so that the SBP initiator determines a deleted link and a newly added link based on the bitmap, and bit overheads can be reduced.

In a possible implementation, the fourth indication information includes identification information of a second link and identification information of a third link, the second link is a closed link in multiple links used in the sensing measurement session, and the third link is a new link set up after one or more links used in the sensing measurement session are closed.

In this implementation, the fourth indication information includes the identification information of the second link and the identification information of the third link, so that the SBP initiator determines the deleted link and the newly added link based on the fourth indication information.

In a possible implementation, before sending the first notification frame, the method further includes: after a link on a second responder used in the sensing measurement session is closed, setting up a new link on the second responder; and performing sensing measurement by using the sensing measurement session, where the link used in the sensing measurement session includes the newly set up link on the second responder.

In this implementation, after the link on the second responder used in the sensing measurement session is closed, a new link is set up on the second responder, so that the sensing measurement session can continue, and signaling overheads and time for re-setting up the session can be reduced.

In a possible implementation, before sending the first notification frame, the method further includes: after a link on a third responder used in the sensing measurement session is closed, closing the sensing measurement session with the third responder; and after the sensing measurement session with the third responder is closed, setting up the sensing measurement session with the second responder.

In this implementation, after the sensing measurement session with the third responder is closed, the sensing measurement session is set up with the second responder, so that the sensing measurement session can continue, and an SBP procedure does not need to be re-initiated, thereby reducing signaling overheads and time.

In a possible implementation, before setting up the new link on the second responder, the method further includes: sending a third notification frame to an SBP initiator, where the third notification frame is used to determine a deleted link in multiple links used in the sensing measurement session and a responder of the deleted link; and receiving an acknowledgment frame from the SBP initiator, where the acknowledgment frame indicates that the SBP initiator has received the third notification frame; and the setting up the new link on the second responder includes: setting up the new link on the second responder when an SBP termination frame is not received within preset duration after the acknowledgment frame is received. If an SBP termination frame is not received within the preset duration after the acknowledgment frame is received, it indicates that the SBP initiator considers that a report fed back by the SBP responder by performing sensing measurement on a remaining link or by using a newly set up link can meet a requirement of the SBP initiator. Therefore, the SBP initiator does not send an SBP termination frame.

In this implementation, when an SBP termination frame is not received within the preset duration after the acknowledgment frame is received, the new link is set up on the second responder, so that it can be ensured that a measurement result obtained by continuing to perform sensing measurement by using the newly set up link used in the sensing measurement session can meet a requirement.

In a possible implementation, before setting up the sensing measurement session with the second responder, the method further includes: sending a third notification frame to the SBP initiator, where the third notification frame is used to determine a deleted link in multiple links used in the sensing measurement session and a responder of the deleted link; and receiving an acknowledgment frame from the SBP initiator, where the acknowledgment frame indicates that the SBP initiator has received the third notification frame; and the setting up the sensing measurement session with the second responder includes: setting up the sensing measurement session with the second responder when an SBP termination frame is not received within preset duration after the acknowledgment frame is received.

In this implementation, when an SBP termination frame is not received within the preset duration after the acknowledgment frame is received, the sensing measurement session is set up with the second responder, so as to ensure that a measurement result obtained by continuing to perform sensing measurement by using the newly set up link used in the sensing measurement session can meet a requirement.

In a possible implementation, the third notification frame includes sixth indication information, and the sixth indication information indicates a deleted link in the multiple links used in the sensing measurement session.

In a possible implementation, the third notification frame includes sixth indication information and seventh indication information, the sixth indication information indicates a deleted link in the multiple links used in the sensing measurement session, and the seventh indication information indicates a responder of the deleted link.

According to a fourth aspect, an embodiment of this application provides another method for multi-link sensing measurement, where the method includes: receiving a first notification frame, where the first notification frame includes fourth indication information, and the fourth indication information is used to determine a closed link in multiple links used in a sensing measurement session set up by an SBP responder and one or more sensing responders, and a new link set up after one or more links used in the sensing measurement session are closed; and determining, based on the first notification frame, a closed link in the multiple links used in the sensing measurement session and a new link set up after one or more links used in the sensing measurement session are closed.

In this embodiment of this application, the closed link in the multiple links used in the sensing measurement session and the new link set up after one or more links used in the sensing measurement session are closed may be determined based on the first notification frame.

In a possible implementation, the first notification frame further includes fifth indication information, the fifth indication information indicates a second responder, and the second responder includes a responder associated with a link set up after one or more links used in the sensing measurement session are closed; and the determining, based on the first notification frame, the closed link in the multiple links used in the sensing measurement session and the new link set up after the one or more links used in the sensing measurement session are closed includes: determining, based on the first notification frame, the closed link in the multiple links used in the sensing measurement session, the new link set up after the one or more links used in the sensing measurement session are closed, and the second responder associated with the newly set up link.

In this implementation, the closed link in the multiple links used in the sensing measurement session, the new link set up after one or more links used in the sensing measurement session are closed, and the second responder associated with the newly set up link may be determined based on the first notification frame.

In a possible implementation, the determining, based on the first notification frame, the closed link in the multiple links used in the sensing measurement session and the new link set up after the one or more links used in the sensing measurement session are closed includes: determining, based on a bitmap included in the fourth indication information, the closed link in the multiple links used in the sensing measurement session and the newly set up link, where K bits in the bitmap are in a one-to-one correspondence with K links of the SBP responder, when a first bit in the K bits takes a first value, a link corresponding to the first bit is a link used in the sensing measurement session, and when a second bit in the K bits takes a second value, a link corresponding to the second bit is a link not used in the sensing measurement session.

In this implementation, the closed link in the multiple links used in the sensing measurement session and the newly set up link are determined based on the bitmap included in the fourth indication information, so that bit overheads can be reduced.

In a possible implementation, the determining, based on the first notification frame, the closed link in the multiple links used in the sensing measurement session and the new link set up after the one or more links used in the sensing measurement session are closed includes: determining, based on identification information of a second link and identification information of a third link that are included in the fourth indication information, the closed link in the multiple links used in the sensing measurement session and the newly set up link, where the second link is the closed link in the multiple links used in the sensing measurement session, and the third link is the newly set up link.

In a possible implementation, the method further includes: receiving a third notification frame, where the third notification frame is used to determine a deleted link in the multiple links used in the sensing measurement session and a responder of the deleted link; and determining, based on the third notification frame, the deleted link in the multiple links used in the sensing measurement session and the responder of the deleted link.

In a possible implementation, the method further includes: when determining that a report fed back by the SBP responder performing sensing measurement on a remaining link or by using the newly set up link can meet a requirement of the SBP initiator, determining not to send an SBP termination frame. Optionally, when it is determined that the report fed back by the SBP responder performing sensing measurement on the remaining link or by using the newly set up link cannot meet the requirement of the SBP initiator, an SBP termination frame is sent to the SBP responder.

In this implementation, it is determined not to send an SBP termination frame, so that the session can continue.

According to a fifth aspect, an embodiment of this application provides another method for multi-link sensing measurement, where the method includes: after one or more links used in a sensing measurement session set up by an SBP responder and one or more sensing responders are closed, generating a second notification frame, where the second notification frame includes a sensing measurement parameter requested for use on an unclosed fourth link of the multiple links used in the sensing measurement session; and sending the second notification frame.

In this embodiment of this application, generating and sending the second notification frame can request the unclosed fourth link of the multiple links used in the sensing measurement session, to update a sensing measurement parameter, thereby enabling the session to continue.

In a possible implementation, before generating the second notification frame, the method further includes: determining, based on parameters negotiated by the SBP responder and an SBP initiator for setting up a sensing measurement session, the sensing measurement parameter requested for use on the fourth link; and the generating the second notification frame includes: generating the second notification frame based on the determined sensing measurement parameter requested for use on the fourth link.

In this implementation, based on the parameters negotiated by the SBP responder and the SBP initiator for setting up a sensing measurement session, the sensing measurement parameter requested for use on the fourth link is determined, so that the sensing measurement parameter requested for use on the fourth link can meet the requirement of the SBP initiator.

In a possible implementation, before generating the second notification frame, the method further includes: sending a third notification frame to an SBP initiator, where the third notification frame is used to determine a deleted link in multiple links used in the sensing measurement session and a responder of the deleted link; and receiving an acknowledgment frame from the SBP initiator, where the acknowledgment frame indicates that the SBP initiator has received the third notification frame; and the generating the second notification frame includes: generating the second notification frame when an SBP termination frame is not received within preset duration after the acknowledgment frame is received.

In this implementation, when an SBP termination frame is not received within the preset duration after the acknowledgment frame is received, the second notification frame is generated, so that it can be ensured that a measurement result obtained by continuing to perform sensing measurement by using the newly set up link used in the sensing measurement session can meet a requirement.

According to a sixth aspect, an embodiment of this application provides another method for multi-link sensing measurement, where the method includes: receiving a second notification frame; and updating a sensing measurement parameter of a fourth link based on the second notification frame, where the fourth link includes a link used in a sensing measurement session set up by a sensing by proxy SBP responder and one or more sensing responders.

In this embodiment of this application, the sensing measurement parameter of the fourth link is updated based on the second notification frame, so that the session can continue.

In a possible implementation, the updating the sensing measurement parameter of the fourth link based on the second notification frame includes: when its own capability supports the sensing measurement parameter requested for use on the fourth link included in the second notification frame, updating the sensing measurement parameter of the fourth link based on the second notification frame.

In this implementation, updating the sensing measurement parameter of the fourth link when its own capability does not support the sensing measurement parameter requested for use on the fourth link included in the second notification frame can be avoided.

According to a seventh aspect, an embodiment of this application provides another method for multi-link sensing measurement, where the method includes: sending a third notification frame to an SBP initiator, where the third notification frame is used to determine a deleted link in multiple links used in a sensing measurement session set up by an SBP responder and one or more sensing responders and a responder of the deleted link; and receiving an acknowledgment frame from the SBP initiator, where the acknowledgment frame indicates that the SBP initiator has received the third notification frame.

In this embodiment of this application, the third notification frame is sent to the SBP initiator, so that the SBP initiator determines the deleted link in the multiple links used in the sensing measurement session set up by the SBP responder and the one or more sensing responders and the responder of the deleted link.

In a possible implementation, the third notification frame includes sixth indication information, and the sixth indication information indicates a deleted link in the multiple links used in the sensing measurement session.

In a possible implementation, the third notification frame includes sixth indication information and seventh indication information, the sixth indication information indicates a deleted link in the multiple links used in the sensing measurement session, and the seventh indication information indicates a responder of the deleted link.

According to an eighth aspect, an embodiment of this application provides another method for multi-link sensing measurement, where the method includes: receiving a third notification frame, where the third notification frame is used to determine a deleted link in multiple links used in a sensing measurement session set up by an SBP responder and one or more sensing responders and a responder of the deleted link; and determining, based on the third notification frame, the deleted link in the multiple links used in the sensing measurement session and the responder of the deleted link.

In this embodiment of this application, the deleted link in the multiple links used in the sensing measurement session and the responder of the deleted link are determined based on the third notification frame, so as to subsequently determine whether to terminate an SBP procedure.

In a possible implementation, the method further includes: when determining that a report fed back by the SBP responder performing sensing measurement on a remaining link or by using the newly set up link can meet a requirement of the SBP initiator, determining not to send an SBP termination frame. Optionally, when it is determined that the report fed back by the SBP responder performing sensing measurement on the remaining link or by using the newly set up link cannot meet the requirement of the SBP initiator, an SBP termination frame is sent to the SBP responder.

In this implementation, it is determined not to send an SBP termination frame, so that the session can continue.

According to a ninth aspect, an embodiment of this application provides a communication apparatus. The communication apparatus has a function of implementing behavior in the method embodiment in the first aspect. The communication apparatus may be a network device, or may be a component (for example, a processor, a chip, or a chip system) of the network device, or may be a logical module or software that can implement all or a part of functions of the network device. Alternatively, the communication apparatus may be a terminal device, or may be a component (for example, a processor, a chip, or a chip system) of the terminal device, or may be a logical module or software that can implement all or a part of functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module, where the processing module is configured to generate an SBP termination frame, where the SBP termination frame includes first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and the transceiver module is configured to send the SBP termination frame.

For possible implementations of the communication apparatus in the ninth aspect, refer to the possible implementations of the first aspect.

For technical effects brought by the possible implementations of the ninth aspect, refer to the descriptions of the technical effects of the possible implementations of the first aspect.

According to a tenth aspect, an embodiment of this application provides a communication apparatus. The communication apparatus has a function of implementing behavior in the method embodiment in the second aspect. The communication apparatus may be a terminal device, or may be a component (for example, a processor, a chip, or a chip system) of the terminal device, or may be a logical module or software that can implement all or a part of functions of the terminal device. Alternatively, the communication apparatus may be a network device, or may be a component (for example, a processor, a chip, or a chip system) of the network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module, where the transceiver module is configured to receive an SBP termination frame, where the SBP termination frame includes first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and the processing module is configured to determine, based on the SBP termination frame, the reason why a sensing measurement session is unable to be set up between the SBP responder and the sensing responder or the reason why the sensing measurement session is terminated.

In a possible implementation, the processing module is specifically configured to determine, based on the first indication information, that the reason why a sensing measurement session is unable to be set up between the SBP responder and the sensing responder includes that a requirement of setting up a sensing measurement session for a mandatory link or a number of mandatory links is not met.

In a possible implementation, parameters negotiated by the SBP responder and an SBP initiator for setting up a sensing measurement session include a mandatory responder and a mandatory link or a number of mandatory links on the mandatory responder, and the processing module is specifically configured to determine, based on the first indication information, that the reason why a sensing measurement session is unable to be set up between the SBP responder and the sensing responder includes that the mandatory link or the number of mandatory links on the mandatory responder is not met.

In a possible implementation, parameters negotiated by the SBP responder and an SBP initiator for setting up a sensing measurement session include a number of mandatory responders, and a mandatory link or a number of mandatory links on the mandatory responder; and the processing module is specifically configured to determine, based on the first indication information, that the reason why a sensing measurement session is unable to be set up between the SBP responder and the sensing responder includes that a number of sensing responders meeting the mandatory link or the number of mandatory links is less than the number of mandatory responders.

In a possible implementation, parameters negotiated by the SBP responder and an SBP initiator for setting up a sensing measurement session include a mandatory link or a number of mandatory links; and the processing module is specifically configured to determine, based on the first indication information, that the reason why a sensing measurement session is unable to be set up between the SBP responder and the sensing responder includes that the SBP responder does not find a sensing responder meeting the mandatory link or the number of mandatory links.

In a possible implementation, the processing module is specifically configured to: when the second indication information includes identification information of a first link, determine that the reason why the sensing measurement session is terminated includes that the first link is deleted by the SBP responder.

In a possible implementation, the processing module is specifically configured to: when the second indication information includes identification information of a first link and identification information of a first responder, determine that the reason why the sensing measurement session is terminated includes that the first link is deleted by the first responder.

In a possible implementation, the processing module is specifically configured to: when the second indication information includes identification information of a first responder, determine that the reason why the sensing measurement session is terminated includes that the first responder deletes a link used in the sensing measurement session.

In a possible implementation, the processing module is further configured to: obtain, based on third indication information in the SBP termination frame, parameter information recommended by the SBP responder for setting up a sensing measurement session, where the parameter information includes at least one of the following: a sensing measurement parameter, a responder list, a number of responders, a link list, or a number of links.

For possible implementations of the communication apparatus in the tenth aspect, refer to the possible implementations of the second aspect.

For technical effects brought by the possible implementations of the tenth aspect, refer to the descriptions of the technical effects of the possible implementations of the second aspect.

According to an eleventh aspect, an embodiment of this application provides a communication apparatus. The communication apparatus has a function of implementing behavior in the method embodiment in the third aspect. The communication apparatus may be a network device, or may be a component (for example, a processor, a chip, or a chip system) of the network device, or may be a logical module or software that can implement all or a part of functions of the network device. Alternatively, the communication apparatus may be a terminal device, or may be a component (for example, a processor, a chip, or a chip system) of the terminal device, or may be a logical module or software that can implement all or a part of functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a first notification frame, where the first notification frame includes fourth indication information, and the fourth indication information is used to determine a closed link in multiple links used in a sensing measurement session set up by an SBP responder and one or more sensing responders and a new link set up after one or more links used in the sensing measurement session are closed; and the transceiver module is configured to send the first notification frame.

In a possible implementation, the processing module is further configured to: after a link on a second responder used in the sensing measurement session is closed, set up a new link on the second responder; and perform sensing measurement by using the sensing measurement session, where the link used in the sensing measurement session includes the newly set up link on the second responder.

In a possible implementation, the processing module is further configured to: after a link on a third responder used in the sensing measurement session is closed, close the sensing measurement session with the third responder; and after the sensing measurement session with the third responder is closed, set up the sensing measurement session with the second responder.

In a possible implementation, the transceiver module is further configured to: send a third notification frame to an SBP initiator, where the third notification frame is used to determine a deleted link in multiple links used in the sensing measurement session and a responder of the deleted link; and receive an acknowledgment frame from the SBP initiator, where the acknowledgment frame indicates that the SBP initiator has received the third notification frame; and the processing module is specifically configured to: set up the new link on the second responder when an SBP termination frame is not received within preset duration after the transceiver module has received the acknowledgment frame.

In a possible implementation, the transceiver module is further configured to: send a third notification frame to the SBP initiator, where the third notification frame is used to determine a deleted link in multiple links used in the sensing measurement session and a responder of the deleted link; and receive an acknowledgment frame from the SBP initiator, where the acknowledgment frame indicates that the SBP initiator has received the third notification frame; and the processing module is specifically configured to: set up the sensing measurement session with the second responder when an SBP termination frame is not received within preset duration after the transceiver module has received the acknowledgment frame.

For possible implementations of the communication apparatus in the eleventh aspect, refer to the possible implementations of the third aspect.

For technical effects brought by the possible implementations of the eleventh aspect, refer to the descriptions of the technical effects of the possible implementations of the third aspect.

According to a twelfth aspect, an embodiment of this application provides a communication apparatus. The communication apparatus has a function of implementing behavior in the method embodiment in the fourth aspect. The communication apparatus may be a terminal device, or may be a component (for example, a processor, a chip, or a chip system) of the terminal device, or may be a logical module or software that can implement all or a part of functions of the terminal device. Alternatively, the communication apparatus may be a network device, or may be a component (for example, a processor, a chip, or a chip system) of the network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module, where the transceiver module is configured to receive a first notification frame, where the first notification frame includes fourth indication information, and the fourth indication information is used to determine a closed link in multiple links used in a sensing measurement session set up by an SBP responder and one or more sensing responders, and a new link set up after one or more links used in the sensing measurement session are closed; and the processing module is configured to: determine, based on the first notification frame, a closed link in the multiple links used in the sensing measurement session and a new link set up after one or more links used in the sensing measurement session are closed.

In a possible implementation, the first notification frame further includes fifth indication information, the fifth indication information indicates a second responder, and the second responder includes a responder associated with a link set up after one or more links used in the sensing measurement session are closed; and the processing module is specifically configured to determine, based on the first notification frame, the closed link in the multiple links used in the sensing measurement session, the new link set up after the one or more links used in the sensing measurement session are closed, and the second responder associated with the newly set up link.

In a possible implementation, the processing module is specifically configured to determine, based on a bitmap included in the fourth indication information, the closed link in the multiple links used in the sensing measurement session and the newly set up link, where K bits in the bitmap are in a one-to-one correspondence with K links of the SBP responder, when a first bit in the K bits takes a first value, a link corresponding to the first bit is a link used in the sensing measurement session, and when a second bit in the K bits takes a second value, a link corresponding to the second bit is a link not used in the sensing measurement session.

In a possible implementation, the processing module is specifically configured to determine, based on identification information of a second link and identification information of a third link that are included in the fourth indication information, the closed link in the multiple links used in the sensing measurement session and the newly set up link, where the second link is the closed link in the multiple links used in the sensing measurement session, and the third link is the newly set up link.

In a possible implementation, the transceiver module is further configured to receive a third notification frame, where the third notification frame is used to determine a deleted link in the multiple links used in the sensing measurement session and a responder of the deleted link; and the processing module is further configured to determine, based on the third notification frame, the deleted link in the multiple links used in the sensing measurement session and the responder of the deleted link.

In a possible implementation, the processing module is further configured to: when determining that a report fed back by the SBP responder performing sensing measurement on a remaining link or by using the newly set up link can meet a requirement of the SBP initiator, determine not to send an SBP termination frame.

For possible implementations of the communication apparatus in the twelfth aspect, refer to the possible implementations of the fourth aspect.

For technical effects brought by the possible implementations of the twelfth aspect, refer to the descriptions of the technical effects of the possible implementations of the fourth aspect.

According to a thirteenth aspect, an embodiment of this application provides a communication apparatus. The communication apparatus has a function of implementing behavior in the method embodiment in the fifth aspect. The communication apparatus may be a network device, or may be a component (for example, a processor, a chip, or a chip system) of the network device, or may be a logical module or software that can implement all or a part of functions of the network device. Alternatively, the communication apparatus may be a terminal device, or may be a component (for example, a processor, a chip, or a chip system) of the terminal device, or may be a logical module or software that can implement all or a part of functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module, where the processing module is configured to: after one or more links used in a sensing measurement session set up by an SBP responder and one or more sensing responders are closed, generate a second notification frame, where the second notification frame includes a sensing measurement parameter requested for use on an unclosed fourth link of the multiple links used in the sensing measurement session; and the transceiver module is further configured to send the second notification frame.

In a possible implementation, the processing module is further configured to determine, based on parameters negotiated by the SBP responder and an SBP initiator for setting up a sensing measurement session, the sensing measurement parameter requested for use on the fourth link; and the processing module is specifically configured to: generate the second notification frame based on the determined sensing measurement parameter requested for use on the fourth link.

In a possible implementation, the transceiver module is further configured to: send a third notification frame to the SBP initiator, where the third notification frame is used to determine a deleted link in multiple links used in the sensing measurement session and a responder of the deleted link; and receive an acknowledgment frame from the SBP initiator, where the acknowledgment frame indicates that the SBP initiator has received the third notification frame; and the processing module is specifically configured to: generate the second notification frame when an SBP termination frame is not received within preset duration after the transceiver module has received the acknowledgment frame.

For possible implementations of the communication apparatus in the thirteenth aspect, refer to the possible implementations of the fifth aspect.

For technical effects brought by the possible implementations of the thirteenth aspect, refer to the descriptions of the technical effects of the possible implementations of the fifth aspect.

According to a fourteenth aspect, an embodiment of this application provides a communication apparatus. The communication apparatus has a function of implementing behavior in the method embodiment in the sixth aspect. The communication apparatus may be a terminal device, or may be a component (for example, a processor, a chip, or a chip system) of the terminal device, or may be a logical module or software that can implement all or a part of functions of the terminal device. Alternatively, the communication apparatus may be a network device, or may be a component (for example, a processor, a chip, or a chip system) of the network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module, where the transceiver module is configured to receive a second notification frame; and the processing module is configured to update a sensing measurement parameter of a fourth link based on the second notification frame, where the fourth link includes a link used in a sensing measurement session set up by a sensing by proxy SBP responder and one or more sensing responders.

In a possible implementation, the processing module is specifically configured to: when its own capability supports the sensing measurement parameter requested for use on the fourth link included in the second notification frame, update the sensing measurement parameter of the fourth link based on the second notification frame.

For possible implementations of the communication apparatus in the fourteenth aspect, refer to the possible implementations of the sixth aspect.

For technical effects brought by the possible implementations of the fourteenth aspect, refer to the descriptions of the technical effects of the possible implementations of the sixth aspect.

According to a fifteenth aspect, an embodiment of this application provides a communication apparatus. The communication apparatus has a function of implementing behavior in the method embodiment in the seventh aspect. The communication apparatus may be a network device, or may be a component (for example, a processor, a chip, or a chip system) of the network device, or may be a logical module or software that can implement all or a part of functions of the network device. Alternatively, the communication apparatus may be a terminal device, or may be a component (for example, a processor, a chip, or a chip system) of the terminal device, or may be a logical module or software that can implement all or a part of functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module, where the processing module is configured to generate a third notification frame; and the transceiver module is configured to send the third notification frame to an SBP initiator, where the third notification frame is used to determine a deleted link in multiple links used in a sensing measurement session set up by an SBP responder and one or more sensing responders and a responder of the deleted link; and receive an acknowledgment frame from the SBP initiator, where the acknowledgment frame indicates that the SBP initiator has received the third notification frame.

For possible implementations of the communication apparatus in the fifteenth aspect, refer to the possible implementations of the seventh aspect.

For technical effects brought by the possible implementations of the fifteenth aspect, refer to the descriptions of the technical effects of the possible implementations of the seventh aspect.

According to a sixteenth aspect, an embodiment of this application provides a communication apparatus. The communication apparatus has a function of implementing behavior in the method embodiment in the eighth aspect. The communication apparatus may be a terminal device, or may be a component (for example, a processor, a chip, or a chip system) of the terminal device, or may be a logical module or software that can implement all or a part of functions of the terminal device. Alternatively, the communication apparatus may be a network device, or may be a component (for example, a processor, a chip, or a chip system) of the network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module, where the transceiver module is configured to receive a third notification frame, where the third notification frame is used to determine a deleted link in multiple links used in a sensing measurement session set up by an SBP responder and one or more sensing responders and a responder of the deleted link; and the processing module is configured to determine, based on the third notification frame, the deleted link in the multiple links used in the sensing measurement session and the responder of the deleted link.

In a possible implementation, the processing module is further configured to: when determining that a report fed back by the SBP responder performing sensing measurement on a remaining link or by using the newly set up link can meet a requirement of the SBP initiator, determine not to send an SBP termination frame.

For possible implementations of the communication apparatus in the sixteenth aspect, refer to the possible implementations of the eighth aspect.

For technical effects brought by the possible implementations of the sixteenth aspect, refer to the descriptions of the technical effects of the possible implementations of the eighth aspect.

According to a seventeenth aspect, an embodiment of this application provides another communication apparatus. The communication apparatus includes one or more processors, where the one or more processors are configured to process data and/or signaling, so that the method in any one of the first aspect to the eighth aspect is implemented.

Optionally, the communication apparatus further includes a memory, where the memory stores a computer program or instructions. When the computer program or the instructions are executed by the processor, the communication apparatus is enabled to perform the method in any one of the first aspect to the eighth aspect. For example, the communication apparatus may be a chip, the processor is a processing unit in the chip, and the memory is a random access memory or a cache in the chip.

In this embodiment of this application, in a process of performing the method, a process of sending information (or a signal) in the method may be understood as a process of outputting information based on a computer program or instructions of the processor. When the information is output, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information into the processor. Further, after the transceiver receives the information, other processing may be performed on the information before the information is input into the processor.

An operation such as sending and/or receiving involved in the processor may be generally understood as a computer program or an instruction output based on the processor if there is no special description, or if the operation does not conflict with an actual function or internal logic of the operation in a related description.

In an implementation process, the processor may be a processor specially configured to perform these methods, or a processor, for example, a general-purpose processor, that executes a computer program or instructions in the memory to perform these methods. For example, the processor may be further configured to execute a program stored in the memory. When the program is executed, the communication apparatus is enabled to perform the method according to any one of the first aspect or the possible implementations of the first aspect.

In a possible implementation, the memory is located outside the communication apparatus. In a possible implementation, the memory is located inside the communication apparatus.

In a possible implementation, the processor and the memory may be alternatively integrated into one component. In other words, the processor and the memory may be alternatively integrated together.

In a possible implementation, the communication apparatus further includes the transceiver. The transceiver is configured to receive a signal, send a signal, or the like.

According to an eighteenth aspect, this application provides another communication apparatus. The communication apparatus includes a processing circuit and an interface circuit. The interface circuit is configured to obtain data or output data. The processing circuit is configured to perform the method in any one of the first aspect to the eighth aspect.

According to a nineteenth aspect, this application provides a computer-readable storage medium. The computer-readable storage medium stores a computer program, and the computer program includes program instructions. When the program instructions are executed, a computer is enabled to perform the method in any one of the first aspect to the eighth aspect.

According to a twentieth aspect, this application provides a computer program product. The computer program product includes a computer program, the computer program includes program instructions, and when the program instructions are executed, a computer is enabled to perform the method in any one of the first aspect to the eighth aspect.

According to a twenty-first aspect, this application provides a chip, including a communication interface and a processor. The communication interface is configured to receive/send a signal of the chip. The processor is configured to execute a computer program or instructions, so that a communication apparatus including the chip is enabled to perform the method in any one of the first aspect to the eighth aspect.

According to a twenty-second aspect, an embodiment of this application provides a communication system, including the communication apparatus in the ninth aspect or any possible implementation of the ninth aspect and the communication apparatus in the tenth aspect or any possible implementation of the tenth aspect.

According to a twenty-third aspect, an embodiment of this application provides a communication system, including the communication apparatus in the eleventh aspect or any possible implementation of the eleventh aspect and the communication apparatus in the twelfth aspect or any possible implementation of the twelfth aspect.

According to a twenty-fourth aspect, an embodiment of this application provides a communication system, including the communication apparatus in the thirteenth aspect or any possible implementation of the thirteenth aspect and the communication apparatus in the fourteenth aspect or any possible implementation of the fourteenth aspect.

According to a twenty-fifth aspect, an embodiment of this application provides a communication system, including the communication apparatus in the fifteenth aspect or any possible implementation of the fifteenth aspect and the communication apparatus in the sixteenth aspect or any possible implementation of the sixteenth aspect.

### BRIEF DESCRIPTION OF DRAWINGS

FIG. 1 is a diagram of an application scenario to which an embodiment of this application is applicable;
FIG. 2 shows an example of a diagram of a structure of a multi-link device according to an embodiment of this application;
FIG. 3 shows an example of a diagram of a structure of multiple links between multi-link devices according to an embodiment of this application;
FIG. 4 shows an example of an SBP measurement procedure according to an embodiment of this application;
FIG. 5 is a diagram of a frame structure of an SBP request frame;
FIG. 6 is a diagram of a frame structure of an SBP response frame;
FIG. 7 shows an example of a sensing measurement request frame action field format;
FIG. 8 shows an example of a sensing measurement response frame action field format;
FIG. 9 shows an example of a structure of an SBP termination frame;
FIG. 10 is a schematic flowchart of a communication method according to an embodiment of this application;
FIG. 11A shows an example of a structure of an SBP termination frame according to an embodiment of this application;
FIG. 11B shows an example of a structure of another SBP termination frame according to an embodiment of this application;
FIG. 11C shows an example of a structure of another SBP termination frame according to an embodiment of this application;
FIG. 12 is a schematic flowchart of another communication method according to an embodiment of this application;
FIG. 13 is a schematic flowchart of another communication method according to an embodiment of this application;
FIG. 14 shows an example of a structure of a multi-link sensing measurement parameters element;
FIG. 15 is a schematic flowchart of another communication method according to an embodiment of this application;
FIG. 16 is a diagram of a first notification frame according to an embodiment of this application;
FIG. 17 is a schematic flowchart of another communication method according to an embodiment of this application;
FIG. 18A is a diagram of a frame structure of a multi-link sensing measurement request frame according to an embodiment of this application;
FIG. 18B is a diagram of a structure of a multi-link sensing measurement parameters element according to an embodiment of this application;
FIG. 18C is a diagram of a structure of common information in a multi-link sensing measurement parameters element according to an embodiment of this application;
FIG. 18D is a diagram of a structure of link information in a multi-link sensing measurement parameters element according to an embodiment of this application;
FIG. 19 is a diagram of a frame structure of a multi-link sensing measurement response frame according to an embodiment of this application;
FIG. 20 is a diagram of a frame structure of a multi-link sensing measurement response frame according to an embodiment of this application;
FIG. 21 is a diagram of a frame structure of a reconfiguration sensing measurement response frame according to an embodiment of this application;
FIG. 22 is a schematic flowchart of another communication method according to an embodiment of this application;
FIG. 23 is a schematic flowchart of another communication method according to an embodiment of this application;
FIG. 24 is a schematic flowchart of another communication method according to an embodiment of this application;
FIG. 25A is a diagram of a frame structure of a multi-link SBP request frame according to an embodiment of this application;
FIG. 25B is a diagram of a responder and link mapping indication list in a multi-link SBP request frame according to an embodiment of this application;
FIG. 25C is a diagram of a responder and link mapping indication in a responder and link mapping indication list according to an embodiment of this application;
FIG. 26A and FIG. 26B are a diagram of a frame structure of a multi-link SBP request frame according to an embodiment of this application;
FIG. 27 is a block diagram of a communication apparatus 10 according to an embodiment of this application;
FIG. 28 is a diagram of another communication apparatus 20 according to an embodiment of this application; and
FIG. 29 is a diagram of a chip system 30 according to an embodiment of this application.

### DESCRIPTION OF EMBODIMENTS

In the specification, claims, and accompanying drawings of this application, the terms "first", "second", various numbers (for example, "#1" and "#2"), and the like are merely intended to distinguish between different objects but do not indicate a particular order. It may be understood that various numbers in embodiments of this application are merely used for differentiation for ease of description, and are not used to limit the scope of embodiments of this application. Sequence numbers of the following processes do not mean an execution sequence. The execution sequence of the processes should be determined based on functions and internal logic of the processes, and should not constitute any limitation on an implementation process of embodiments of this application. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments. In this application, names of messages are merely used to distinguish between different messages, and should not be construed as a limitation. In other words, a name of any message or frame in this application may be replaced with another name. This is not limited in this application.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "multiple" used in this application means two or more. In the text descriptions of this application, the character "/" usually indicates an "or" relationship between associated objects.

It may be understood that in embodiments of this application, "B corresponding to A" indicates that there is a correspondence between A and B, and B may be determined based on A. However, it should also be understood that determining (or generating) B based on (or based on) A does not mean that B is determined (or generated) based on (or based on) A only, and B may alternatively be determined (or generated) based on (or based on) A and/or other information.

It should be understood that, in this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined based only on the information C, and also includes that the information D is determined based on the information C and other information. In addition, that information C is used to determine information D may further include an indirect determining case. For example, the information D is determined based on information E, and the information E is determined based on the information C.

In embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source end for sending the information and the destination end. However, the destination end may understand valid information from the source end. Similar descriptions in this application may be understood similarly, and details are not described herein.

In some of accompanying drawings related to a message (frame) structure in embodiments of this application, an example of a length of a field in a message is provided. It should be understood that a length of a field shown in the accompanying drawings in embodiments of this application is merely an example. In actual applications, a length of any field may change. In accompanying drawings related to a message (frame) structure in embodiments of this application, a location of each field is not limited.

In some of accompanying drawings related to a message structure in embodiments of this application, an example of a name of a field in a message is provided. It should be understood that the name of the field shown in the accompanying drawings in embodiments of this application is merely an example. In actual applications, a name of any field may change.

In some of accompanying drawings related to a message structure in embodiments of this application, a length of a field in a message is 0 or variable (variable), indicating that the field is an optional field. In other words, when the message does not include the field, the length of the field is 0. If the length of the field is variable (variable), it indicates that the length of the field is uncertain. In an actual design process, other indication information may indicate a specific length of the field, or a receiver and a transmitter may negotiate the length of the field in advance, or the length of the field is predefined, or when receiving the message that carries the field, a receiver can determine the length of the field based on other auxiliary information and parse the message. A manner of determining a specific length of a variable-length field is not limited in this application. For details, refer to descriptions of a length of a variable field in an SBP request frame in a current related technology. Details are not described herein again. The following does not repeatedly describe the length of the variable-length field involved in the message.

The following describes technical solutions of this application with reference to accompanying drawings.

The technical solutions provided in embodiments of this application may be applied to a wireless local area network (wireless local area network, WLAN) scenario, for example, support related institute of electrical and electronics engineers (institute of electrical and electronics engineers, IEEE) 802.11 standards such as the 802.11a/b/g standard, the 802.11n standard, the 802.11ac standard, the 802.11ax standard, and the 802.11be standard (Wi-Fi 7), also referred to as extremely high throughput (extremely high throughput, EHT), the 802.11bn standard (Wi-Fi 8), or a next-generation standard of Wi-Fi 8, further including standards such as 802.11ad and 802.11ay; may be further applied to an ultra wideband (ultra wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on standards such as 802.11ac, 802.11ax, 802.11be, and a next-generation standard. An implementation of 60 GHz mainly depends on standards such as 802.11ad, 802.11ay, integrated millimeter wave (integrated mmWave), and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Embodiments of this application are mainly described by using an example in which a WLAN network is deployed, especially a network to which the IEEE 802.11 system standard is applied. A person skilled in the art easily understands that, aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or another network that is known or to be developed in the future. Therefore, regardless of used coverage and a used wireless access protocol, the various aspects provided in embodiments of this application are applicable to any appropriate wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system, an internet of things (internet of things, IoT), and a vehicle-to-everything (vehicle-to-x, V2X).

The foregoing communication systems to which this application is applicable are merely examples for description, and the communication systems to which this application is applicable are not limited thereto. This is uniformly described herein, and details are not described below again.

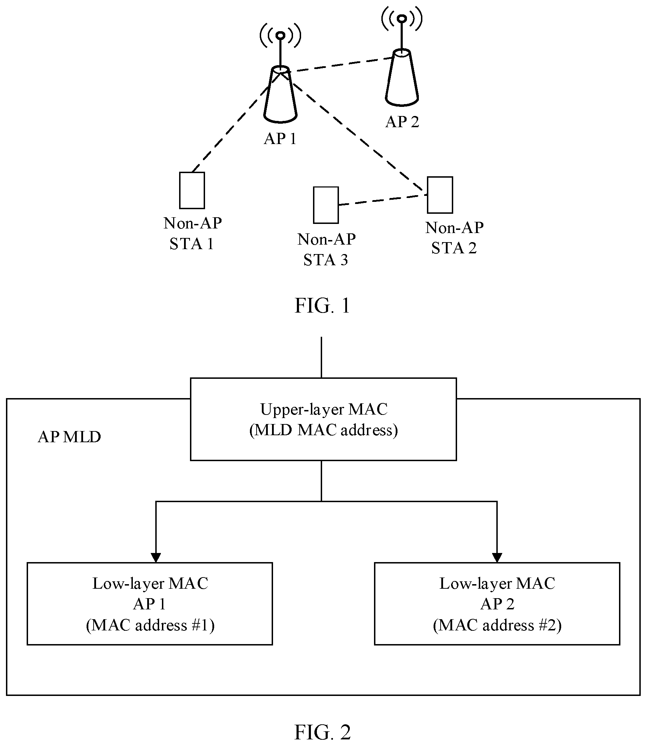

FIG. 1 is a diagram of an application scenario to which an embodiment of this application is applicable. As shown in FIG. 1, a communication method provided in this application is applicable to data communication between access points (access point, AP) (for example, an AP 1 and an AP 2 shown in FIG. 1) and stations (station, STA) (for example, a non-AP STA 1, a non-AP STA 2, and a non-AP STA 3 shown in FIG. 1). The stations may be classified into a non-access point station (none-access point station, non-AP STA) and an access point station. For ease of description, in this specification, the access point station is referred to as an access point (AP), and the non-access point station is referred to as a station (STA) or a non-AP station. A station in the following is a non-AP station. Specifically, the solutions of this application are applicable to data communication between an AP and one or more non-AP stations (for example, data communication between the AP 1 and both of the non-AP STA 1 and the non-AP STA 2), and are also applicable to data communication between APs (for example, data communication between the AP 1 and the AP 2) and data communication between non-AP STAs (for example, data communication between the non-AP STA 2 and the non-AP STA 3).

The access point may be a node used by a terminal (for example, a mobile phone) to access a wired (or wireless) network, and is mainly deployed in a home, inside a building, and inside a campus. A typical coverage radius is dozens of meters to a hundred meters. Certainly, the access point may alternatively be deployed outdoors. The access point is equivalent to a bridge that connects a wired network and a wireless network, and is mainly used to connect various clients in the wireless network together and then connect the wireless network to the Ethernet. The access point is an apparatus having a wireless communication function, supports communication according to the WLAN protocol, and has a function of communicating with another device (for example, a station or another access point) in the WLAN network. Certainly, the access point may further have a function of communicating with another device.

The access point may be an entire device, or may be a chip, a processing system, or the like installed in the entire device. The device in which the chip or the processing system is installed may implement the method and the function in embodiments of this application under control of the chip or the processing system (that is, the AP). The AP in embodiments of this application is an apparatus that provides a service for a station, and may support, for example, one or more standards of IEEE 802.11 series standards such as 802.11a, 802.11b, 802.11g, 802.11n, 802.11ac, 802.11ax, 802.11be, 802.11ad, 802.11ay, and 802.11bf.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. Certainly, the access point may alternatively be a chip and a processing system in these network devices in various forms, to implement the method and the function in embodiments of this application. The access point may be a device that supports a Wi-Fi standard. For example, the access point may alternatively support one or more standards of IEEE 802.11 series standards such as 802.11a, 802.11b, 802.11g, 802.11n, 802.11ac, 802.11ax, 802.11be, 802.11ad, 802.11ay, and 802.11bf.

The station is an apparatus having a wireless communication function, supports communication according to the WLAN protocol, and has a capability of communicating with another station or access point in the WLAN network. For example, the STA is any communication apparatus that allows a user to communicate with the AP and further communicate with the WLAN. The station may be an entire device, or may be a chip, a processing system, or the like installed in the entire device. The device in which the chip or the processing system is installed may implement the method and the function in embodiments of this application under control of the chip or the processing system (that is, the station). The station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The station may include a tag device (tag)/a smart tag device (smart tag), a mobile phone (mobile phone), a mobile station (mobile station, MS), a tablet computer (pad), a computer (for example, a notebook computer) with a wireless transceiver function, a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a cordless phone, a session initiation protocol (session initiation protocol, SIP) phone, a wireless local loop (wireless local loop, WLL) station, a wireless data card, a personal digital assistant (personal digital assistant, PDA) computer, a tablet computer, a laptop computer (laptop computer), a machine type communication (machine type communication, MTC) terminal, and the like. The station may include various handheld devices, in-vehicle devices, wearable devices, computing devices that have a wireless communication function, or other processing devices connected to a wireless modem, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more standards of IEEE 802.11 series standards such as 802.11a, 802.11b, 802.11g, 802.11n, 802.11ac, 802.11ax, 802.11be, 802.11ad, 802.11ay, and 802.11bf.

The AP or the station may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

For ease of understanding of the technical solutions in embodiments of this application, some terms or concepts that may be used in embodiments of this application are first briefly described.
1. Multi-link device (multi-link device, MLD): is a device that supports (has) simultaneous transmission of multiple links. In embodiments of this application, a device that supports multiple links simultaneously and supports the IEEE 802.11 standard is referred to as a multi-link device. The MLD may have a capability to set up multiple links simultaneously.

For example, the multi-link device may be an access point multi-link device (access point MLD, AP MLD), or may be a non-access point MLD (non-AP MLD), for example, a station multi-link device (station MLD, STA MLD). It should be noted that the foregoing names of the multi-link device are merely examples, and do not constitute any limitation on the protection scope of this application. For example, the AP MLD may also be referred to as a multi-link AP. Alternatively, with development of a communication technology, the AP MLD may have other names. Examples are not enumerated for description herein. The scenario shown in FIG. 1 may be a multi-link scenario. In FIG. 1, one or more APs are AP MLDs, and one or more STAs are STA MLDs.

In the IEEE 802.11be (Wi-Fi 7) protocol, the MLD may use multiple links simultaneously. If receiving and sending may be separately performed on different links of the MLD at same time (for example, the multi-link device MLD includes two links; and in a same time period, one link may be used to send a signal, and the other link may be used to receive a signal), this mode is referred to as a simultaneously transmitting and receiving (simultaneously transmitting and receiving, STR) mode. If only receiving or sending can be performed on different links of the MLD simultaneously (for example, the MLD includes two links, and the two links can only be used to send a signal in a same time period, or the two links can only be used to receive a signal in a same time period), this mode is referred to as a non-simultaneously transmitting and receiving (Non-simultaneously transmitting and receiving, NSTR) mode. The solutions provided in embodiments of this application are applicable to the STR mode, and are also applicable to the NSTR mode.

In a possible implementation, the MLD has multiple radio frequency modules, which may operate on different frequency bands. For example, a frequency band on which the MLD operates may be, for example, all or a part of 2.4 GHz, 5 GHz, 6 GHz, and high-frequency 60 GHz. The MLD may include an AP MLD and/or a non-access point (non-AP) MLD. For example, the non-AP MLD may be a STA MLD. For example, different APs in the AP MLD have different operating frequency bands, and different STAs in the non-AP MLD have different operating frequency bands.

The MLD may include one or more affiliated (affiliated) stations, each affiliated station has its own media access control (media access control, MAC) address (address), the MAC address of each affiliated station may be referred to as a low-layer (low) MAC address, and the MLD has an upper-layer (upper) MAC address. FIG. 2 shows an example of a diagram of a structure of a multi-link device according to an embodiment of this application. As shown in FIG. 2, affiliated stations of an AP MLD include an AP 1 and an AP 2, a lower-layer (low) MAC address of the AP 1 is a MAC address #1, and a lower-layer MAC address of the AP 2 is a MAC address #2. In addition, the AP MLD has an upper-layer (upper) MAC address, which is referred to as an MLD MAC address.

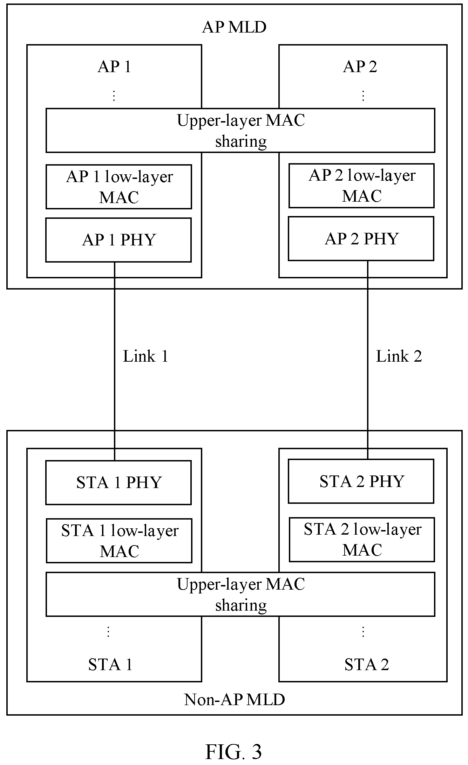

The AP MLD and the non-AP MLD may exchange signaling on any link, to set up a multi-link connection. FIG. 3 shows an example of a diagram of a structure of multiple links between multi-link devices according to an embodiment of this application. As shown in FIG. 3, an AP MLD includes an AP 1 and an AP 2. The AP 1 includes an AP 1 PHY, an AP 1 lower-layer MAC, and an upper-layer MAC. The AP 2 includes an AP 2 PHY, an AP 2 lower-layer MAC, and the upper-layer MAC. The AP 1 and the AP 2 share the upper-layer MAC. A non-AP MLD includes a STA 1 and a STA 2. The STA 1 includes a STA 1 PHY, a STA 1 lower-layer MAC, and an upper-layer MAC. The STA 2 includes a STA 2 PHY, a STA 2 lower-layer MAC, and the upper-layer MAC. The STA 1 and the STA 2 share the upper-layer MAC. The AP 1 and the STA 1 are connected through a link 1, and the AP 2 and the STA 2 are connected through a link 2. FIG. 3 is merely an example, and a number of APs included in the AP MLD, a number of STAs included in the non-AP MLD, and a number of links between the AP MLD and the non-AP MLD are not limited.

In a possible implementation, when the multiple links are set up, an association between the non-AP MLD and the AP MLD may be set up in an association process. For example, the association process may include: The non-AP MLD sends an association request (association request) frame on the link 1. The association request frame carries STA-side information of the link 1 and STA-side information of the link 2. For example, the association request frame may carry a multi-link element (multi-link element) field, and the multi-link element field is used to carry information about the non-AP MLD and information about a station in the non-AP MLD. The AP MLD sends an association response (association response) frame on the link 1. The association response frame carries AP-side information of the link 1, and further carries AP-side information of the link 2. In this way, the STA 1 and the STA 2 of the non-AP MLD respectively set up an association with the AP 1 and the AP 2 of the AP MLD.

In a possible implementation, a STA in the MLD informs a multi-link (multi-link) capability and information of another STA in the MLD by including a basic variant multi-link element (Basic variant Multi-Link element) in some frames transmitted by the STA. The multi-link element may be carried in a beacon frame (beacon frame), a multi-link probe response frame (multi-link probe response frame), or an association response frame ((re)association response frame) sent by an AP, or may be carried in a probe request frame (probe request frame) or an association request frame ((re)association request frame) sent by a STA.

2. Sensing (sensing) technology: WLAN sensing means that a device capable of WLAN sensing uses a received wireless signal to determine a feature of a target (for example, an object, an animal, or a person) in a given environment. The feature includes a distance, a direction, a speed, motion, behavior, and the like of the target. The target may include one or more of an object, a person, an animal, and the like. The environment may include one or more of a room, a house, a vehicle, an enterprise, and the like.

This application mainly relates to a sensing by proxy (agent) sensing by proxy, SBP) technology. In a scenario in which a sensing by proxy initiator (SBP initiator) requests a sensing by proxy responder (SBP responder) to initiate a sensing behavior on behalf of the SBP initiator, the sensing by proxy responder (that is, an AP) may perform sensing measurement by performing an SBP procedure. For example, in the diagram shown in FIG. 1, the non-AP STA 1 and the non-AP STA 2 may separately or simultaneously perform a sensing process with the AP 1. The non-AP STA 1 may send a sensing by proxy request to the AP 1, to request the AP 1 to serve as a proxy of the non-AP STA 1 to obtain a sensing result obtained by the AP 1 and the non-AP STA 2 in the sensing process (or request the AP 1 to obtain a sensing result of the non-AP STA 2).

It should be understood that the non-AP STA 1 is a requesting STA (requesting STA) or a sensing by proxy requesting station (sensing by proxy requesting STA, SBP requesting STA), and the non-AP STA 1 requests the AP 1 to serve as a proxy of the non-AP STA 1 to obtain a sensing result of another station.

When the AP 1 becomes a proxy of the non-AP STA 1, the non-AP STA 1 may obtain the sensing result of the another sensing station through the AP 1, for example, obtain a sensing result of the non-AP STA 2 and/or a sensing result of the non-AP STA 3 through the AP 1.

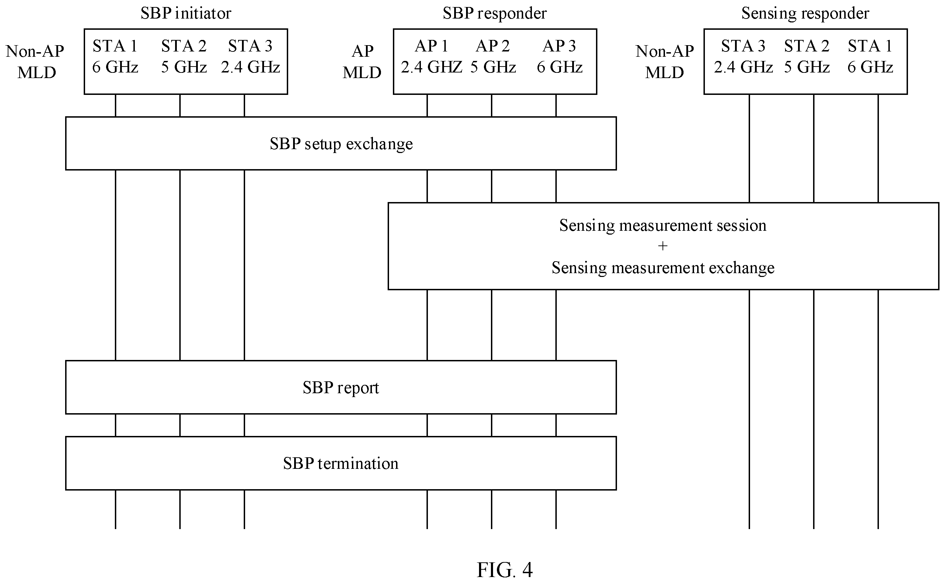

The sensing by proxy technology involves six roles and five steps. The six roles are a sensing by proxy initiator (SBP initiator), a sensing by proxy responder (SBP responder), a sensing initiator (sensing initiator), a sensing responder (sensing responder), a sensing transmitter (sensing transmitter), and a sensing receiver (sensing receiver). It should be understood that each of the six roles may be implemented by a STA or an AP, provided that a function of the corresponding role can be implemented. This is not limited in this application. For example, the SBP initiator may be an AP or a STA. Specifically, the sensing initiator is a device that initiates a sensing process (or a sensing behavior), for example, a station. The sensing responder is a device that participates in the sensing process initiated by the sensing initiator, for example, a station. The sensing transmitter is a device that sends a physical layer protocol data unit (physical protocol data unit, PPDU) for sensing measurement in the sensing process. The sensing receiver is a device that receives, in the sensing process, a PPDU sent by the sensing transmitter and performs sensing measurement. The sensing by proxy initiator is a device that requests the sensing by proxy responder to initiate a sensing behavior on behalf of the sensing by proxy initiator. The sensing by proxy responder is a device (for example, the AP 1) that acts as a proxy for the sensing by proxy initiator to initiate a sensing behavior, and the sensing by proxy responder is also a sensing initiator. FIG. 4 shows an example of an SBP measurement procedure according to an embodiment of this application. A number of affiliated stations in an MLD is not limited. In an example, as shown in FIG. 4, affiliated stations of an SBP initiator include a STA 1, a STA 2, and a STA 3, affiliated stations of an SBP responder include an AP 3, an AP 2, and an AP 1, and affiliated stations of a sensing responder include the STA 3, the STA 2, and the STA 1, where different affiliated stations correspond to different frequencies. As shown in FIG. 4, the SBP measurement procedure may include the following five steps: SBP setup exchange (SBP setup exchange), sensing measurement session, sensing measurement exchange (interaction), SBP reporting (SBP reporting), and SBP termination (SBP termination). SBP termination may be replaced with SBP closing. In this application, the sensing measurement session may be referred to as a measurement session or a session (session) for short. A sensing measurement session is a set of sensing measurement exchanges that use operational parameters agreed to between a sensing initiator and sensing responder. (A sensing measurement session is a set of sensing measurement exchanges that use operational parameters agreed to between a sensing initiator and sensing responder). The sensing measurement session and the sensing measurement exchange may be considered as one step. FIG. 4 shows an SBP measurement procedure in a multi-link scenario. A number of STAs included in an SBP initiator (non-AP MLD), a number of APs included in an SBP responder (AP MLD), and a number of STAs included in a sensing responder (non-AP MLD) are not limited. It should be noted that the sensing responder (non-AP MLD) in FIG. 4 may be replaced with multiple non-AP MLDs or multiple stations. The SBP responder may sense and measure one non-AP MLD by using multiple links, or may sense and measure multiple non-AP MLDs, or may sense and measure multiple stations. This is not limited in this application.

3. Procedure of SBP setup exchange: A possible implementation of SBP setup exchange is as follows: (1) The SBP initiator sends an SBP request frame (SBP request frame) to the SBP responder, where the SBP request frame includes an SBP parameters element (SBP Parameters element), and the SBP parameters element indicates the sensing responder and a number of sensing responders, where the SBP parameters element is optional. The SBP request frame may further include a sensing measurement parameters element (Sensing Measurement Parameters element) and an initiating station (Initiating Station, ISTA) availability window element (Availability Window element). (2) The SBP responder sends an SBP response frame (SBP response frame) to the SBP initiator. The SBP response frame indicates whether to accept a parameter requested by the SBP request frame, and carries a response station (response Station, RSTA) availability window element allocated to the SBP initiator for receiving a report and participating in sensing (if any).

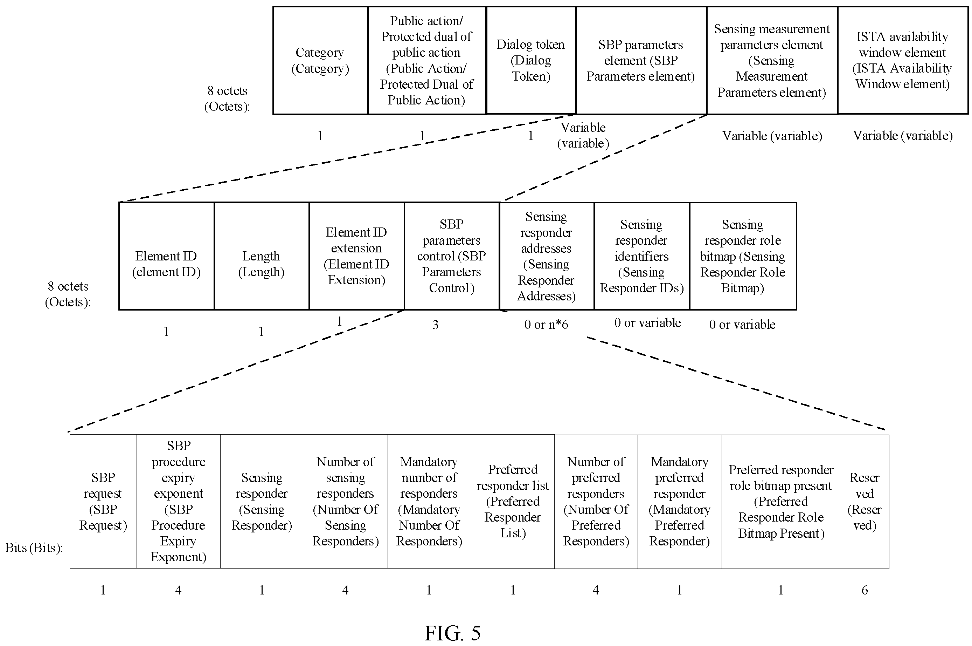

For ease of understanding, the SBP request frame is described in detail with reference to FIG. 5. FIG. 5 is a diagram of a frame structure of an SBP request frame. It can be learned from FIG. 5 that the SBP request frame includes the following fields: category (Category), public action/protected dual of public action (Public Action/Protected Dual of Public Action), dialog token (Dialog Token), SBP parameters element, sensing measurement parameters element, and ISTA availability window element. The SBP parameters element, the sensing measurement parameter, and the ISTA availability window element are optional. The category field in embodiments of this application may indicate a type of a message, that is, used to distinguish between different types of action frames (action frames). The public action field in embodiments of this application may indicate a function of the message. The dialog token in embodiments of this application may be used to identify a dialog. For example, a pair of request (request) and response (response) that correspond to each other may have a same dialog token. The ISTA availability window element indicates an occasion at which the SBP initiator may perform sensing measurement or receive a measurement report. In other words, the ISTA availability window element is used by the SBP initiator to declare an available sensing measurement window of the SBP initiator.

The SBP parameters element may include the following fields: element identifier (element ID), length (Length), element identifier extension (element ID Extension), SBP parameters control (SBP Parameters Control), sensing responder addresses (Sensing Responder Addresses), sensing responder identifiers (Sensing Responder IDs), or sensing responder role bitmap (Sensing Responder Role Bitmap). The SBP parameters control is used to provide control information for an SBP parameter. The sensing responder role bitmap indicates a function of the sensing responder. The element identifier extension is an extension of the element identifier and is used to provide an additional information element identifier. The bitmap (Bitmap) may also be referred to as a bit map. In this application, the bitmap may be understood as an identifier bitmap (ID Bitmap). In other words, an identifier is represented by using a bitmap. For example, the sensing responder role bitmap may be understood as an identifier of a sensing responder role. In addition, the identifier in this application may alternatively be represented in another manner, for example, information such as an identifier list (ID list) or address information (for example, a MAC address) that may identify a corresponding object. A specific form of the identifier is not limited in this application.

The SBP parameters control field includes the following fields:
SBP request (SBP Request), SBP procedure expiry exponent (SBP Procedure Expiry Exponent), sensing responder (Sensing Responder), number of sensing responders (Number of Sensing Responders), mandatory number of responders (Mandatory Number of Responders), preferred responder list (Preferred Responder list), number of preferred responders (Number of Preferred Responders), mandatory preferred responder (Mandatory Preferred Responder), preferred responder role bitmap present (Preferred Responder Role Bitmap Present), and reserved (Reserved). The mandatory number of responders field may be named as a number of mandatory responders field.

A value carried in the sensing responder in the SBP parameters field may indicate whether a device requesting sensing by proxy this time serves as the sensing responder to participate in a subsequent sensing process to perform sensing receiving/sending. A value carried in the number of sensing responders may indicate a number of sensing responders requesting sensing by proxy this time. The number of mandatory responders indicates whether a number of sensing responders requested is mandatory. A value carried in the preferred responder list may indicate whether an identifier of the sensing responder is present in the message. A value carried in a mandatory responder list may indicate that an address of a sensing responder that is present in the message needs to be met (that is, it is necessary to use a sensing responder indicated by the preferred responder list) or indicate that an address of a sensing responder that is present in the message does not necessarily need to be met (that is, the address of the sensing responder that is present in the message is a recommended value, or may not be met (or understood as that the address does not need to be met)). A value carried in the sensing responder address may indicate an identifier of the sensing responder requesting sensing by proxy this time. The value carried in the sensing responder address may alternatively be a MAC address of the sensing responder and/or a link MAC address with which the SBP initiator wants to set up sensing. Address information that is of at least one target apparatus and that is further included in a message used to request sensing by proxy may be considered as a sensing responder address, the target apparatus may be considered as the sensing responder, the target apparatus may be considered as the sensing responder, and the target apparatus in the at least one target apparatus is an apparatus performing sensing measurement.

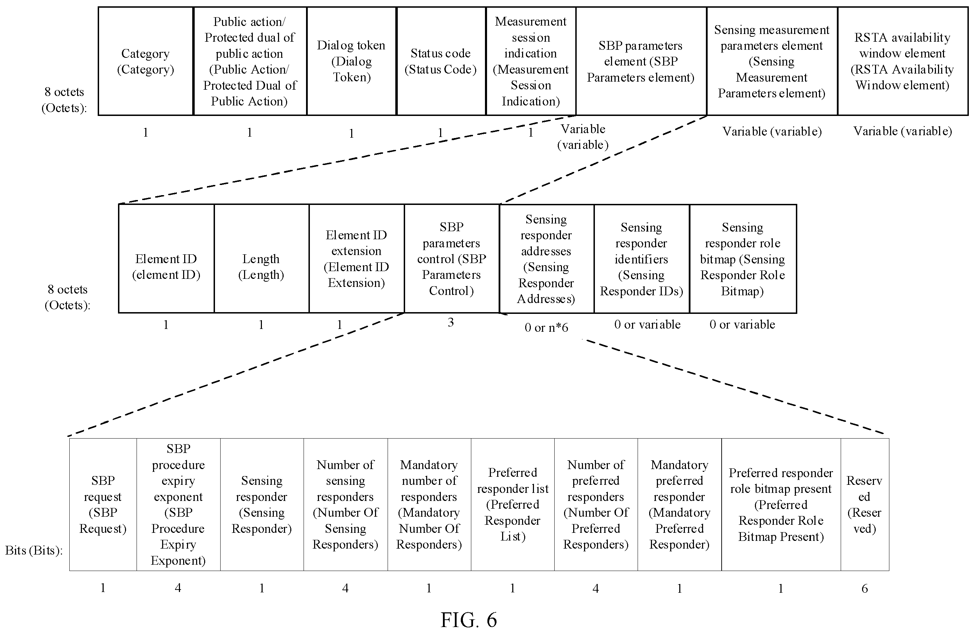

For ease of understanding, the SBP response frame is described in detail with reference to FIG. 6. FIG. 6 is a diagram of a frame structure of an SBP response frame. It can be learned from FIG. 6 that the SBP response frame includes the following fields: category (Category), public action/protected dual of public action (Public Action/Protected Dual of Public Action), dialog token (Dialog Token), status code (Status Code), measurement session indication (Measurement Session Indication), SBP parameters element, sensing measurement parameters element, and an RSTA availability window element. The SBP parameters element, the sensing measurement parameter, and the response station (response Station, RSTA) availability window element in the response frame are optional. For example, if the status code in the SBP response frame is set to success (SUCCESS) or rejected with suggested changes (REJECTED_WITH_SUGGESTED_CHANGES), the SBP parameters element exists; or if the status code in the SBP response frame is not set to success or rejected with suggested changes, the SBP parameters element does not exist. For another example, if the status code in the SBP response frame is set to REJECTED_WITH_SUGGESTED_CHANGES, the sensing measurement parameter exists; or if the status code in the SBP response frame is not set to REJECTED_WITH_SUGGESTED_CHANGES, the sensing measurement parameter does not exist. For still another example, if the status code in the SBP response frame is set to SUCCESS, RSTA availability window (RSTA Availability Window element) exists. If the status code in the SBP response frame is set to REJECTED_WITH_SUGGESTED_CHANGES, an RSTA availability window may exist; or if the status code in the SBP response frame is not set to REJECTED_WITH_SUGGESTED_CHANGES, the RSTA availability window does not exist.

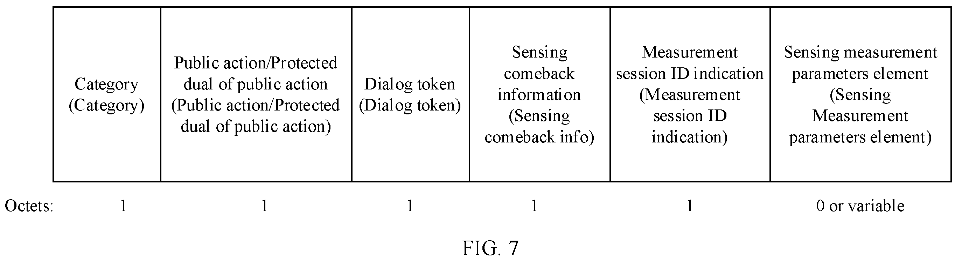

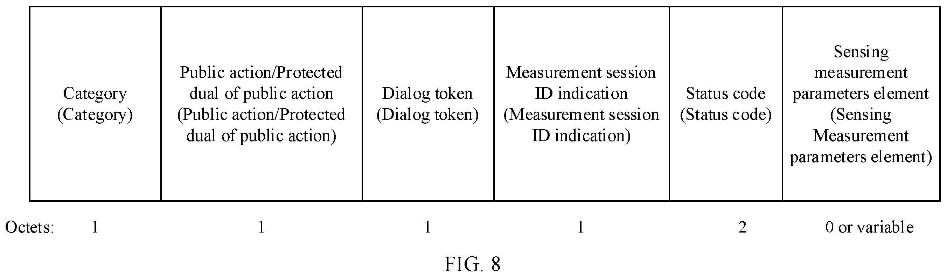

4. A procedure of the sensing measurement session may include:
(1) A possible implementation of the procedure of the sensing measurement session is as follows: The sensing initiator (that is, the SBP responder) sends a sensing measurement request frame (Sensing Measurement Request Frame) to the sensing responder to initiate sensing measurement setup and set sensing measurement parameters (Sensing Measurement Parameters), a sensing type (TB/non-TB/SBP), and corresponding sensing measurement parameters. FIG. 7 shows an example of a sensing measurement request frame action field format (Sensing Measurement Request Frame Action field format). Refer to FIG. 7. The sensing measurement request frame action field includes: category (Category), public action/protected dual of public action (Public Action/Protected Dual of Public Action), dialog token (Dialog Token), sensing comeback information (Sensing Comeback Info), measurement session ID indication (Measurement Session ID Indication), and sensing measurement parameters element (Sensing Measurement Parameters Element). The measurement session ID indication indicates an ID of a sensing measurement session. The sensing comeback information indicates an unassociated device to send a sensing measurement inquiry frame to an AP within a given time to participate in sensing measurement. The sensing measurement parameters element indicates a parameter used for sensing measurement interaction, and includes a sensing measurement parameters field and a sensing subelement. The sensing measurement parameters element may carry different sensing subelements, and the sensing subelements may be a TB sensing specific subelement (TB sensing specific subelement), a non-TB sensing specific subelement (Non-TB sensing specific subelement), and an SBP specific subelement (SBP specific subelement).
(2) After receiving a sensing measurement setup request frame, the sensing responder sends a sensing measurement response frame (Sensing Measurement Response frame) to set up sensing. FIG. 8 shows an example of a sensing measurement response frame action field format. Refer to FIG. 8. The sensing measurement response frame action field includes: category (Category), public action/protected dual of public action (Public Action/Protected Dual of Public Action), dialog token (Dialog Token), measurement session ID indication (Measurement Session ID Indication), status code (Status Code), and sensing measurement parameters element (Sensing Measurement Parameters Element). The sensing measurement response frame may comply with the following rule:

If the sensing responder accepts the sensing measurement parameters element requested in the sensing measurement setup request frame, the status code in the sensing measurement setup response frame is set to success; or if the sensing responder rejects the sensing measurement parameters element requested in the sensing measurement setup request frame, but provides a recommended sensing measurement setup parameter in the sensing measurement setup response frame, the status code is set to REJECTED_WITH_SUGGESTED_CHANGES; or if the sensing responder declines the sensing measurement parameters element requested in the sensing measurement setup request frame and does not provide a recommended sensing measurement setup parameter, the status code is set to REQUEST_DECLINED.

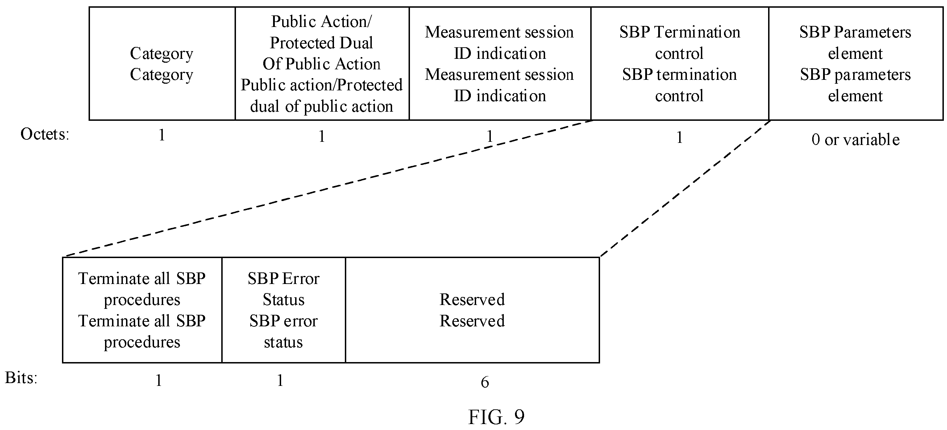

After sensing measurement is set up, the sensing initiator initiates one or more sensing measurement instances (Sensing Measurement Instance) based on requirements of the sensing initiator and sensing measurement parameters negotiated in the sensing measurement setup process. A sensing measurement instance may be divided into two forms: trigger-based sensing measurement instance (Trigger-Based (TB) Sensing Measurement Instance) and non-trigger-based sensing measurement instance (Non-Trigger-Based (Non-TB) Sensing Measurement Instance). A trigger-based (TB) sensing measurement instance is initiated by an AP as a sensing initiator, and a non-trigger-based (Non-TB) sensing measurement instance is initiated by a non-AP STA as a sensing initiator. If the AP accepts the SBP setup request, only the trigger-based (TB) sensing measurement instance exists in sensing measurement.
5. A procedure of sensing measurement interaction may include: An SBP responder (AP) performs sensing measurement interaction with one or more sensing responders based on parameter settings in an SBP request frame. A procedure of SBP reporting may include: An SBP responder (AP) sends a report including a sensing measurement result to an SBP initiator based on results fed back by one or more sensing responders.
6. SBP closing includes explicit closing and implicit closing. Explicit closing may be as follows: An SBP initiator or an SBP responder sends an SBP termination frame (termination frame) to close an SBP procedure (procedure). FIG. 9 shows an example of a structure of an SBP termination frame. As shown in FIG. 9, the SBP termination frame includes the following fields: category (Category), public action/protected dual of public action (Public Action/Protected Dual of Public Action), measurement session ID indication (Measurement Session ID Indication), SBP termination control (SBP Termination Control), and SBP parameters element (SBP Parameters Element). The SBP termination control is used to provide control information for SBP termination. The SBP parameters element is optional. As shown in FIG. 9, the SBP termination control includes the following fields: terminate all SBP procedures (Terminate all SBP Procedures), SBP error status (SBP Error Status), and reserved (Reserved). "Terminate all SBP procedures" indicates that all SBP procedures set up between an SBP initiator and an SBP responder are requested to be closed. The SBP error status indicates that SBP closing may be because a session (session) cannot be set up or a session is closed. For example, if the SBP responder fails to successfully set up a session with the sensing responder, or closes the session, and the number of mandatory responders or the mandatory preferred responder in the SBP request frame is set to 1, the SBP responder may set the SBP error status field to 1 when sending the SBP termination frame, and include the SBP parameters element in the SBP termination frame. The implicit closing may be as follows: The SBP initiator and the SBP responder implicitly close the SBP process when there is no frame interaction when the SBP procedure expiry exponent (SBP Procedure Expiry Exponent) expires.

With reference to FIG. 1, the foregoing briefly describes a scenario to which the multi-link sensing measurement method provided in embodiments of this application can be applied, describes basic concepts that may be used in embodiments of this application, and describes the SBP procedure and the multi-link device in the basic concepts. The application scenario shown in FIG. 1 is a multi-link scenario. In the application scenario shown in FIG. 1, one or more APs are AP MLDs, and one or more STAs are non-AP MLDs. The method for multi-link sensing measurement provided in embodiments of this application may be applied to the SBP measurement procedure in the multi-link scenario shown in FIG. 4.

In the multi-link scenario, when the AP-MLD and the non-AP-MLD perform multi-link sensing by proxy (SBP), the following two scenarios occur:
Scenario 1: After an SBP initiator (for example, a non-AP MLD or a single-link STA) and an SBP responder (AP MLD) perform SBP setup exchange, an AP MLD and the non-AP MLD (or multiple single-link APs) cannot set up a session due to a link-related reason. In scenario 1, because the SBP initiator cannot learn of a specific reason why the AP MLD and the non-AP MLD cannot set up a session, which is not conducive to improving efficiency of setting up an SBP procedure subsequently by the SBP initiator.
Scenario 2: To meet a sensing measurement requirement of an SBP initiator, an AP MLD (that is, an SBP responder) and a sensing responder (including at least one non-AP MLD or multiple single-link STAs) perform sensing measurement interaction based on a parameter negotiated during SBP setup interaction. When the AP MLD removes or temporarily closes one or more links (link), or the non-AP MLD deletes or disables one or more links, or one or more links of a non-AP MLD enter a power saving mode, or one or more STAs delete a link, a sensing measurement parameter changes. In scenario 2, after the sensing measurement parameter of the AP MLD (that is, the SBP responder) and the sensing responder is changed due to a link-related reason, it is likely that a requirement of the SBP initiator for the sensing measurement parameter is no longer met, and a sensing measurement result may be meaningless to the SBP initiator.

In the multi-link scenario, when the AP-MLD and the non-AP-MLD perform multi-link sensing by proxy (SBP), scenario 1 and scenario 2 that occur may adversely affect the SBP procedure, for example, including SBP reporting and a subsequent behavior of the SBP initiator. To avoid adverse impact on the SBP procedure caused by scenario 1 or scenario 2 when the AP MLD and the non-AP MLD perform multi-link sensing by proxy (SBP), this application provides a method for multi-link sensing measurement, aiming to enable the SBP initiator to learn of a specific reason why a session is unable to be set up/closed during the SBP procedure in the multi-link scenario, thereby providing a reference for a subsequent behavior of the SBP initiator and helping to improve efficiency of subsequently setting up the SBP procedure.

The following describes the technical solutions provided in this application in detail with reference to the accompanying drawings. Embodiments of this application may be applied to multiple different scenarios, including but not limited to the scenarios shown in FIG. 1 and FIG. 4.

It should be understood that a specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a receiver device or a transmitter device, or a functional module that is in a receiver device or a transmitter device and that can invoke the program and execute the program.

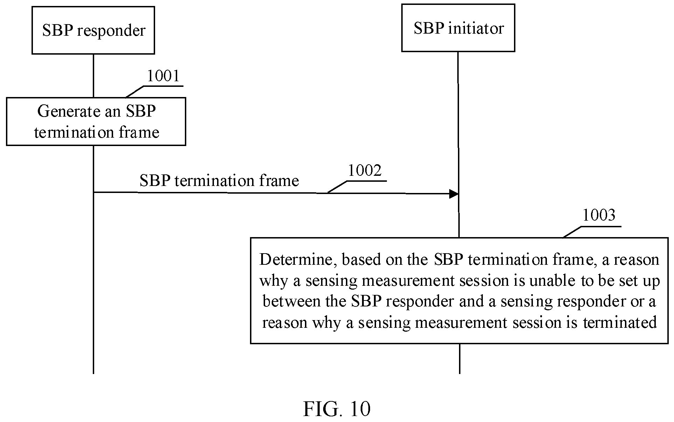

FIG. 10 is a schematic flowchart of a communication method according to an embodiment of this application. As shown in FIG. 10, the method includes the following steps.

1001: An SBP responder generates an SBP termination frame.

The SBP termination frame includes first indication information or second indication information. The first indication information indicates a reason why a sensing measurement session is unable to be set up between the SBP responder and a sensing responder. The second indication information indicates a reason why a sensing measurement session set up between the SBP responder and the sensing responder is terminated. The SBP responder may be an AP MLD. The sensing responder includes one or more non-AP MLDs. Alternatively, the sensing responder includes multiple STAs. For ease of understanding of the technical solutions of this application, this embodiment of this application is described by using an example in which the SBP responder (that is, a sensing initiator) sets up a sensing measurement session with one non-AP MLD (sensing responder) to perform sensing measurement interaction.

In a possible implementation, the reason, indicated by the first indication information, why a sensing measurement session is unable to be set up between the SBP responder and the sensing responder includes that a requirement of setting up a sensing measurement session for a mandatory link or a number of mandatory links is not met.

In a possible implementation, an original SBP error status field is redefined in this application. Usage of the original SBP error status field is as follows: In an SBP request frame, when a mandatory responder or a number of mandatory responders is set to 1, or when SBP closing is caused because the session is unable to be set up or is closed, this field may be set to 1. This application redefines the meaning of this field as follows: When the mandatory responder or the number of mandatory responders is set to 1, or a mandatory link ID/a number of mandatory links on the mandatory responder cannot be met, or responders are insufficient to meet the requirement of the mandatory link ID/the number of mandatory links, or a responder that meets the mandatory link ID/the number of mandatory links cannot be found, or the SBP procedure is closed because the session is unable to be set up or is closed, this field may be set to 1.

In a possible implementation, the first indication information may include an SBP error status extension (SBP error status extension) field, and a value of the SBP error status extension field indicates a reason why a sensing measurement session is unable to be set up between the SBP responder and the sensing responder. In the following, SBP error status extension may be used to represent the first indication information. In a possible implementation, a length of the SBP error status extension field may be 1 bit. When the SBP error status extension field is set to 0, the reason why a sensing measurement session is unable to be set up between the SBP responder and the sensing responder is a reason indicated by the SBP error status. When the SBP error status extension field is set to 1, the reason why a sensing measurement session is unable to be set up between the SBP responder and the sensing responder is that the mandatory link ID/the number of mandatory links on the mandatory responder cannot be met, or that responders are insufficient to meet the requirement of the mandatory link ID/the number of mandatory links, or that a responder that can meet the requirement of the mandatory link ID/the number of mandatory links cannot be found. In a possible implementation, a length of the SBP error status extension field may be 2 bits. Table 1 shows an example of the first indication information indicating the reason why a sensing measurement session is unable to be set up between the SBP responder and the sensing responder, and a prerequisite for SBP setup associated with each reason. The prerequisite for SBP setup associated with each reason may be parameters negotiated by the SBP responder and an SBP initiator for setting up a sensing measurement session.

**Table 1**

| SBP error status extension | Closing reason | Prerequisite for SBP setup |
|---|---|---|
| 0 | Reason indicated by SBP error status | The mandatory responder and/or the number of mandatory responders are/is set |
| 1 | The mandatory link ID or the number of mandatory links on the mandatory responder cannot be met | The mandatory responder is set, and the mandatory link and/or the number of mandatory links are/is set on the mandatory responder |
| 2 | The number of mandatory responders cannot be met (responders are insufficient to meet the requirement of the mandatory link ID/the number of mandatory links) | The number of mandatory responders, and the mandatory link and/or the number of mandatory links on the mandatory responder are set |
| 3 | A responder meeting the mandatory link ID/the number of mandatory links cannot be found | The mandatory link and/or the number of mandatory links are/is set |

Refer to the second column of Table 1. Parameters negotiated by the SBP responder and the SBP initiator for setting up a sensing measurement session include the mandatory responder and/or the number of mandatory responders. When the value of the SBP error status extension field (that is, the first indication information) is 0, the reason, indicated by the first indication information, why a sensing measurement session is unable to be set up between the SBP responder and the sensing responder includes the reason indicated by the SBP error status field. For example, usage of the SBP error status field is as follows: When the mandatory responder or the number of mandatory responders is set to 1 (that is, the parameters negotiated by the SBP responder and the SBP initiator for setting up a sensing measurement session include the mandatory responder or the number of mandatory responders), and SBP closing is caused because a session is unable to be set up or is closed, the field may be set to 1. The reason indicated by the SBP error status field may be as follows: When the mandatory responder or the number of mandatory responders is set to 1, the sensing measurement session is unable to be set up or is closed. In a possible implementation, the parameters negotiated by the SBP responder and the SBP initiator for setting up a sensing measurement session include the mandatory responder or the number of mandatory responders. When a sensing measurement session is unable to be set up between the SBP responder and the sensing responder, the SBP responder sends an SBP termination frame to the SBP initiator, where a value of an SBP error status extension field in the SBP termination frame is 0.

Refer to the third column of Table 1. The parameters negotiated by the SBP responder and the SBP initiator for setting up a sensing measurement session include the mandatory responder, and the mandatory link or the number of mandatory links on the mandatory responder. When the value of the SBP error status extension field is 1, the reason, indicated by the first indication information, why a sensing measurement session is unable to be set up between the SBP responder and the sensing responder includes that the mandatory link or the number of mandatory links on the mandatory responder is not met (or cannot be met). In a possible implementation, the parameters negotiated by the SBP responder and the SBP initiator for setting up a sensing measurement session include the mandatory responder, and the mandatory link or the number of mandatory links on the mandatory responder. When the mandatory link or the number of mandatory links on the mandatory responder cannot be met, the SBP responder sends an SBP termination frame to the SBP initiator, where a value of an SBP error status extension field in the SBP termination frame is 1.

Refer to the fourth column of Table 1. The parameters negotiated by the SBP responder and the SBP initiator for setting up a sensing measurement session include the number of mandatory responders, and the mandatory link or the number of mandatory links on the mandatory responder. When the value of the SBP error status extension field is 2, the reason, indicated by the first indication information, why a sensing measurement session is unable to be set up between the SBP responder and the sensing responder includes that a number of sensing responders meeting the mandatory link or the number of mandatory links is less than the number of mandatory responders. In other words, responders are insufficient to meet the requirement of the mandatory link ID/the number of mandatory links. In a possible implementation, parameters negotiated by the SBP responder and the SBP initiator for setting up a sensing measurement session include the number of mandatory responders, and the mandatory link or the number of mandatory links on the mandatory responder. When the number of sensing responders meeting the mandatory link or the number of mandatory links is less than the number of mandatory responders, the SBP responder sends an SBP termination frame to the SBP initiator, where a value of an SBP error status extension field in the SBP termination frame is 2.

Refer to the fifth column of Table 1. The parameters negotiated by the SBP responder and the SBP initiator for setting up a sensing measurement session include the mandatory link or the number of mandatory links. When the value of the SBP error status extension field is 3, the reason, indicated by the first indication information, why a sensing measurement session is unable to be set up between the SBP responder and the sensing responder includes that the SBP responder fails to find a sensing responder meeting the mandatory link or the number of mandatory links. In other words, a responder that meets the mandatory link ID or the number of mandatory links cannot be found. In a possible implementation, parameters negotiated by the SBP responder and the SBP initiator for setting up a sensing measurement session include the mandatory link or the number of mandatory links. When the SBP responder fails to find a sensing responder meeting the mandatory link or the number of mandatory links, the SBP responder sends an SBP termination frame to the SBP initiator, where a value of an SBP error status extension field in the SBP termination frame is 3.

Table 1 is merely an example, and a correspondence between the value of the SBP error status extension field and each reason is not limited. A length of the SBP error status extension field is 2 bits (bits), or may be more bits. This is not limited in this application.

In a possible implementation, the second indication information includes identification information of a first link, and the reason why the sensing measurement session is terminated includes that the first link is deleted by the SBP responder. In this application, identification information of a link may be an ID of the link. In this implementation, the SBP initiator can be enabled to obtain the reason for termination of the sensing measurement session, thereby improving efficiency of subsequently setting up the SBP procedure.

In a possible implementation, the second indication information includes identification information of a first link and identification information of a first responder, and the reason why the sensing measurement session is terminated includes that the first link is deleted by the first responder. In this implementation, the SBP initiator can be enabled to obtain the reason for termination of the sensing measurement session, thereby improving efficiency of subsequently setting up the SBP procedure.

In a possible implementation, the second indication information includes identification information of a first responder, and the reason why the sensing measurement session is terminated includes that the first responder deletes a link used in the sensing measurement session. That the first responder deletes the link used in the sensing measurement session may be that the first responder deletes all links between the first responder and the SBP responder that are used in the sensing measurement session. In this implementation, the SBP initiator can be enabled to obtain the reason for termination of the sensing measurement session, thereby improving efficiency of subsequently setting up the SBP procedure.

In a possible implementation, the SBP termination frame further includes third indication information, and the third indication information indicates parameter information recommended by the SBP responder for setting up a sensing measurement session, where the parameter information includes at least one of the following: a sensing measurement parameter, a responder list, a number of responders, a link list, or a number of links. In this implementation, the third indication information indicates parameter information recommended by the SBP responder for setting up a sensing measurement session, so as to improve efficiency of subsequently setting up the SBP procedure.

1002: The SBP responder sends an SBP termination frame to the SBP initiator.

Correspondingly, the SBP initiator receives the SBP termination frame from the SBP responder. The SBP initiator is a non-AP MLD or a single-link STA. A trigger condition for the SBP responder to send an SBP termination frame to the SBP initiator may be that a sensing measurement session is unable to be set up between the SBP responder and the sensing responder, or may be that the sensing measurement session set up between the SBP responder and the sensing responder is terminated. In other words, the trigger condition for the SBP responder to generate and send the SBP termination frame may be that a sensing measurement session is unable to be set up between the SBP responder and the sensing responder, or may be that the sensing measurement session set up between the SBP responder and the sensing responder is terminated. A reason why the sensing measurement session set up between the SBP responder and the sensing responder is terminated may be that one or more links used in the sensing measurement session are deleted.

1003: The SBP initiator determines, based on the SBP termination frame, a reason why a sensing measurement session is unable to be set up between the SBP responder and the sensing responder or the reason why the sensing measurement session is terminated.

In a possible implementation, the SBP initiator determines, based on the first indication information, that the reason why a sensing measurement session is unable to be set up between the SBP responder and the sensing responder includes that a requirement of setting up a sensing measurement session for a mandatory link or a number of mandatory links is not met.

In a possible implementation, the parameters negotiated by the SBP responder and the SBP initiator for setting up a sensing measurement session include the mandatory responder and the mandatory link or the number of mandatory links on the mandatory responder. The SBP initiator determines, based on the first indication information, that the reason why a sensing measurement session is unable to be set up between the SBP responder and the sensing responder includes that the mandatory link or the number of mandatory links on the mandatory responder is not met. For example, when the value of the SBP error status extension field (included in the first indication information) in the SBP termination frame is 1, the SBP initiator determines that the reason why a sensing measurement session is unable to be set up between the SBP responder and the sensing responder includes that the mandatory link or the number of mandatory links on the mandatory responder is not met.

In a possible implementation, parameters negotiated by the SBP responder and an SBP initiator for setting up a sensing measurement session include a number of mandatory responders, and a mandatory link or a number of mandatory links on the mandatory responder. The SBP initiator determines, based on the first indication information, that the reason why a sensing measurement session is unable to be set up between the SBP responder and the sensing responder includes that the number of sensing responders meeting the mandatory link or the number of mandatory links is less than the number of mandatory responders. For example, when the value of the SBP error status extension field (included in the first indication information) in the SBP termination frame is 2, the SBP initiator determines that the reason why a sensing measurement session is unable to be set up between the SBP responder and the sensing responder includes that the number of sensing responders meeting the mandatory link or the number of mandatory links is less than the number of mandatory responders.

In a possible implementation, the parameters negotiated by the SBP responder and the SBP initiator for setting up a sensing measurement session include the mandatory link or the number of mandatory links. The SBP initiator determines, based on the first indication information, that the reason why a sensing measurement session is unable to be set up between the SBP responder and the sensing responder includes that the SBP responder does not find a sensing responder meeting the mandatory link or the number of mandatory links. For example, when the value of the SBP error status extension field (included in the first indication information) in the SBP termination frame is 3, the SBP initiator determines that the reason why a sensing measurement session is unable to be set up between the SBP responder and the sensing responder includes that the SBP responder does not find a sensing responder meeting the mandatory link or the number of the mandatory links.

In a possible implementation, when the second indication information includes identification information of a first link, the SBP initiator determines that the reason why the sensing measurement session is terminated includes that the first link is deleted by the SBP responder.

In a possible implementation, when the second indication information includes identification information of a first link and identification information of a first responder, the SBP initiator determines that the reason why the sensing measurement session is terminated includes that the first link is deleted by the first responder.

In a possible implementation, when the second indication information includes identification information of a first responder, the SBP initiator determines that the reason why the sensing measurement session is terminated includes that the first responder deletes a link used in the sensing measurement session.

In a possible implementation, the SBP initiator may further obtain, based on third indication information in the SBP termination frame, parameter information recommended by the SBP responder for setting up a sensing measurement session, where the parameter information includes at least one of the following: a sensing measurement parameter, a responder list, a number of responders, a link list, or a number of links. After the SBP initiator obtains the parameter information recommended by the SBP responder for setting up a sensing measurement session, efficiency of subsequently setting up the SBP procedure based on the parameters can be improved.

In this embodiment of this application, the SBP initiator determines, based on the SBP termination frame, the reason why a sensing measurement session is unable to be set up between the SBP responder and the sensing responder or the reason why the sensing measurement session is terminated, thereby providing a reference for a subsequent behavior of the SBP initiator, and helping improve efficiency of subsequently setting up the SBP procedure.

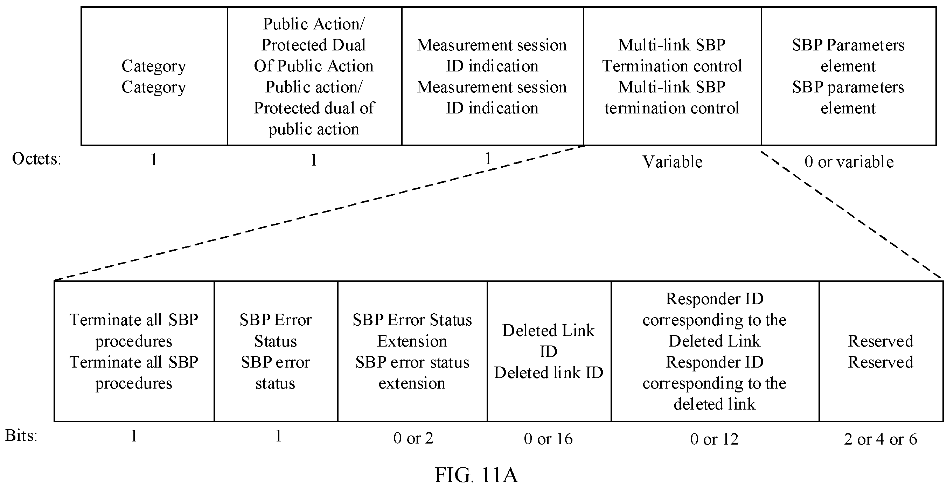

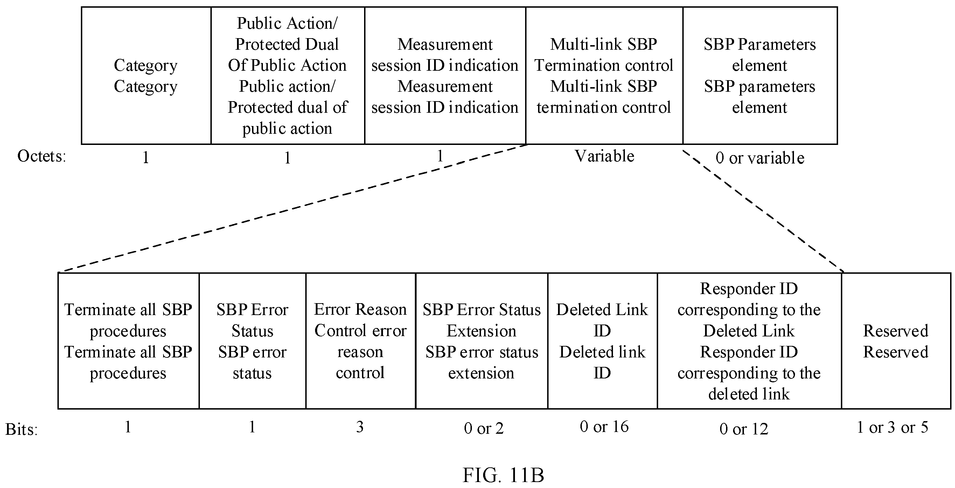

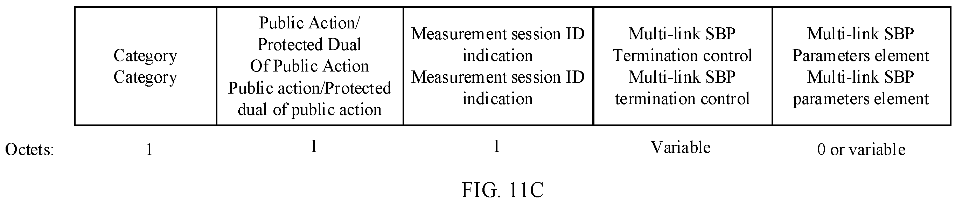

With reference to FIG. 11A, FIG. 11B, and FIG. 11C, the following describes an example of a structure of an SBP termination frame provided in this application.

FIG. 11A shows an example of a structure of an SBP termination frame according to an embodiment of this application. As shown in FIG. 11A, the SBP termination frame includes: category (Category), public action/protected dual of public action (Public Action/Protected Dual of Public Action), measurement session ID indication (Measurement Session ID Indication), multi-link SBP termination control (Multi-link SBP Terminal Control), and SBP parameters element (SBP Parameters Element). For the meanings of the fields in the SBP termination frame shown in FIG. 11A, refer to the meanings of the fields in FIG. 9. Details are not described herein again. The multi-link SBP termination control includes first indication information or second indication information. In a possible implementation, the multi-link SBP termination control includes one of first indication information and second indication information. Alternatively, the first indication information or the second indication information may not be included in the multi-link SBP termination control, but may be included in another field in the SBP termination frame. This is not limited in this application. In this application, an example in which the multi-link SBP termination control includes the first indication information or the second indication information is used for description. In a possible implementation, the multi-link SBP termination control includes a first field and a second field. When the first field takes effect, the first field is the first indication information. When the second field takes effect, the second field is the second indication information. One of the first field and the second field takes effect. For example, when the first field (SBP error status extension field) indicates the reason why a sensing measurement session is unable to be set up between the SBP responder and the sensing responder, the second field does not take effect. For example, values of bits in the second field are all 0 or 1. When the second field indicates the reason why the sensing measurement session set up between the SBP responder and the sensing responder is terminated, the first field does not take effect. For example, values of bits in the first field are all 0 or 1. In this application, that a field takes effect may mean that the field is a valid field, that is, an effective field, and the SBP initiator can obtain useful information by parsing the field. That a field does not take effect may mean that the field is an invalid field, that is, an ineffective field, and the SBP initiator may not parse the field, or the SBP initiator cannot obtain useful information by parsing the field.

FIG. 11A further shows an example of a multi-link SBP termination control field. Refer to FIG. 11A. The multi-link SBP termination control includes: fields such as terminate all SBP procedures (Terminate all SBP Procedures), SBP error status (SBP Error Status), SBP error status extension (SBP Error Status Extension), deleted link ID (Deleted Link ID), responder ID corresponding to the deleted link (Responder ID corresponding to the Deleted Link), and reserved (Reserved). "Terminate all SBP procedures" indicates that all SBP procedures set up between an SBP initiator and an SBP responder are requested to be closed. The SBP error status indicates that the SBP procedure is closed due to an SBP error condition. The first indication information may include the SBP error status extension field, and the second indication information includes at least one of the deleted link ID field and the responder ID corresponding to the deleted link field. The multi-link SBP termination control may include one of the SBP error status extension field, the deleted link ID field, or the responder ID corresponding to the deleted link field, or may include the deleted link ID field and the responder ID corresponding to the deleted link field, or may include the SBP error status extension field, the deleted link ID field, or the responder ID corresponding to the deleted link field. The value of the SBP error status extension field may be a cause value indicating that a sensing measurement session is unable to be set up between the SBP responder and the sensing responder. For example, the SBP error status extension field includes 2 bits. For the reason why a sensing measurement session is unable to be set up between the SBP responder and the sensing responder, which is indicated by each value of the SBP error status extension field, refer to Table 1. The deleted link ID field includes IDs of one or more links. The responder ID corresponding to the deleted link field may include an ID of a sensing responder. For example, the ID of the sensing responder is a 12-bit association identifier (Association identifier, AID)/unassociated identifier (unassociated STA identifier, USID), or a 48-bit MAC address. In this embodiment of this application, an example in which the multi-link SBP termination control includes the SBP error status extension field, the deleted link ID field, or the responder ID corresponding to the deleted link field is used for description.

In a possible implementation, the multi-link SBP termination control includes the SBP error status extension field, the deleted link ID field, or the responder ID corresponding to the deleted link field. The SBP error status extension field (that is, the first indication information) indicates the reason why a sensing measurement session is unable to be set up between the SBP responder and the sensing responder. The deleted link ID field does not take effect. For example, a value of each bit in the deleted link ID field is 0 or 1. The responder ID corresponding to the deleted link field also does not take effect. For example, a value of each bit in the responder ID corresponding to the deleted link field is 0 or 1. In a possible implementation, when the SBP initiator learns through parsing that a value of the deleted link ID field is a specific value (for example, the value of each bit in the deleted link ID field is 0 or 1), the SBP initiator determines that the deleted link ID field does not take effect. In a possible implementation, when the SBP initiator learns through parsing that a value of the responder ID corresponding to the deleted link field is a specific value (for example, the value of each bit in the responder ID corresponding to the deleted link field is 0 or 1), the SBP initiator determines that the responder ID corresponding to the deleted link field does not take effect. In a possible implementation, when the SBP initiator learns through parsing that the value of the SBP error status extension field is any one of 0 to 3, the SBP initiator determines, based on the SBP error status extension field, the reason why a sensing measurement session is unable to be set up between the SBP responder and the sensing responder. For details, refer to Table 1. In this implementation, the first indication information (including the SBP error status extension field) indicates the reason why a sensing measurement session is unable to be set up between the SBP responder and the sensing responder.

In a possible implementation, the multi-link SBP termination control includes the SBP error status extension field, the deleted link ID field, or the responder ID corresponding to the deleted link field. The SBP error status extension field (that is, the first indication information) does not take effect. For example, the value of each bit in the SBP error status extension field is 0 or 1. The deleted link ID field (that is, the second indication information) includes identification information of a first link. The responder ID corresponding to the deleted link field does not take effect. For example, the value of each bit in the responder ID corresponding to the deleted link field is 0 or 1. The reason why the sensing measurement session is terminated includes that the first link is deleted by the SBP responder. In a possible implementation, when the SBP initiator learns through parsing that the SBP error status extension field and the responder ID corresponding to the deleted link field do not take effect, and the deleted link ID field includes identification information of a first link, the SBP initiator determines that the reason why the sensing measurement session is terminated includes that the first link is deleted by the SBP responder. In this implementation, the reason, indicated by the second indication information (including the identification information of the first link), why the sensing measurement session is terminated includes that the first link is deleted by the SBP responder.

In a possible implementation, the multi-link SBP termination control includes the SBP error status extension field, the deleted link ID field, or the responder ID corresponding to the deleted link field. The SBP error status extension field (that is, the first indication information) does not take effect. For example, the value of each bit in the SBP error status extension field is 0 or 1. The deleted link ID field does not take effect, for example, the value of each bit in the deleted link ID field is 0 or 1. The responder ID corresponding to the deleted link field includes identification information of a first responder. The reason why the sensing measurement session is terminated includes that the first responder deletes a link used in the sensing measurement session. In a possible implementation, when the SBP initiator learns through parsing that the SBP error status extension field and the deleted link ID field do not take effect, and the responder ID corresponding to the deleted link field includes identification information of a first responder, the SBP initiator determines that the reason why the sensing measurement session is terminated includes that the first responder deletes a link used in the sensing measurement session. That the first responder deletes the link used in the sensing measurement session may be that the first responder deletes the link used in the sensing measurement session between the first responder and the SBP responder. In this implementation, the reason, indicated by the second indication information (including the identification information of the first responder), why the sensing measurement session is terminated includes that the first responder deletes the link used in the sensing measurement session.

In a possible implementation, the multi-link SBP termination control includes the SBP error status extension field, the deleted link ID field, or the responder ID corresponding to the deleted link field. The SBP error status extension field (that is, the first indication information) does not take effect. For example, the value of each bit in the SBP error status extension field is 0 or 1. The deleted link ID field includes identification information of a first link. The responder ID corresponding to the deleted link field includes identification information of a first responder. The reason why the sensing measurement session is terminated includes that the first link is deleted by the first responder. In a possible implementation, when the SBP initiator learns through parsing that the SBP error status extension field does not take effect, the link ID field includes identification information of a first link, and the responder ID corresponding to the deleted link field includes identification information of a first responder, the SBP initiator determines that the reason why the sensing measurement session is terminated includes that the first link is deleted by the first responder. In this implementation, the second indication information (including the identification information of the first link and the identification information of the first responder) indicates that the reason why the sensing measurement session is terminated includes that the first link is deleted by the first responder.

In a possible implementation, the multi-link SBP termination control includes the SBP error status extension field, the deleted link ID field, or the responder ID corresponding to the deleted link field, and the SBP termination frame further includes an error reason control field. The error reason control field indicates a field that takes effect in the SBP error status extension field, the deleted link ID field, or the responder ID corresponding to the deleted link field, that is, a valid field. FIG. 11A further shows an example of a multi-link SBP termination control field. FIG. 11B shows an example of a structure of another SBP termination frame according to an embodiment of this application. A difference between the SBP termination frame shown in FIG. 11B and the SBP termination frame shown in FIG. 11A lies in that the multi-link SBP termination control further includes an error reason control field (Error Reason Control). For the meanings of the fields in the SBP termination frame shown in FIG. 11B, refer to the meanings of the fields in the SBP termination frame shown in FIG. 11A. A name of the error reason control field is not limited. The SBP initiator may determine, based on the error reason control field, a field that takes effect in the SBP error status extension field, the deleted link ID field, and the responder ID corresponding to the deleted link field that are included in the multi-link SBP termination control. The SBP initiator may parse only the field taking effect included in the multi-link SBP termination control, and does not need to parse a field that does not take effect, thereby reducing a processing amount. For example, the error reason control field includes 3 bits. According to an order from left to right (or from right to left) of the 3 bits, the first bit corresponds to the SBP error status extension field, the second bit corresponds to the deleted link ID field, and the third bit corresponds to the responder ID corresponding to the deleted link field. When a value of the first bit is 0, it indicates that the SBP error status extension field does not take effect, that is, the SBP error status extension field is an invalid field. When the value of the first bit is 1, it indicates that the SBP error status extension field takes effect, that is, the SBP error status extension field is a valid field. When a value of the second bit is 0, it indicates that the deleted link ID field does not take effect. When the value of the second bit is 1, it indicates that the deleted link ID field takes effect. When a value of the third bit is 0, it indicates that the responder ID corresponding to the deleted link field does not take effect. When the value of the third bit is 1, it indicates that the responder ID corresponding to the deleted link field takes effect. For example, when the 3 bits in the error reason control field are 100, the error reason control field indicates that the SBP error status extension field takes effect, and the deleted link ID field and the responder ID corresponding to the deleted link field do not take effect. For example, when the 3 bits in the error reason control field are 011, the error reason control field indicates that the SBP error status extension field does not take effect, and the deleted link ID field and the responder ID corresponding to the deleted link field take effect.

FIG. 11C shows an example of a structure of another SBP termination frame according to an embodiment of this application. As shown in FIG. 11C, the SBP termination frame includes: category (Category), public action/protected dual of public action (Public Action/Protected Dual of Public Action), measurement session ID indication (Measurement Session ID Indication), multi-link SBP termination control (Multi-link SBP Terminal Control), SBP parameters element (SBP Parameters Element), and multi-link SBP parameters element (Multi-link SBP parameters element). The multi-link SBP parameters element is included in the third indication information. For example, the third indication information is the multi-link SBP parameters element. The multi-link SBP parameters element field indicates one or more of a sensing measurement parameter, a responder list, a number of responders, a link list, and a number of links recommended by the SBP responder. Alternatively, the multi-link SBP parameters element indicates one or more of sensing measurement parameters, link lists, and numbers of links of different responders.

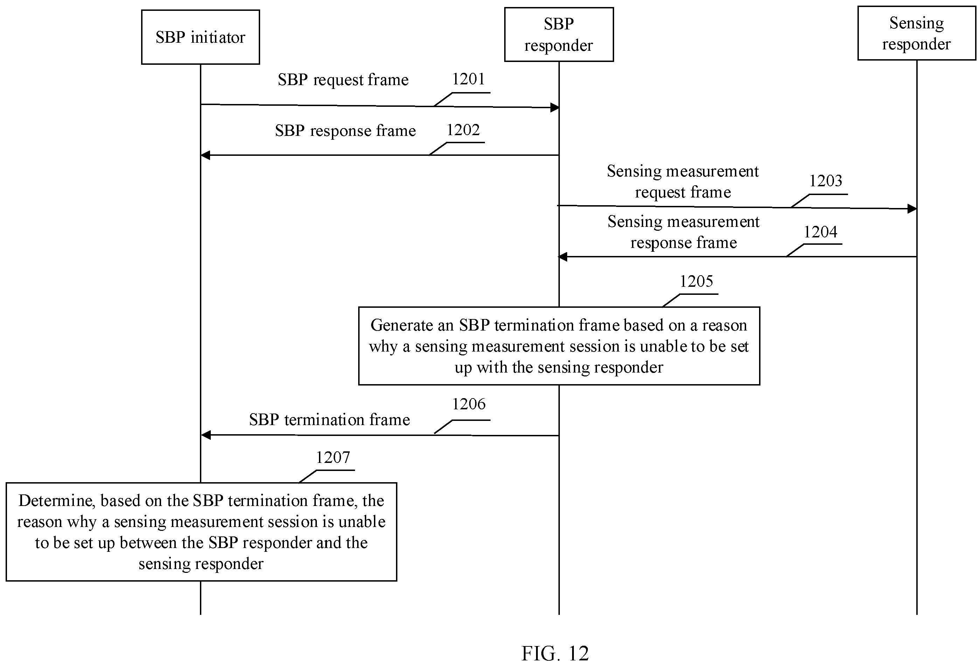

As described above, the trigger condition for the SBP responder to send an SBP termination frame to the SBP initiator may be that a sensing measurement session is unable to be set up between the SBP responder and the sensing responder. With reference to FIG. 12, the following describes an example of a method procedure for sending an SBP termination frame when a sensing measurement session is unable to be set up between an SBP responder and a sensing responder.

FIG. 12 is a schematic flowchart of another communication method according to an embodiment of this application. The method procedure in FIG. 12 is a possible implementation of the method described in FIG. 10. As shown in FIG. 12, the method includes the following steps.

1201: An SBP initiator sends an SBP request frame to an SBP responder.

Correspondingly, the SBP responder receives the SBP request frame (SBP request frame) from the SBP initiator. The SBP request frame in this embodiment of this application may be referred to as a multi-link SBP request frame (Multi-link SBP request frame). The SBP request frame includes an SBP parameters element. In a possible implementation, the SBP parameters element indicates each sensing responder ID and a link ID/a number of links corresponding to the sensing responder ID. In a possible implementation, the SBP parameters element indicates link IDs/numbers of links for all responders.

1202: The SBP responder sends an SBP response frame to the SBP initiator.

Correspondingly, the SBP initiator receives the SBP response frame (SBP response frame) from the SBP responder. The SBP response frame in this embodiment of this application may be referred to as a multi-link SBP response frame (Multi-link SBP response frame). The SBP response frame indicates whether to accept a parameter requested by the SBP initiator, and carries an availability window allocated to the SBP initiator for receiving a report and participating in sensing (if any). Step 1201 and step 1202 are included in the procedure of SBP setup exchange, as shown in FIG. 4. The SBP initiator and the SBP responder negotiate a parameter for setting up a sensing measurement session through the procedure of SBP setup exchange. In this application, the parameters negotiated by the SBP initiator and the SBP responder for setting up a sensing measurement session through the procedure of SBP setup exchange include one or more of: a number of mandatory links, a number of mandatory responders, a mandatory link, a mandatory responder, an optional responder, and an optional link. The SBP initiator and the SBP responder may negotiate the parameter for setting up a sensing measurement session through multiple times of interaction.

1203: The SBP responder sends a sensing measurement request frame to a sensing responder.

The SBP responder, as a sensing initiator, sends a sensing measurement request frame (sensing measurement request frame) to the sensing responder. The sensing measurement request frame may be named as a sensing measurement setup request frame. In this embodiment of this application, an example in which the SBP responder serves as a sensing initiator and sets up a sensing measurement session with a sensing responder (non-AP MLD) to perform sensing measurement interaction is used for description. It should be understood that the SBP responder may serve as a sensing initiator to set up sensing measurement sessions with multiple sensing responders, to perform sensing measurement interaction. The sensing measurement request frame is used to initiate sensing measurement setup and set sensing measurement parameters (sensing measurement parameters), a sensing type (TB/non-TB/SBP), and a corresponding parameter.

1204: The sensing responder sends a sensing measurement response frame to the SBP responder.

After receiving the sensing measurement request frame, the sensing responder sends a sensing measurement response frame (sensing measurement response frame) to the SBP responder. Correspondingly, the SBP responder receives the sensing measurement response frame from the sensing responder. Step 1202 and step 1203 are included in the procedure of the sensing measurement session. Refer to FIG. 4. In a possible implementation, the sensing responder rejects a sensing measurement parameters element requested in the sensing measurement request frame, and the sensing responder does not provide a preferred sensing measurement setup parameter. For example, when the sensing responder does not support setting up a sensing measurement session with the SBP responder based on the sensing measurement parameters element requested in the sensing measurement request frame, the sensing responder sends a sensing measurement response frame to the SBP responder, where the sensing measurement response frame indicates that the sensing responder rejects the sensing measurement parameters element requested in the sensing measurement request frame and the sensing responder does not provide a preferred sensing measurement setup parameter.

1205: The SBP responder generates an SBP termination frame based on a reason why a sensing measurement session is unable to be set up with the sensing responder.

In a possible implementation, a manner in which the SBP responder learns of the reason why a sensing measurement session is unable to be set up with the sensing responder includes: learning, by using a status code (Status Code) in the sensing measurement response frame sent by the sensing responder, that if the status code is set to REJECT_WITH_SUGGESTED_CHANGES or REQUEST_DECLINED, the session fails to be set up between the SBP responder and the sensing responder, and further determining, in a manner shown in the following example, a specific reason why a sensing measurement session is unable to be set up.

For example, the parameters negotiated by the SBP responder and the SBP initiator for setting up a sensing measurement session include the mandatory responder, and the mandatory link or the number of mandatory links on the mandatory responder. When the mandatory link or the number of mandatory links on the mandatory responder cannot be met, the SBP responder sends an SBP termination frame to the SBP initiator, where a value of an SBP error status extension field in the SBP termination frame is 1.

For example, parameters negotiated by the SBP responder and the SBP initiator for setting up a sensing measurement session include the number of mandatory responders, and the mandatory link or the number of mandatory links on the mandatory responder. When the number of sensing responders meeting the mandatory link or the number of mandatory links is less than the number of mandatory responders, the SBP responder sends an SBP termination frame to the SBP initiator, where a value of an SBP error status extension field in the SBP termination frame is 2.

For example, parameters negotiated by the SBP responder and the SBP initiator for setting up a sensing measurement session include the mandatory link or the number of mandatory links. When the SBP responder fails to find a sensing responder meeting the mandatory link or the number of mandatory links, the SBP responder sends an SBP termination frame to the SBP initiator, where a value of an SBP error status extension field in the SBP termination frame is 3.

1206: The SBP responder sends an SBP termination frame to the SBP initiator.

Correspondingly, the SBP initiator receives the SBP termination frame from the SBP responder.

1207: The SBP initiator determines, based on the SBP termination frame, a reason why a sensing measurement session is unable to be set up between the SBP responder and the sensing responder.

For step 1206 and step 1207, refer to step 1002 and step 1003 in FIG. 10.

In this embodiment of this application, the SBP initiator determines, based on the SBP termination frame, the reason why a sensing measurement session is unable to be set up between the SBP responder and the sensing responder or the reason why the sensing measurement session is terminated, thereby providing a reference for a subsequent behavior of the SBP initiator, and helping improve efficiency of subsequently setting up an SBP procedure.

As described above, the trigger condition for the SBP responder to send an SBP termination frame to the SBP initiator may be that the sensing measurement session set up between the SBP responder and the sensing responder is terminated. The trigger condition for terminating the sensing measurement session set up between the SBP responder and the sensing responder may be a trigger condition for the SBP responder to send an SBP termination frame to the SBP initiator. The following describes in detail a possible trigger condition for sending an SBP termination frame to the SBP initiator after the SBP initiator sets up the sensing measurement session with the sensing responder.

In a multi-link SBP scenario, to meet a sensing or measurement requirement of the SBP initiator, the SBP responder performs sensing measurement interaction with one or more non-AP MLDs. If the SBP responder (that is, an AP MLD) or the non-AP MLD deletes a link, the SBP responder may trigger sending of an SBP termination frame to the SBP initiator under different conditions based on different negotiated parameters with the SBP initiator, that is, trigger conditions for sending an SBP termination frame to the SBP initiator are different. An example of the trigger condition for the SBP responder to send an SBP termination frame is shown in Table 2.

**Table 2**

| SBP request frame field setting | Trigger condition | Whether to trigger an SBP termination frame | If an SBP termination frame is not triggered, whether reconfiguring a link or finding a new responder to reconfigure a link for sensing and an operational parameter on the link can be triggered |
|---|---|---|---|
| Mandatory responder and its mandatory link | The mandatory link is deleted | Triggered definitely | |
| Mandatory responder and number of mandatory links | The link is deleted | Triggered or not triggered | Reconfigure a new link |
| Number of mandatory responders and mandatory link | The mandatory link is deleted | Triggered or not triggered | Find a new responder for reconfiguration |
| | The mandatory link is deleted, causing the number of responders to fail to meet the number of mandatory links | Triggered definitely | |
| Number of mandatory responders and number of mandatory links | The link is deleted | Triggered or not triggered | Reconfigure a new link or find a new responder for reconfiguration |
| | The link is deleted, causing the number of responders to fail to meet the number of mandatory links | Triggered definitely | |
| Mandatory link | A mandatory link of a responder is deleted | Triggered or not triggered | Reconfiguration on a new responder |
| | A mandatory link of a responder is deleted, and if no responder meets the mandatory link (for example, an AP removes | Triggered definitely | |
| | the link) | | |
| Number of mandatory links | A link of a responder is deleted | Triggered or not triggered | Reconfigure a new link or find a new responder for reconfiguration |
| | A link of a responder is deleted, and if no responder meets the number of mandatory links (for example, an AP removes the link) | Triggered definitely | |

The first column in Table 2 indicates one or more of the mandatory responder, the mandatory link, the number of mandatory links, and the number of mandatory responders that are indicated by the SBP request frame sent by the SBP initiator to the SBP responder. In this application, the mandatory responder may be a responder that needs to be used for a sensing measurement session; the mandatory link may be a link ID that needs to be used for a sensing measurement session; the number of mandatory responders may be a number of responders that need to be used for a sensing measurement session; and the number of mandatory links may be a number of links that need to be used for a sensing measurement session. In this application, the number of mandatory links may be a number of links that need to be set up between the SBP responder and the sensing responder, or may be a minimum number of links that need to be set up between the SBP responder and the sensing responder. The SBP request frame may be sent by the SBP initiator to the SBP responder before the SBP responder sends the SBP termination frame. For example, the second row in Table 2 indicates that the SBP request frame sent by the SBP initiator to the SBP responder indicates the mandatory responder and the mandatory link of the mandatory responder. For another example, the third row in Table 2 indicates that the SBP request frame sent by the SBP initiator to the SBP responder indicates the mandatory responder and the number of mandatory links. The second column in Table 2 indicates the trigger condition for the SBP responder to send an SBP termination frame. One or more of the mandatory responder, the mandatory link, the number of mandatory links, and the number of mandatory responders indicated by the SBP request frame may be parameters negotiated by the SBP responder and the SBP initiator for setting up a sensing measurement session. The trigger condition shown in the second column of Table 2 may be a necessary but not sufficient condition for the SBP responder to send an SBP termination frame, or may be a sufficient and necessary condition (referred to as a necessary and sufficient condition) for the SBP responder to send an SBP termination frame. If a trigger condition is a necessary but not sufficient condition for the SBP responder to send an SBP termination frame, when the trigger condition is met, the SBP responder may send an SBP termination frame, or may not send an SBP termination frame. Alternatively, if a trigger condition is a necessary but not sufficient condition for the SBP responder to send an SBP termination frame, the trigger condition may trigger an SBP termination frame, that is, when the trigger condition is met, the SBP responder may send an SBP termination frame; or may not trigger an SBP termination frame, that is, when the trigger condition is met, the SBP responder may not send an SBP termination frame. If a trigger condition is a sufficient and necessary condition for the SBP responder to send an SBP termination frame, the trigger condition definitely triggers an SBP termination frame. In other words, when the trigger condition is met, the SBP responder definitely sends an SBP termination frame. The third column in Table 2 indicates whether an SBP termination frame is triggered when the trigger condition is met. In other words, the third column in Table 2 indicates whether the trigger condition is a necessary but not sufficient condition or a sufficient and necessary condition for the SBP responder to send an SBP termination frame. The fourth column in Table 2 indicates whether to trigger reconfiguring a link or finding a new responder to reconfigure a link if an SBP termination frame is not triggered when the trigger condition is met. In this application, reconfiguring a link may be setting up (adding) a link and configuring a parameter.

Refer to the second column of Table 2. When the SBP initiator sets the mandatory link of the mandatory responder, if the mandatory link is deleted, an SBP termination frame is definitely triggered. In other words, when the SBP initiator sets the mandatory link of the mandatory responder, deletion of the mandatory link is a sufficient and necessary condition for the SBP responder to send an SBP termination frame.

Refer to the third column of Table 2. When the SBP initiator sets the mandatory responder and the number of mandatory links, if the link is deleted, an SBP termination frame may be triggered, or a new link may be reconfigured at the current responder. Reconfiguration of a new link at the current responder indicates that the SBP responder is not to send an SBP termination frame. In other words, when the SBP initiator sets the mandatory responder and the number of mandatory links, deletion of the link is a necessary but not sufficient condition for the SBP responder to send an SBP termination frame.

Refer to Table 2. When the SBP initiator sets the number of mandatory responders and the mandatory link, if the mandatory link is deleted, an SBP termination frame may be triggered or a new responder may be found for reconfiguration. If the number of responders does not meet the number of mandatory responders due to deletion of the mandatory link, an SBP termination frame is definitely triggered. In other words, when the SBP initiator sets the number of mandatory responders and the mandatory link, deletion of the mandatory link and deletion of the mandatory link not causing the number of responders failing to meet the number of mandatory links is a necessary but not sufficient condition for the SBP responder to send an SBP termination frame, and deletion of the mandatory link and deletion of the mandatory link causing the number of responders failing to meet the number of mandatory links is a necessary and sufficient condition for the SBP responder to send an SBP termination frame.

Refer to Table 2. When the SBP initiator sets the number of mandatory responders and the number of mandatory links, if the link is deleted, triggering or reconfiguration of a new link or finding a new responder for reconfiguration may occur. If deletion of the link causes the number of responders to fail to meet the number of mandatory links, an SBP termination frame is definitely triggered. In other words, when the SBP initiator sets the number of mandatory responders and the number of mandatory links, deletion of the link and deletion of the link not causing the number of responders failing to meet the number of mandatory links is a necessary but not sufficient condition for the SBP responder to send an SBP termination frame, and deletion of the link and deletion of the link causing the number of responders failing to meet the number of mandatory links is a necessary and sufficient condition for the SBP responder to send an SBP termination frame. The number of responders failing to meet the number of mandatory links may be that the number of responders meeting the number of mandatory links is less than the number of mandatory responders.

Refer to Table 2. When the SBP initiator sets the mandatory link, if a mandatory link of a responder is deleted, triggering or reconfiguration of a new responder may occur. After a mandatory link of a responder is deleted, if no responder meets the mandatory link (for example, the SBP responder removes the link), an SBP termination frame is definitely triggered.

Refer to Table 2. When the SBP initiator sets the number of mandatory links, if a link of a responder is deleted, triggering or reconfiguration of a new link or finding a new responder for reconfiguration may occur. If a link of a responder is deleted and no responder meets the number of mandatory links (for example, the AP removes the link), an SBP termination frame is definitely triggered.

The trigger conditions in Table 2 are divided into two types: one is a necessary and sufficient condition for triggering the SBP responder to send an SBP termination frame, and the other is a necessary but not sufficient condition for triggering the SBP responder to send an SBP termination frame. When the necessary and sufficient condition for triggering the SBP responder to send an SBP termination frame is met, because the SBP responder cannot meet the settings of the SBP initiator (refer to the first column of Table 2) by reconfiguring a link, an SBP termination frame is definitely triggered. When the necessary but not sufficient condition for triggering the SBP responder to send an SBP termination frame is met, because the SBP responder can meet the settings of the SBP initiator (refer to the first column of Table 2) by reconfiguring a link, an SBP termination frame may or may not be triggered. A manner of reconfiguring a link includes reconfiguring a link on a responder where a deleted link is located or reconfiguring a link on a new responder.

When the trigger condition (a necessary but not sufficient condition) that may or may not trigger the SBP responder to send an SBP termination frame is met, whether the SBP responder sends an SBP termination frame can be determined by an internal implementation of the SBP responder. In a possible implementation, when the trigger condition that may or may not trigger the SBP responder to send an SBP termination frame is met, the SBP responder sends an SBP termination frame. In a possible implementation, when the trigger condition that may or may not trigger the SBP responder to send an SBP termination frame is met, the SBP responder does not send an SBP termination frame, but reconfigures a link instead. In a possible implementation, when the trigger condition that may or may not trigger the SBP responder to send an SBP termination frame is met, if the SBP responder determines that an operational parameter set by reconfiguring a new link cannot meet the requirement of the SBP initiator, the SBP responder sends an SBP termination frame; and if the SBP responder determines that the operational parameter set by reconfiguring a new link can meet the requirement of the SBP initiator, the SBP responder reconfigures a link. In a possible implementation, the SBP request frame includes a link adjustment (link adjustment) field, and a length of the link adjustment field is, for example, 1 bit. If a value of the link adjustment field is set to 1, it indicates that if link deletion occurs but a parameter request set by the SBP initiator can still be met, the AP may reconfigure a link as appropriate without needing to close the SBP procedure (procedure).

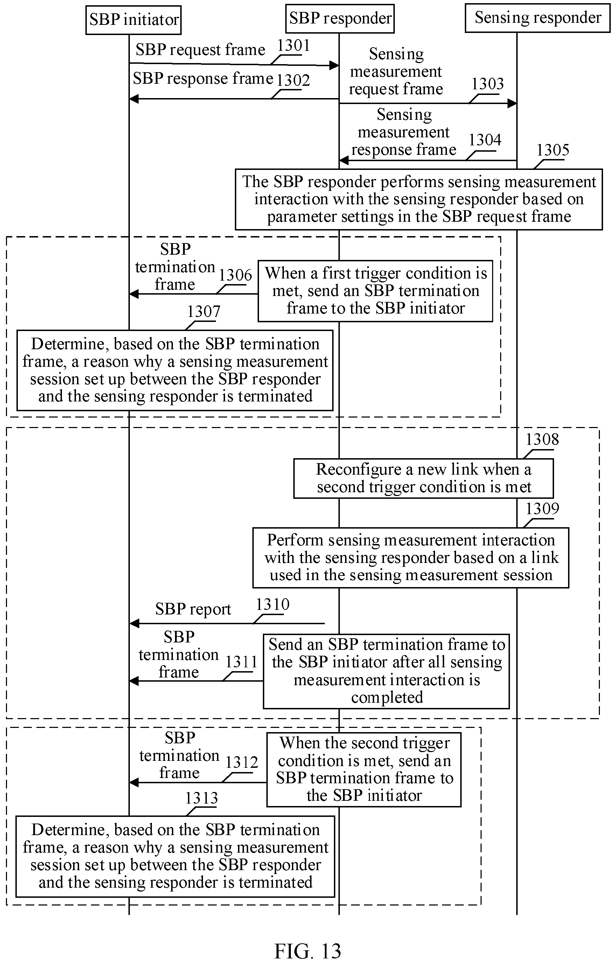

The following describes, with reference to FIG. 13, examples of method procedures performed by an SBP responder when different trigger conditions are met.

FIG. 13 is a schematic flowchart of another communication method according to an embodiment of this application. The method procedure in FIG. 13 includes a possible implementation of the method described in FIG. 10. As shown in FIG. 13, the method includes the following steps.

1301: An SBP initiator sends an SBP request frame to an SBP responder.

Correspondingly, the SBP responder receives the SBP request frame from the SBP initiator.

1302: The SBP responder sends an SBP response frame to the SBP initiator.

Correspondingly, the SBP initiator receives the SBP response frame from the SBP responder.

1303: The SBP responder sends a sensing measurement request frame to a sensing responder.

The SBP responder, as a sensing initiator, sends a sensing measurement request frame to the sensing responder. For step 1301 to step 1303, refer to step 1201 to step 1203 in FIG. 12.

1304: The sensing responder sends a sensing measurement response frame to the SBP responder.

After receiving the sensing measurement request frame, the sensing responder may send a sensing measurement response frame (sensing measurement response frame) to the SBP responder. Correspondingly, the SBP responder receives the sensing measurement response frame from the sensing responder. Step 1202 and step 1203 are included in the procedure of the sensing measurement session, that is, the procedure of setting up the sensing measurement session. Refer to FIG. 4.

1305: The SBP responder performs sensing measurement interaction with the sensing responder based on parameter settings in the SBP request frame.

1306: When a first trigger condition is met, the SBP responder sends an SBP termination frame to the SBP initiator.

Correspondingly, the SBP initiator receives the SBP termination frame from the SBP responder. The SBP termination frame includes the second indication information. The second indication information includes identification information of a first link (including a deleted link) and/or identification information of a first responder (the sensing responder).

The first trigger condition may be a sufficient and necessary condition for triggering the SBP responder to send an SBP termination frame to the SBP initiator. In other words, when the first trigger condition is met, the SBP responder definitely (needs to) sends an SBP termination frame to the SBP initiator.

In a possible implementation, the first trigger condition includes any one of the following: the SBP initiator sets a mandatory link of a mandatory responder, and the mandatory link of the mandatory responder is deleted by the SBP responder or the sensing responder; the SBP initiator sets a number of mandatory responders and a mandatory link, and deletion of the mandatory link causes a number of responders to fail to meet the number of mandatory responders; the SBP initiator sets a number of mandatory responders and a number of mandatory links, and deletion of a link causes the number of responders to fail to meet the number of mandatory links; the SBP initiator sets a mandatory link, and after a mandatory link of a responder is deleted, no responder meets the mandatory link (for example, the SBP responder removes the link); and the SBP initiator sets a number of mandatory links, and when a link of a responder is deleted, no responder meets the number of mandatory links (for example, the AP removes the link). For example, when the SBP initiator sets a mandatory link of a mandatory responder, if the mandatory link of the mandatory responder is deleted, an SBP termination frame is sent to the SBP initiator, where second indication information of the SBP termination frame includes identification information of the mandatory link. The second indication information further includes identification information of a responder deleting the mandatory link.

1307: The SBP initiator determines, based on the SBP termination frame, a reason why a sensing measurement session set up between the SBP responder and the sensing responder is terminated.

For step 1307, refer to step 1003. Step 1306 and step 1307 are optional.

1308: The SBP responder reconfigures a new link when a second trigger condition is met.

When the second trigger condition is met, the SBP responder may send an SBP termination frame to the SBP initiator, or may reconfigure a new link. Step 1308 to step 1311 describe the SBP responder reconfiguring a new link when the second trigger condition is met and a subsequent procedure. Step 1312 and step 1313 describe the SBP responder sending an SBP termination frame to the SBP initiator when the second trigger condition is met and a subsequent procedure. Step 1306 and step 1307, step 1308 to step 1311, and step 1312 and step 1313 are three parallel solutions. The method procedure in FIG. 13 includes one of step 1306 and step 1307, step 1308 to step 1311, or step 1312 and step 1313. The SBP termination frame includes the second indication information. The second indication information includes identification information of a first link and/or identification information of a first responder. The SBP responder reconfiguring a new link may be setting up a new link on a sensing responder whose link has been deleted, or setting up a new link on a new sensing responder. The SBP responder reconfiguring a new link may be: after a link on a second responder (a current responder) used in a sensing measurement session is closed, setting up a new link on the second responder and configuring a parameter; or after a link on a third responder (a current responder) used in the sensing measurement session is closed, closing the sensing measurement session with the third responder and resetting up the sensing measurement session with a new responder; or updating a sensing measurement parameter of a link used in the sensing measurement session.

The second trigger condition may be a necessary but not sufficient condition for triggering the SBP responder to send an SBP termination frame to the SBP initiator. In other words, when the second trigger condition is met, the SBP responder may send an SBP termination frame to the SBP initiator, or may reconfigure a new link, that is, may not send an SBP termination frame. The second trigger condition may be the foregoing trigger condition that may or may not trigger the SBP responder to send an SBP termination frame. When the SBP responder meets the second trigger condition, whether the SBP responder sends an SBP termination frame may be determined by an internal implementation of the SBP responder. In a possible implementation, when the second trigger condition is met, the SBP responder sends an SBP termination frame. In a possible implementation, when the second trigger condition is met, the SBP responder does not send an SBP termination frame, but reconfigures a link instead. In a possible implementation, when the second trigger condition is met, if the SBP responder determines that an operational parameter set by reconfiguring a new link cannot meet the requirement of the SBP initiator, the SBP responder sends an SBP termination frame; and if the SBP responder determines that the operational parameter set by reconfiguring a new link can meet the requirement of the SBP initiator, the SBP responder reconfigures a link.

In a possible implementation, the second trigger condition includes any one of the following: the SBP initiator sets a mandatory responder and a number of mandatory links, and a link is deleted; the SBP initiator sets a number of mandatory responders and a mandatory link, the mandatory link is deleted, and deletion of the mandatory link does not cause the number of responders to fail to meet the number of mandatory responders; the SBP initiator sets a number of mandatory responders and a number of mandatory links, a link is deleted, and deletion of the link does not cause the number of responders to fail to meet the number of mandatory links; the SBP initiator sets a mandatory link, a mandatory link of a responder is deleted, and a responder meeting the mandatory link can be found; and the SBP initiator sets a number of mandatory links, a link of a responder is deleted, and a responder meeting the number of mandatory links can be found.

1309: The SBP responder performs sensing measurement interaction with the sensing responder based on a link used in the sensing measurement session.

The SBP responder performing sensing measurement interaction with the sensing responder based on the link used in the sensing measurement session may be: the SBP responder performing sensing measurement interaction with the sensing responder based on an undeleted link and a reconfigured link used in the sensing measurement session.

1310: The SBP responder sends an SBP report to the SBP initiator.

Correspondingly, the SBP initiator receives the SBP report from the SBP responder. The SBP responder may send an SBP report to the SBP initiator based on a sensing measurement result fed back by the sensing responder, where the SBP report may include a result of sensing measurement interaction performed between the SBP responder and the sensing responder.

1311: The SBP responder sends an SBP termination frame to the SBP initiator after all sensing measurement interaction is completed.

Correspondingly, the SBP initiator receives the SBP termination frame from the SBP responder. The SBP termination frame is used to terminate the sensing measurement session set up between the SBP responder and the sensing responder. For the SBP termination frame, refer to the figure. In a possible implementation, a value of an SBP error status field (included in the first indication information) in the SBP termination frame is 0. Step 1311 may be replaced with that the SBP initiator sends an SBP termination frame to the SBP responder. Step 1311 may alternatively be replaced with that the SBP initiator implicitly closes the session when detecting that no frame interaction is performed within a set timer, where the SBP initiator sets a measurement session expiry timer (measurement session expiry timer) in a sensing setup process. The SBP responder or the SBP initiator may alternatively close the sensing measurement session in another manner. This is not limited in this application.

1312: When the second trigger condition is met, the SBP responder sends an SBP termination frame to the SBP initiator.

Correspondingly, the SBP initiator receives the SBP termination frame from the SBP responder.

1313: The SBP initiator determines, based on the SBP termination frame, the reason why the sensing measurement session set up between the SBP responder and the sensing responder is terminated.

For step 1313, refer to step 1003.

In this embodiment of this application, in a solution in which the SBP responder sends the SBP termination frame to the SBP initiator, the SBP initiator determines, based on the SBP termination frame, the reason why the sensing measurement session is terminated, thereby providing a reference for a subsequent behavior of the SBP initiator and helping to improve efficiency of subsequently setting up an SBP procedure. When the second trigger condition is met, the SBP responder reconfigures a new link, so that the sensing measurement session can continue, and sensing measurement efficiency can be improved.

The method procedure in FIG. 13 describes a solution in which the SBP responder reconfigures a new link or a sensing measurement parameter when the second trigger condition is met. After the link in the SBP responder (AP MLD) or the non-AP MLD is removed, the sensing measurement parameter may be reconfigured based on an indication status of the SBP parameter during SBP setup interaction. The following three possible behaviors may be performed:

First behavior: The SBP responder adds a new link on a current responder and configures a parameter based on a requirement of the SBP initiator during SBP setup, and continues to perform sensing measurement in a current sensing measurement session. Then, the SBP responder sends a frame to the SBP initiator to inform of link closing and link switching situations of different responders. The requirement of the SBP initiator during SBP setup may be parameters negotiated by the SBP responder and the SBP initiator for setting up a sensing measurement session. This behavior corresponds to the behavior of "configure a new link" in Table 2.

Second behavior: The SBP responder closes the sensing measurement session with the current responder, and re-set up a sensing measurement session with a new responder to meet an SBP request of the SBP initiator, and sends a frame to inform the SBP initiator of link closing, as well as a switched responder and a corresponding link. This behavior corresponds to the behavior of "reconfiguration on a new responder" in Table 2.

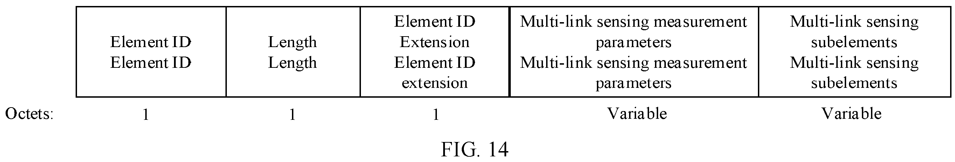

Third behavior: The SBP responder sends a frame on an original link to update the sensing measurement parameter. For example, the updated sensing measurement parameter includes one or more of transmitter high efficiency-long training field repetition (TX HE-LTF Repetition), receiver high efficiency-long training field repetition (RX HE-LTF Repetition), a receiver space-time stream (RX STS), and a number of antennas. The sensing measurement parameter is carried in a multi-link sensing measurement parameters element, the multi-link sensing measurement parameters element includes a multi-link sensing measurement parameters field and a multi-link sensing subelement, and an element frame structure is shown in FIG. 14 below. FIG. 14 shows an example of a structure of a multi-link sensing measurement parameters element. The multi-link sensing measurement parameters element may be included in a sensing measurement request frame. That is, the SBP responder may send a sensing measurement request frame (refer to FIG. 7) including a multi-link sensing measurement parameters element to update the sensing measurement parameter of the original link. Fields in the multi-link sensing measurement parameter and the multi-link subelement are shown in Table 3 below. In this application, a sensing transmitter is a sensing transmit end.

**Table 3**

| | | Specific parameter | Public parameter |
|---|---|---|---|
| Multi-link sensing measurement parameters field (Multi-link Sensing measurement parameters field) | | Bandwidth (bandwidth, BW), transmitter high efficiency-long training field repetition (TX HE-LTF Repetition), receiver high efficiency-long training field repetition (RX HE-LTF Repetition), transmitter space-time stream (TX STS), | Sensing transmitter (Sensing transmitter), sensing receiver (Sensing receiver), sensing measurement report requested (Sensing measurement report requested), measurement setup expiry exponent (Measurement Setup Expiry Exponent), recommended |

| | | Specific parameter | Public parameter |
|---|---|---|---|
| | | receiver space-time stream (RX STS), number of receiver antennas (Number of Rx antennas), report timestamp (Report timestamp), bits, subcarrier grouping, basic service set color information (BSS Color Information), and link identification information (Link ID) | report link information (Recommended report link), session setup condition information (Session setup condition), and mandatory link information (Mandatory link) |
| Multi-link sensing subelements (Multi-link Sensing subelements) | TB sensing specific subelement (TB Sensing Specific subelement) | Channel state information variation threshold (CSI variation Threshold), sensing responder to sensing responder (SR2SR), sensing time window information (Availability window), link identification information (Link ID), time window mode information (AW parameters setup mode), time window offset information (Starting time offset indication), and common time window indication information (Common AW indication) | Poll assigned (Poll assigned), associated device identifier/unassociated device identifier (AID/USID), and reference time window information (Reference Availability window) |
| | Non-TB sensing specific subelement (Non-TB sensing Specific subelement) | Minimum time between measurements (Min time between measurements) and link identification information (Link ID) | |
| | SBP specific subelement (SBP Specific subelement) | | SBP initiator associated station identifier 12/unassociated station identifier 12 (SBP Initiator AID12/USID12) |

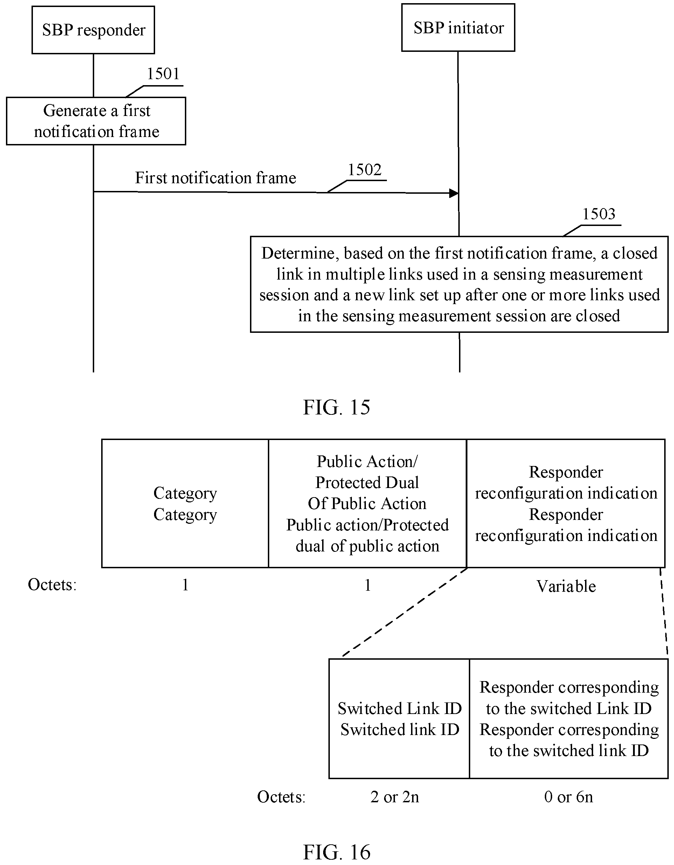

The foregoing has introduced three possible behaviors that the SBP responder (AP MLD) may perform after a link in the SBP responder (AP MLD) or a non-AP MLD is removed. With reference to FIG. 15 to FIG. 17, the following separately describes method procedures in which the SBP responder (AP MLD) performs the three behaviors respectively after the link in the SBP responder (AP MLD) or the non-AP MLD is removed.

FIG. 15 is a schematic flowchart of another communication method according to an embodiment of this application. The method in FIG. 15 corresponds to the first behavior and the second behavior. As shown in FIG. 15, the method includes the following steps.

1501: An SBP responder generates a first notification frame.

The first notification frame includes fourth indication information. The fourth indication information is used to determine a closed link among multiple links used in a sensing measurement session set up by the SBP responder and one or more sensing responders, and a newly set up link (or a switched link) after one or more links used in the sensing measurement session are closed. In a possible implementation, the SBP responder generates the first notification frame when a new link is set up after one or more links used in the measurement session are closed.

In a possible implementation, the first notification frame further includes fifth indication information, the fifth indication information indicates a second responder, and the second responder includes a responder associated with a new link set up after one or more links used in the sensing measurement session are closed. In a possible implementation, the first notification frame includes fourth indication information, but does not include fifth indication information, the fourth indication information indicates all links switched by the sensing responders, and the first notification frame implicitly indicates links newly set up on all sensing responders (that is, current responders) after one or more links used in the sensing measurement session are closed.

In a possible implementation, the fourth indication information includes a bitmap, K bits in the bitmap are in a one-to-one correspondence with K links of the SBP responder, when a first bit in the K bits takes a first value, a link corresponding to the first bit is a link used in the sensing measurement session, and when a second bit in the K bits takes a second value, a link corresponding to the second bit is a link not used in the sensing measurement session, where K is an integer greater than 0. The K links of the SBP responder may include links between the SBP responder and one or more sensing responders. The K links of the SBP responder may be K links supported by the SBP responder. For example, the SBP responder supports a maximum of K links, that is, a link #1 to a link #K, and bits in the bitmap are in a one-to-one correspondence with the link #1 to the link #K according to an order from left to right. In this implementation, the fourth indication information includes a bitmap, and the bitmap indicates a link used and a link unused in the sensing measurement session, so that bit overheads can be reduced.

In a possible implementation, the fourth indication information includes identification information of a second link and identification information of a third link, the second link is a closed link in multiple links used in the sensing measurement session, and the third link is a new link set up after one or more links used in the sensing measurement session are closed.

FIG. 16 is a diagram of a first notification frame according to an embodiment of this application. As shown in FIG. 16, the first notification frame includes: category (Category), public action/protected dual of public action (Public Action/Protected Dual of Public Action), and responder reconfiguration indication (responder reconfiguration indication). The responder reconfiguration indication may include the fourth indication information and the fifth indication information. The responder reconfiguration indication includes a switched link ID (Switched Link ID) and a responder corresponding to the switched link ID (responder corresponding to the switched link ID). The switched link ID may be an example of the fourth indication information, and the responder corresponding to the switched link ID is an example of the fifth indication information. For example, the switched link ID includes the foregoing bitmap, and the responder corresponding to the switched link ID includes an ID of the second responder. The ID of the second responder may be an AID (12 bits), a USID (12 bits), or a MAC address (48 bits) of the second responder. In the frame structure shown in this application, an example in which an ID of a responder is a MAC address of the responder is used for description. For example, the switched link ID includes the identification information of the second link and the identification information of the third link, and the responder corresponding to the switched link ID includes the ID of the second responder.

1502: The SBP responder sends the first notification frame to an SBP initiator.

Correspondingly, the SBP initiator receives the first notification frame from the SBP responder. The SBP initiator may send an acknowledgment frame (which may be named as an ACK frame) for the first notification frame to the SBP responder, where the acknowledgment frame indicates that the SBP initiator receives the first notification frame.

1503: The SBP initiator determines, based on the first notification frame, a closed link in multiple links used in a sensing measurement session and a new link set up after one or more links used in the sensing measurement session are closed.

In a possible implementation, the first notification frame includes the fourth indication information and the fifth indication information, and step 1503 may be: The SBP initiator determines, based on the first notification frame, a closed link in multiple links used in the sensing measurement session, a new link set up after one or more links used in the sensing measurement session are closed, and a second responder associated with the newly set up link.

In a possible implementation, the SBP initiator determines, based on the bitmap included in the fourth indication information, the closed link in the multiple links used in the sensing measurement session and the newly set up link; and determines, based on the fifth indication information, the second responder associated with the newly set up link. For example, the SBP initiator determines, based on the bitmap, a link currently used and a link currently not used in the sensing measurement session; and then compares the link currently used in the sensing measurement session with the link used in the sensing measurement session that has been fed back by the SBP responder (that is, the link used in the sensing measurement session before the link is deleted), and determines the closed link in the multiple links used in the sensing measurement session and the newly set up link after one or more links used in the sensing measurement session are closed.

In a possible implementation, the SBP initiator determines, based on the identification information of the second link and the identification information of the third link that are included in the fourth indication information, the closed link in the multiple links used in the sensing measurement session and the newly set up link, where the second link is the closed link in the multiple links used in the sensing measurement session, and the third link is the newly set up link; and determines, based on the fifth indication information, the second responder associated with the newly set up link.

In this embodiment of this application, the SBP responder sends the first notification frame to the SBP initiator, and sets up a new link after the multiple links used in the sensing measurement session are closed. On one hand, the session continues, and on the other hand, the SBP initiator learns of updates to parameters of different sensing responders, thereby providing a reference for a subsequent behavior of the SBP initiator.

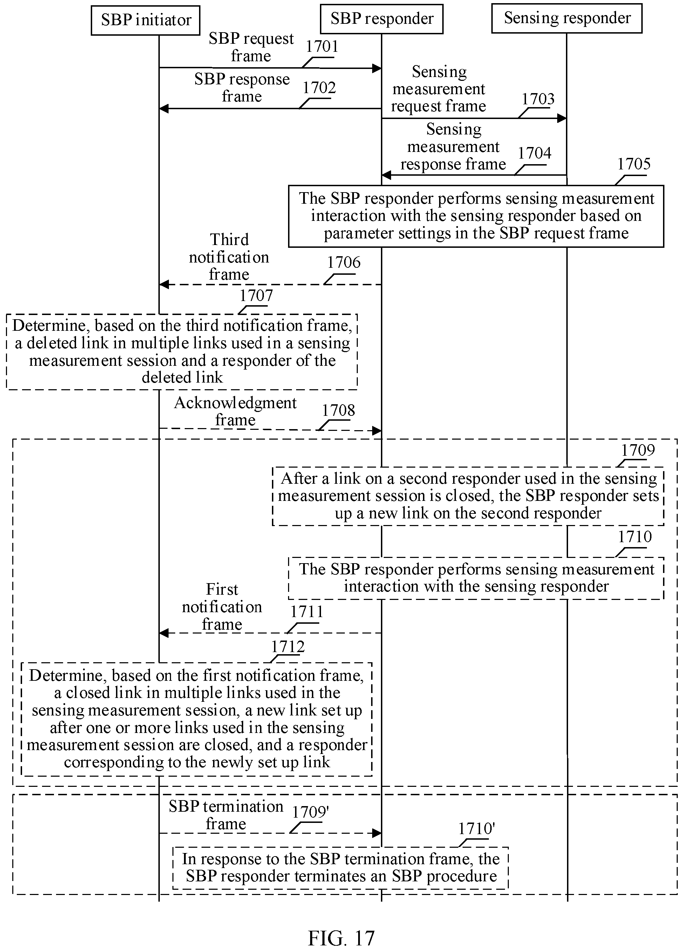

FIG. 17 is a schematic flowchart of another communication method according to an embodiment of this application. The method procedure in FIG. 17 is a possible implementation of the method described in FIG. 15. The method in FIG. 17 corresponds to the first behavior. As shown in FIG. 17, the method includes the following steps.

1701: An SBP initiator sends an SBP request frame to an SBP responder.

Correspondingly, the SBP responder receives the SBP request frame from the SBP initiator.

1702: The SBP responder sends an SBP response frame to the SBP initiator.

Correspondingly, the SBP initiator receives the SBP response frame from the SBP responder.

1703: The SBP responder sends a sensing measurement request frame to a sensing responder.

The SBP responder, as a sensing initiator, sends a sensing measurement request frame to the sensing responder. For step 1701 to step 1703, refer to step 1201 to step 1203 in FIG. 12. This embodiment of this application is described by using an example in which the SBP responder performs sensing measurement interaction with one sensing responder.

1704: The sensing responder sends a sensing measurement response frame to the SBP responder.

Correspondingly, the SBP responder receives the sensing measurement response frame from the sensing responder.

1705: The SBP responder performs sensing measurement interaction with the sensing responder based on parameter settings in the SBP request frame.

Step 1701 to step 1704 correspond to the procedure of SBP setup interaction, the procedure of sensing measurement session, and the procedure of sensing measurement interaction in FIG. 4.

1706: After one or more links used in a sensing measurement session set up between the SBP responder and one or more sensing responders are closed, the SBP responder sends a third notification frame to the SBP initiator.

The third notification frame is used to determine a deleted link in multiple links used in the sensing measurement session set up by the SBP responder and the one or more sensing responders and a responder of the deleted link. The third notification frame may be named a link deletion notification frame, or may be named another name.

1707: The SBP initiator determines, based on the third notification frame, a deleted link in multiple links used in the sensing measurement session and a responder of the deleted link.

In a possible implementation, the third notification frame includes sixth indication information, and the sixth indication information indicates the deleted link in the multiple links used in the sensing measurement session set up by the SBP responder and the one or more sensing responders. For example, the sixth indication information includes a deleted link ID, that is, an ID of the deleted link in the multiple links used in the sensing measurement session. For example, a length of the deleted link ID is 2 or 2n bytes, where n is an integer greater than 1. The third notification frame is used to determine a link that is in the multiple links used in the sensing measurement session and that is deleted by the SBP responder. The SBP initiator may determine, based on the third notification frame, the link that is in the multiple links used in the sensing measurement session and that is deleted by the SBP responder.

In a possible implementation, the third notification frame includes sixth indication information and seventh indication information, the sixth indication information indicates the deleted link (for example, a fifth link) in the multiple links used in the sensing measurement session set up by the SBP responder and the one or more sensing responders, and the seventh indication information indicates a responder ID (for example, an ID of a fourth responder of the fifth link) of the deleted link. For example, a length of the responder ID of the deleted link is 6 or 6n bytes, where n is an integer greater than 1. For example, the SBP initiator may determine, based on the third notification frame, that the fourth responder deletes the fifth link in the multiple links used in the sensing measurement session. An example of a frame structure of the third notification frame may be replacing the switched link ID in FIG. 16 with the deleted link ID, and replacing the responder ID of the switched link with the responder ID of the deleted link.

1708: The SBP initiator sends an acknowledgment frame to the SBP responder.

Correspondingly, the SBP responder receives the acknowledgment frame from the SBP initiator. The acknowledgment frame indicates that the SBP initiator has received the third notification frame. A sequence of step 1708 and step 1707 is not limited.

Step 1706 to step 1708 are optional.

1709: After a link on a second responder used in the sensing measurement session is closed, the SBP responder sets up a new link on the second responder.

The second responder may be the sensing responder. Setting up a new link on the second responder may be understood as reconfiguring a new link on the current sensing responder. The link being closed may include at least one of: the link being removed (deleted) by the SBP responder, the link being closed by the SBP responder, the link being deleted by the sensing responder, the link being disabled by the sensing responder, an affiliated STA entering a power save mode, or the link being disabled by the SBP responder. After the link on the second responder used in the sensing measurement session is closed, refer to Table 2 for whether to set up a new link on the second responder or find a new responder to reconfigure a link. In a possible implementation, if the SBP responder does not receive an SBP termination frame within preset duration after receiving the acknowledgment frame for the third notification frame, the SBP responder performs step 1709. The preset duration may be set based on an actual requirement. This is not limited in this application.

In a possible implementation, when reconfiguring a link on the second responder can meet parameters negotiated by the SBP responder and the SBP initiator for setting up a sensing measurement session, the SBP responder sets up a new link on the second responder.

1710: The SBP responder performs sensing measurement interaction with the sensing responder.

The link used by the SBP responder to perform sensing measurement interaction with the sensing responder includes a new link set up on the second responder.

1711: The SBP responder sends the first notification frame to an SBP initiator.

Correspondingly, the SBP initiator receives the first notification frame from the SBP responder. A sequence of step 1710 and step 1711 is not limited.

1712: The SBP initiator determines, based on the first notification frame, a closed link in multiple links used in the sensing measurement session, a new link set up after one or more links used in the sensing measurement session are closed, and a responder corresponding to the newly set up link.

For step 1712, refer to step 1503 in FIG. 15.

In this embodiment of this application, after a link on the second responder used in the sensing measurement session is closed, the SBP responder sets up a new link on the second responder, which enables the session to continue. The SBP responder sends the first notification frame to the SBP initiator, so that the SBP initiator learns of updates to parameters of different sensing responders, thereby providing a reference for a subsequent behavior of the SBP initiator.

1709': The SBP initiator sends an SBP termination frame to the SBP responder.

Correspondingly, the SBP responder receives the SBP termination frame from the SBP initiator. In a possible implementation, when the SBP initiator determines that a report fed back by the SBP responder performing sensing measurement on a remaining link or through a newly set up link cannot meet a requirement of the SBP initiator, the SBP initiator sends an SBP termination frame to the SBP responder.

1710': In response to the SBP termination frame, the SBP responder terminates an SBP procedure.

In an optional implementation, after sending the SBP termination frame to the SBP responder, the SBP initiator re-initiates the SBP procedure. For details, refer to step 1201 to step 1203 in FIG. 12.

Step 1709 to step 1712 and step 1709' and step 1710' are two possible implementations. FIG. 17 includes step 1709 to step 1712 or step 1709' and step 1710'.

The foregoing does not describe in detail an implementation of step 1709 in FIG. 17, that is, an implementation in which the SBP responder sets up a new link on the second responder. The following describes a possible implementation in which the SBP responder sets up a new link on the second responder.

A possible implementation in which the SBP responder sets up a new link on the second responder is as follows: The SBP responder sends a multi-link sensing measurement request frame to the second responder, where the multi-link sensing measurement request frame is used to request to configure a third link for the sensing measurement session; and the second responder sends a multi-link sensing measurement response frame. The second responder includes one or more sensing responders. The multi-link sensing measurement response frame may include a status code field. The second responder, depending on whether it accepts a sensing measurement setup parameter requested in the multi-link sensing measurement request frame, the status code (Status code) field includes the following possibilities:

The status code field indicates that a multi-link sensing measurement parameters element requested in the multi-link sensing measurement request frame is accepted; or
the status code indicates that a multi-link sensing measurement parameters element requested in the multi-link sensing measurement request frame is partially accepted, and the multi-link sensing measurement response frame carries identification information of a link accepted by the sensing responder; or
the status code indicates that the multi-link sensing measurement parameter requested in the multi-link sensing measurement request frame is rejected, and the multi-link sensing measurement response frame carries a sensing measurement parameter recommended by the sensing responder; or
the status code indicates that the multi-link sensing measurement parameters element requested in the link sensing measurement request frame is rejected, and the multi-link sensing measurement response frame does not carry a recommended sensing measurement setup parameter.

When the status code field indicates the foregoing first two possible cases, sensing measurement setup is completed, and the sensing measurement parameter (or an operational parameter of sensing measurement) of the third link is configured.

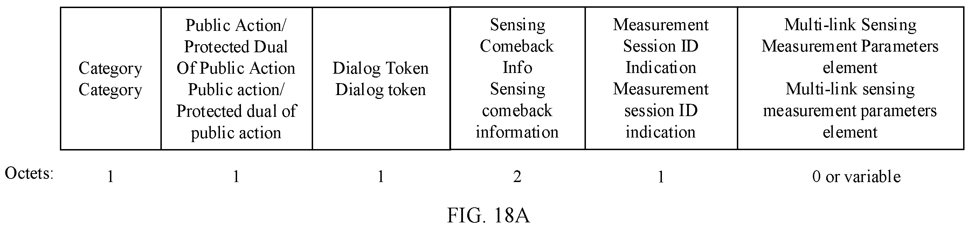

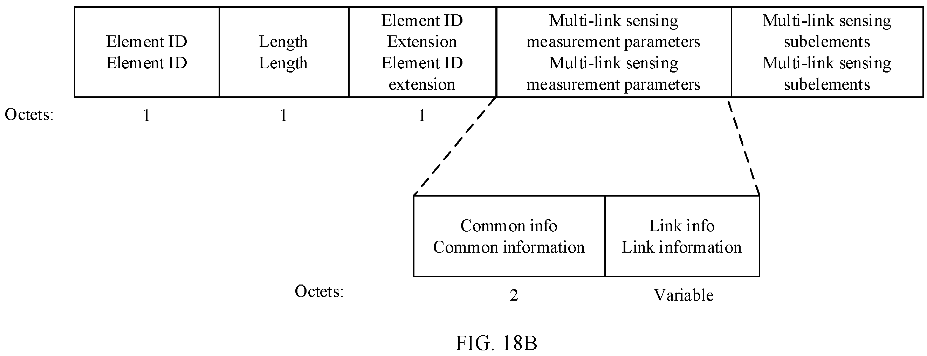

The multi-link sensing measurement request frame may carry information about the third link, where the information about the third link includes identification information of the third link and a sensing measurement parameter of the third link. The sensing measurement parameter of the third link may include one or more parameters shown in FIG. 18A. FIG. 18A is a diagram of a frame structure of a multi-link sensing measurement request frame according to an embodiment of this application. For example, refer to FIG. 18A. The multi-link sensing measurement request frame (multi-link sensing measurement request frame) includes: category (Category), public action/protected dual of public action (Public Action/Protected Dual of Public Action), dialog token (Dialog Token), sensing comeback information (Sensing Comeback Info), measurement session ID indication (Measurement Session ID Indication), and multi-link sensing measurement parameters element (multi-link sensing measurement parameters element). In this application, the sensing comeback information may be named sensing backhaul information. For the meanings of the fields in FIG. 18A, refer to the meanings of the fields in FIG. 7. Details are not described herein again. The multi-link sensing measurement parameters element carries information about the third link. FIG. 18B is a diagram of a structure of a multi-link sensing measurement parameters element according to an embodiment of this application. As an example, refer to FIG. 18B. The multi-link sensing measurement parameters element includes: element ID (Element ID), length (Length), element ID extension (Element ID Extension), multi-link sensing measurement parameters (multi-link sensing measurement parameters), and multi-link sensing subelements (multi-link sensing subelements), where the multi-link sensing measurement parameters include common information (Common inf) and link information (Link info). The element ID is used to identify an information element (information element, IE). The length indicates a length of an information element following it. The element ID extension is an extension of the element ID and is used to provide an additional information element identifier. The multi-link sensing measurement parameters element includes elements of operational parameters on multiple links. The multi-link sensing subelements include different types of operational parameters on multiple links. The common information indicates common parameter information of set up links for sensing measurement. The link information indicates parameter information on each link.

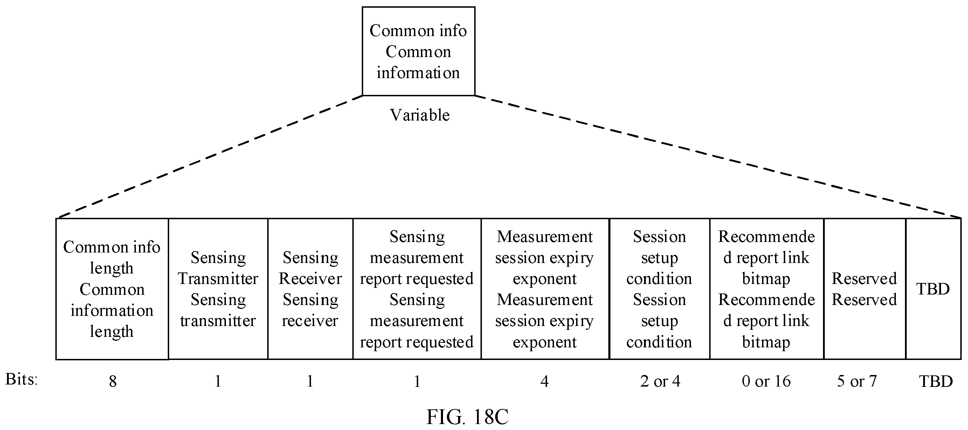

FIG. 18C is a diagram of a structure of common information in a multi-link sensing measurement parameters element according to an embodiment of this application. As an example, refer to FIG. 18C. The common information in the multi-link sensing measurement parameters element includes: common information length (Common info length), sensing transmitter (Sensing Transmitter), sensing receiver (Sensing Receiver), sensing measurement report requested (Sensing measurement report requested), measurement setup expiry exponent (Measurement Setup Expiry Exponent), session setup condition (Session setup condition), recommended report link bitmap (Recommended report link bitmap), reserved (Reserved), and to be determined (To Be Determined, TBD) field, where a length of the TBD field is to be determined. The common information length indicates a length of the common information field. The sensing transmitter indicates that a function of the device is sending a sensing PPDU. The sensing receiver indicates that a function of the device is receiving a sensing PPDU. The sensing measurement report requested indicates whether the device is to send a sensing measurement report. The measurement setup expiry exponent indicates timer duration for session closing. The session setup condition indicates a condition for session setup, for example, a requirement on a number of links. The recommended report link bitmap indicates a link ID recommended for a sensing responder to use for feeding back a report.

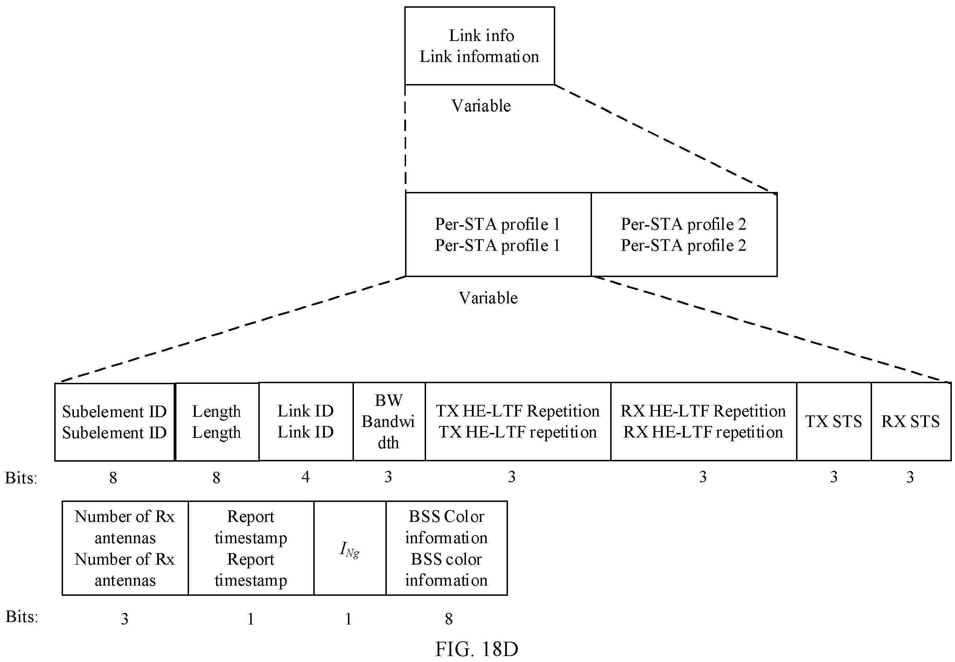

FIG. 18D is a diagram of a structure of link information in a multi-link sensing measurement parameters element according to an embodiment of this application. In an example, refer to FIG. 18D. The link information in the multi-link sensing measurement parameters element includes: per-station profile 1 (Per-STA profile 1) and per-station profile 2 (Per-STA profile 2). A number of per-station profiles included in the link information is not limited. A format of the per-station profile 2 is similar to that of the per-station profile 1. The following uses the per-station profile 1 as an example for introduction. The per-station profile 1 includes: subelement ID (Subelement ID), length, link ID, bandwidth (BW), TX HE-LTF repetition (TX HE-LTF Repetition), RX HE-LTF repetition (RX HE-LTF Repetition), TX STS, RX STS, number of Rx antennas (Number of Rx antennas), report timestamp (Report timestamp), subcarrier grouping (*I_{N_{g}}*), and BSS color information (BSS Color Information). The TX HE-LTF repetition indicates HE-LTF repetitions used by the device to send a null data packet (null data packet, NDP). The transmitter space-time stream (TX STS) indicates a number of streams used by a device to transmit an NDP within a specified bandwidth. The receiver space-time stream (RX STS) indicates a number of streams used by a device to receive an NDP within a specified bandwidth. The number of Rx antennas (Number of Rx antennas): indicates a number of antennas used by the receiver. The report timestamp: indicates whether a report timestamp exists in a sensing measurement report frame. Subcarrier grouping (*I_{N_{g}}*): indicates a subcarrier grouping status in a sensing measurement report. The BSS color information: indicates a color of a basic service set.

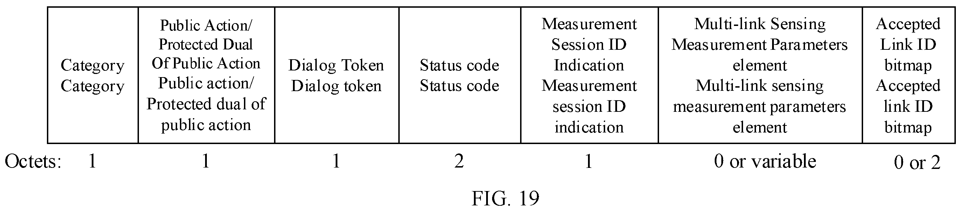

FIG. 19 is a diagram of a frame structure of a multi-link sensing measurement response frame according to an embodiment of this application. As an example, refer to FIG. 19. The multi-link sensing measurement response frame (multi-link sensing measurement response frame) includes: category (Category), public action/protected dual of public action (Public Action/Protected Dual of Public Action), dialog token (Dialog Token), status code (Status code), measurement session ID indication (Measurement Session ID Indication), multi-link sensing measurement parameters element (Multi-link Sensing Measurement Parameters element), and accepted link ID bitmap (Accepted Link ID bitmap). The accepted link ID bitmap indicates a link ID accepted by the sensing responder, for example, the ID of the third link. For example, when an i^{th} bit in the link ID bitmap is set to 1, it may indicate that the sensing responder accepts a link whose link ID is i-1.

Another possible implementation in which the SBP responder sets up a new link on the second responder is as follows: The SBP responder sends a reconfiguration multi-link sensing measurement request frame to the second responder, where the reconfiguration multi-link sensing measurement request frame is used to request configuration of the third link of the sensing measurement session; and the second responder sends a reconfiguration sensing measurement response frame. A function of the reconfiguration multi-link sensing measurement request frame is the same as or similar to that of the foregoing multi-link sensing measurement request frame, and the function of the reconfiguration sensing measurement response frame is the same as or similar to that of the foregoing multi-link sensing measurement response frame. The reconfiguration sensing measurement response frame may include a status code field. The second responder, depending on whether it accepts a sensing measurement setup parameter requested in the reconfiguration multi-link sensing measurement request frame, the status code (Status code) field includes the following possibilities:

The status code field indicates that a multi-link sensing measurement reconfiguration parameters element requested in the reconfiguration multi-link sensing measurement request frame is accepted; or
the status code indicates that a multi-link sensing measurement reconfiguration parameters element requested in the reconfiguration multi-link sensing measurement request frame is partially accepted, and the reconfiguration sensing measurement response frame carries identification information of a link accepted by the sensing responder; or
the status code indicates that the multi-link sensing measurement reconfiguration parameter requested in the reconfiguration multi-link sensing measurement request frame is rejected, and the reconfiguration sensing measurement response frame carries a sensing measurement parameter recommended by the sensing responder; or
the status code indicates that the multi-link sensing measurement reconfiguration parameters element requested in the reconfiguration multi-link sensing measurement request frame is rejected, and the reconfiguration multi-link sensing measurement response frame does not carry a recommended sensing measurement setup parameter.

When the status code field indicates the foregoing first two possible cases, sensing measurement setup is completed, and the sensing measurement parameter (or an operational parameter of sensing measurement) of the third link is configured.

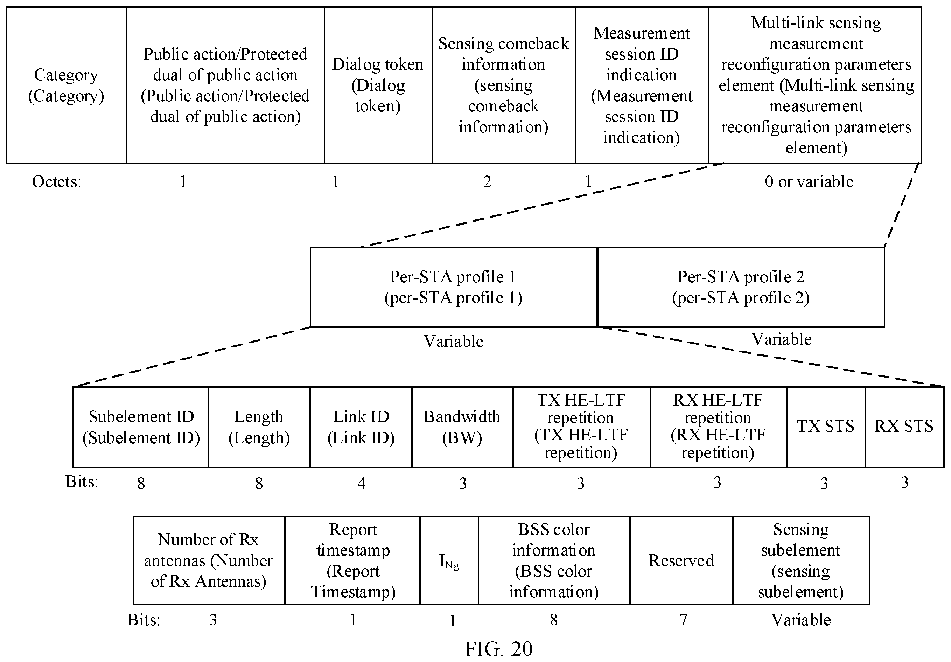

As an example, compared with the multi-link sensing measurement request frame, the reconfiguration multi-link sensing measurement request frame lacks common information. FIG. 20 is a diagram of a frame structure of a multi-link sensing measurement response frame according to an embodiment of this application. As shown in FIG. 20, the reconfiguration multi-link sensing measurement request frame includes: category (Category), public action/protected dual of public action (Public Action/Protected Dual of Public Action), dialog token (Dialog Token), sensing comeback information (Sensing Comeback Info), measurement session ID indication (Measurement Session ID Indication), and multi-link sensing measurement reconfiguration parameters element (Multi-link sensing measurement reconfiguration parameters element), where the multi-link sensing measurement reconfiguration parameters element includes per-STA profile 1 (Per-STA profile 1) and per-STA profile 2 (Per-STA profile 2). The per-station profile 1 includes: subelement ID (Subelement ID), length, link ID, bandwidth (BW), TX HE-LTF repetition (TX HE-LTF Repetition), RX HE-LTF repetition (RX HE-LTF Repetition), TX STS, RX STS, number of Rx antennas (Number of Rx antennas), report timestamp (Report timestamp), subcarrier grouping, BSS color information (BSS Color Information), reserved (Reserved) field, and multi-link sensing subelement (sensing subelement). For the meanings of the fields in the reconfiguration multi-link sensing measurement request frame, refer to the meanings of the fields in the multi-link sensing measurement request frame. Details are not described herein again.

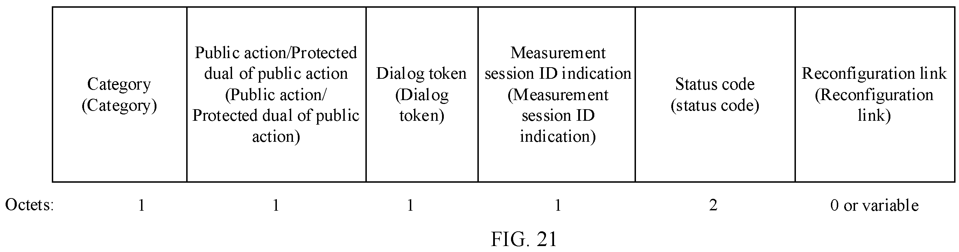

FIG. 21 is a diagram of a frame structure of a reconfiguration sensing measurement response frame according to an embodiment of this application. As shown in FIG. 21, the reconfiguration sensing measurement response frame includes: category (Category), public action/protected dual of public action (Public Action/Protected Dual of Public Action), dialog token (Dialog Token), measurement session ID indication (Measurement Session ID Indication), status code (Status code), and reconfiguration link (Reconfiguration link). The reconfiguration link: indicates an accepted link to be reconfigured, for example, the foregoing third link.

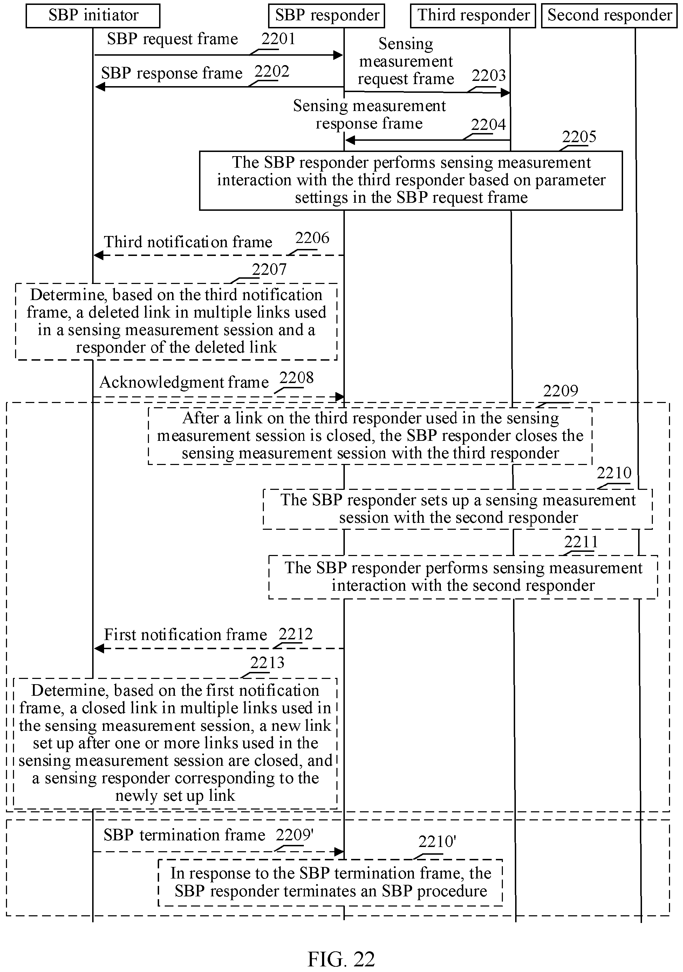

FIG. 22 is a schematic flowchart of another communication method according to an embodiment of this application. The method procedure in FIG. 22 is a possible implementation of the method described in FIG. 15. The method in FIG. 22 corresponds to the second behavior. As shown in FIG. 22, the method includes the following steps.

2201: An SBP initiator sends an SBP request frame to an SBP responder.

Correspondingly, the SBP responder receives the SBP request frame from the SBP initiator.

2202: The SBP responder sends an SBP response frame to the SBP initiator.

Correspondingly, the SBP initiator receives the SBP response frame from the SBP responder.

2203: The SBP responder sends a sensing measurement request frame to a third responder.

The SBP responder, as a sensing initiator, sends a sensing measurement request frame to a sensing responder, where the third responder is an example of the sensing responder. For step 2201 to step 2203, refer to step 1201 to step 1203 in FIG. 12. This embodiment of this application is described by using an example in which the SBP responder performs sensing measurement interaction with one sensing responder (that is, the third responder).

2204: The third responder sends a sensing measurement response frame to the SBP responder.

Correspondingly, the SBP responder receives the sensing measurement response frame from the third responder.

2205: The SBP responder performs sensing measurement interaction with the third responder based on parameter settings in the SBP request frame.

Step 2201 to step 2204 correspond to the procedure of SBP setup interaction, the procedure of sensing measurement session, and the procedure of sensing measurement interaction in FIG. 4.

2206: After one or more links used in a sensing measurement session set up between the SBP responder and one or more sensing responders are closed, the SBP responder sends a third notification frame to the SBP initiator.

2207: The SBP initiator determines, based on the third notification frame, a deleted link in multiple links used in the sensing measurement session and a responder of the deleted link.

2208: The SBP initiator sends an acknowledgment frame to the SBP responder.

Step 2206 to step 2208 are optional. For step 2206 to step 2208, refer to step 1706 to step 1708 in FIG. 17.

2209: After a link on the third responder used in the sensing measurement session is closed, the SBP responder closes the sensing measurement session with the third responder.

In a possible implementation, if the SBP responder does not receive an SBP termination frame within preset duration after receiving the acknowledgment frame for the third notification frame, the SBP responder performs step 2209 and step 2210. The preset duration may be set based on an actual requirement. This is not limited in this application.

2210: The SBP responder sets up a sensing measurement session with a second responder.

The sensing measurement session with the third responder that is closed by the SBP responder, and the sensing measurement session set up between the SBP responder and the second responder are the same session, that is, identifiers of the two sessions are the same. After the SBP responder closes the sensing measurement session with the third responder, refer to Table 2 for whether to set up a new link on the third responder or find a new responder to reconfigure a link.

In a possible implementation, when reconfiguring a link on a new sensing responder can meet parameters negotiated by the SBP responder and the SBP initiator for setting up a sensing measurement session, the SBP responder sets up a sensing measurement session with the second responder. For step 2210, refer to the foregoing description of step 1709.

2211: The SBP responder performs sensing measurement interaction with the second responder.

The link used by the SBP responder to perform sensing measurement interaction with the second responder includes a new link set up on the second responder.

2212: The SBP responder sends the first notification frame to an SBP initiator.

Correspondingly, the SBP initiator receives the first notification frame from the SBP responder. A sequence of step 2211 and step 2212 is not limited.

2213: The SBP initiator determines, based on the first notification frame, a closed link in multiple links used in the sensing measurement session, a new link set up after one or more links used in the sensing measurement session are closed, and a sensing responder corresponding to the newly set up link.

For step 2213, refer to step 1503 in FIG. 15.

2209': The SBP initiator sends an SBP termination frame to the SBP responder.

Correspondingly, the SBP responder receives the SBP termination frame from the SBP initiator.

2210': In response to the SBP termination frame, the SBP responder terminates an SBP procedure.

In an optional implementation, after sending the SBP termination frame to the SBP responder, the SBP initiator re-initiates the SBP procedure. For details, refer to step 1201 to step 1203 in FIG. 12.

Step 2209 to step 2213 and step 2209' and step 2210' are two possible implementations. FIG. 22 includes step 2209 to step 2213 or step 2209' and step 2210'.

In this embodiment of this application, after a link on the second responder used in the sensing measurement session is closed, the SBP responder sets up a new link on the second responder, which enables the session to continue. The SBP responder sends the first notification frame to the SBP initiator, so that the SBP initiator learns of updates to parameters of different sensing responders, thereby providing a reference for a subsequent behavior of the SBP initiator.

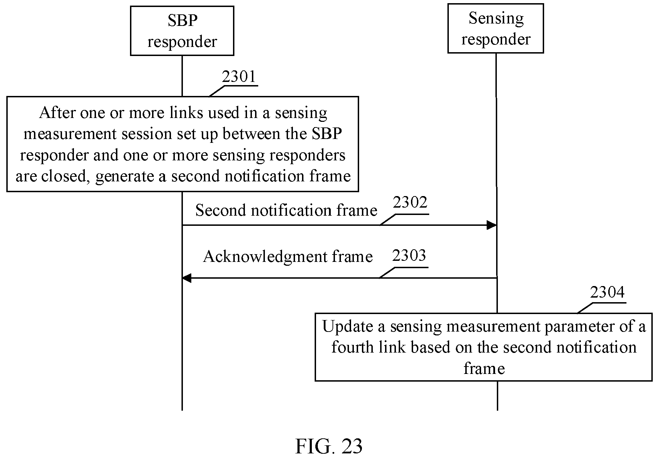

FIG. 23 is a schematic flowchart of another communication method according to an embodiment of this application. The method in FIG. 23 corresponds to the third behavior. As shown in FIG. 23, the method includes the following steps.

2301: After one or more links used in a sensing measurement session set up between a SBP responder and one or more sensing responders are closed, generate a second notification frame.

The second notification frame includes a sensing measurement parameter used by an unclosed fourth link of multiple links used in the sensing measurement session. In a possible implementation, the SBP responder determines, based on parameters negotiated by the SBP responder and an SBP initiator for setting up a sensing measurement session, the sensing measurement parameter requested for use on the fourth link; and generates the second notification frame based on the determined sensing measurement parameter requested for use on the fourth link. The concept of this embodiment of this application is that after one or more links in multiple links used in a sensing measurement session are closed, a sensing measurement parameter of an unclosed link is updated so that the sensing measurement session can continue, that is, the sensing measurement session can meet a requirement of an SBP initiator using the unclosed link. For example, the parameters negotiated by the SBP responder and the SBP initiator for setting up a sensing measurement session include a mandatory link, and the sensing measurement session set up between the SBP responder and the sensing responder uses three links (for example, the mandatory link, a non-mandatory link 1, and a non-mandatory link 2) between the SBP responder and the sensing responder; after one non-mandatory link 1 in the three links is deleted by the SBP responder or the sensing responder, the SBP responder determines, based on the parameters negotiated by the SBP responder and the SBP initiator for setting up a sensing measurement session, a sensing measurement parameter requested for use on the mandatory link and a sensing measurement parameter requested for use on the non-mandatory link 2, so that the sensing measurement parameters used on the mandatory link and the non-mandatory link 2 meet the requirement of the SBP initiator; and the SBP responder generates the second notification frame based on the determined sensing measurement parameter requested for use on the mandatory link and the sensing measurement parameter requested for use on the non-mandatory link 2.

2302: The SBP responder sends the second notification frame to the sensing responder.

Correspondingly, the sensing responder receives the second notification frame. This application is described by using an example in which the SBP responder performs sensing measurement interaction with one sensing responder.

2303: The sensing responder sends an acknowledgment frame to the SBP responder.

Correspondingly, the SBP responder receives an acknowledgment (ACK) frame from the sensing responder, where the acknowledgment frame indicates that the sensing responder has received the second notification frame.

2304: The sensing responder updates a sensing measurement parameter of a fourth link based on the second notification frame.

The fourth link includes a link used in the sensing measurement session set up by the SBP responder and one or more sensing responders. The sensing measurement parameter may include one or more of TX HE-LTF repetition, RX HE-LTF repetition, TX STS, RX STS, number of antennas, and the like.

In a possible implementation, when its own capability supports the sensing measurement parameter requested for use on the fourth link included in the second notification frame, the sensing responder updates the sensing measurement parameter of the fourth link based on the second notification frame.

In this embodiment of this application, after one or more links used in the sensing measurement session set up by the SBP responder and one or more sensing responders are closed, generating the second notification frame can enable the session to continue and reduce overheads.

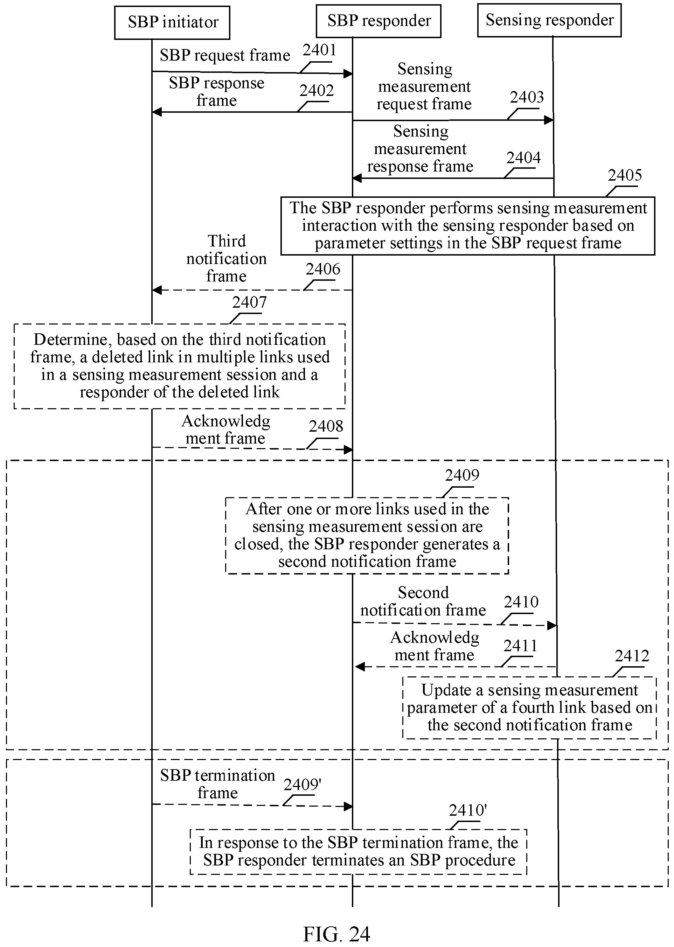

FIG. 24 is a schematic flowchart of another communication method according to an embodiment of this application. The method procedure in FIG. 24 is a possible implementation of the method described in FIG. 23. As shown in FIG. 24, the method includes the following steps.

2401: An SBP initiator sends an SBP request frame to an SBP responder.

Correspondingly, the SBP responder receives the SBP request frame from the SBP initiator.

2402: The SBP responder sends an SBP response frame to the SBP initiator.

Correspondingly, the SBP initiator receives the SBP response frame from the SBP responder.

2403: The SBP responder sends a sensing measurement request frame to a sensing responder.

The SBP responder, as a sensing initiator, sends a sensing measurement request frame to the sensing responder. For step 2401 to step 2403, refer to step 1201 to step 1203 in FIG. 12.

2404: The sensing responder sends a sensing measurement response frame to the SBP responder.

Correspondingly, the SBP responder receives the sensing measurement response frame from the sensing responder.

2405: The SBP responder performs sensing measurement interaction with the sensing responder based on parameter settings in the SBP request frame.

Step 2401 to step 2404 correspond to the procedure of SBP setup interaction, the procedure of sensing measurement session, and the procedure of sensing measurement interaction in FIG. 4.

2406: After one or more links used in a sensing measurement session set up between the SBP responder and one or more sensing responders are closed, the SBP responder sends a third notification frame to the SBP initiator.

2407: The SBP initiator determines, based on the third notification frame, a deleted link in multiple links used in the sensing measurement session and a responder of the deleted link.

2408: The SBP initiator sends an acknowledgment frame to the SBP responder.

Step 2406 to step 2408 are optional. For step 2406 to step 2408, refer to step 1706 to step 1708 in FIG. 17.

2409: After one or more links used in the sensing measurement session are closed, the SBP responder generates a second notification frame.

In a possible implementation, if the SBP responder does not receive an SBP termination frame within preset duration after receiving the acknowledgment frame for the third notification frame, the SBP responder performs step 2409. The preset duration may be set based on an actual requirement. This is not limited in this application.

2410: The SBP responder sends the second notification frame to the sensing responder.

Correspondingly, the sensing responder receives the second notification frame.

2411: The sensing responder sends an acknowledgment frame to the SBP initiator.

Correspondingly, the SBP initiator receives the acknowledgment frame from the sensing responder, where the acknowledgment frame indicates that the sensing responder has received the second notification frame.

2412: The sensing responder updates a sensing measurement parameter of a fourth link based on the second notification frame.

For step 2409 to step 2412, refer to step 2301 to step 2304 in FIG. 23.

2409': The SBP initiator sends an SBP termination frame to the SBP responder.

Correspondingly, the SBP responder receives the SBP termination frame from the SBP initiator.

2410': In response to the SBP termination frame, the SBP responder terminates an SBP procedure.

In an optional implementation, after sending the SBP termination frame to the SBP responder, the SBP initiator re-initiates the SBP procedure. For details, refer to step 1201 to step 1203 in FIG. 12.

Step 2409 to step 2412 and step 2409' and step 2410' are two possible implementations. FIG. 24 includes step 2409 to step 2412 or step 2409' and step 2410'.

In this embodiment of this application, after one or more links used in the sensing measurement session set up by the SBP responder and one or more sensing responders are closed, generating the second notification frame can enable the session to continue and reduce overheads.

The following describes an example of a possible frame structure of a multi-link SBP request frame in this embodiment of this application.

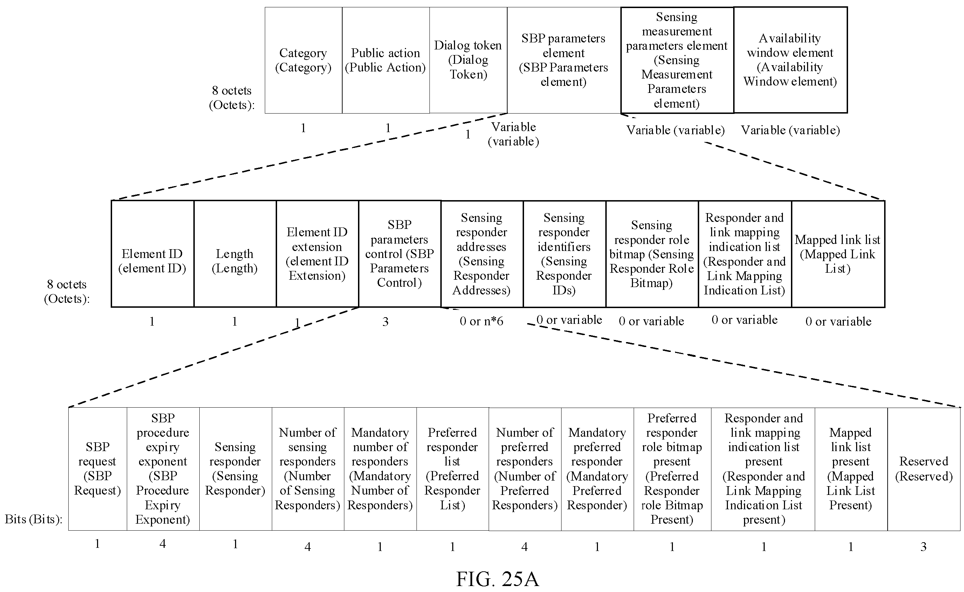

In a possible implementation, the multi-link SBP request frame indicates each sensing responder ID and a link ID/a number of links corresponding to the sensing responder ID. FIG. 25A is a diagram of a frame structure of a multi-link SBP request frame according to an embodiment of this application. As shown in FIG. 25A, the multi-link SBP request frame includes: category (Category), public action/protected dual of public action (Public Action/Protected Dual of Public Action), dialog token (Dialog Token), SBP parameters element, sensing measurement parameters element, and ISTA availability window element. For the meanings of the fields in FIG. 25A, refer to the meanings of the fields in FIG. 5. The SBP parameters element may include the following fields: element identifier (element ID), length (Length), element identifier extension (element ID Extension), SBP parameters control (SBP Parameters Control), sensing responder addresses (Sensing Responder Addresses), sensing responder identifiers (Sensing Responder IDs), or sensing responder role bitmap (Sensing Responder Role Bitmap), responder and link mapping indication list present (Responder and Link Mapping Indication List Present) field, and mapped link list (Mapped Link List Present) field. The responder and link mapping indication list present field indicates a link corresponding to a responder. The mapped link list may indicate a link list (for example, the link list exists in a bitmap form) corresponding to each sensing responder accepted/finally determined by an AP (SBP responder). For example, when the multi-link SBP parameters element is carried in the multi-link SBP response frame, a mapped link list mapped link list exists, and a link bitmap of each responder ID is given in order. If m responders are finally selected, a size may be 2m bytes, where m is an integer greater than 1.

It can be learned from FIG. 25A that, compared with SBP parameters control in the SBP request frame shown in FIG. 5 and SBP parameters control in the SBP response frame shown in FIG. 6, SBP parameters control shown in FIG. 25A includes a responder and link mapping indication list present (Responder and Link Mapping Indication List Present) field or a mapped link list present (Mapped Link List Present) field. Specifically, the responder and link mapping indication list present field indicates whether the SBP parameters element carries the link mapping indication list field; and the mapped link list present field indicates whether the SBP parameters element carries the mapped link list field. For example, if the frame format shown in FIG. 25A is an SBP request frame, an SBP parameters element in the SBP request frame includes a responder and link mapping indication list field, and SBP parameters control of the SBP parameters element includes a responder and link mapping indication list present field. If the frame format shown in FIG. 25A is an SBP response frame, the SBP parameters element in the SBP response frame may include a mapped link list field, and SBP parameters control of the SBP parameters element includes a mapped link list present field.

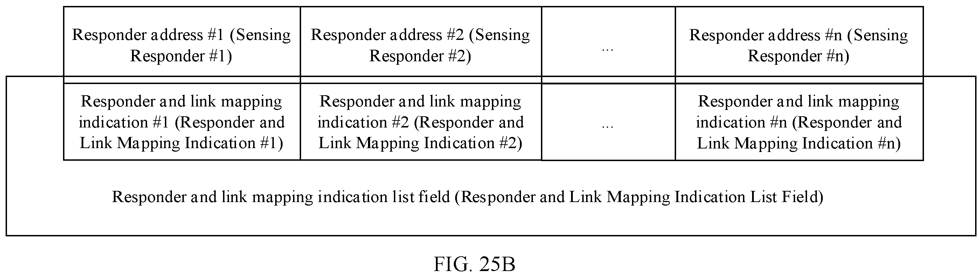

FIG. 25B is a diagram of a responder and link mapping indication list in a multi-link SBP request frame according to an embodiment of this application. As shown in FIG. 25B, if the multi-link SBP request frame includes n sensing responder addresses (Responder Address) (for example, a responder address #1 (that is, a sensing responder address #1), a responder address #2, ..., and a responder address #n shown in FIG. 25A), the responder and link mapping indication list includes n responder and link mapping indication (Responder and Link Mapping Indication) fields (for example, a responder and link mapping indication #1, a responder and link mapping indication #2, ..., and a responder and link mapping indication #n shown in FIG. 25A). The sensing responder address #1 corresponds to the responder and link mapping indication #1, and the sensing responder and link mapping indication #1 indicates a link condition of a sensing responder corresponding to the sensing responder address #1. Similarly, the sensing responder address #2 corresponds to the responder and link mapping indication #2, and the sensing responder and link mapping indication #2 indicates a link condition of a sensing responder corresponding to the sensing responder address #2; ...; and the sensing responder address #n corresponds to the responder and link mapping indication #n, and the responder and link mapping indication #n indicates a link condition of a sensing responder corresponding to the sensing responder address #n.

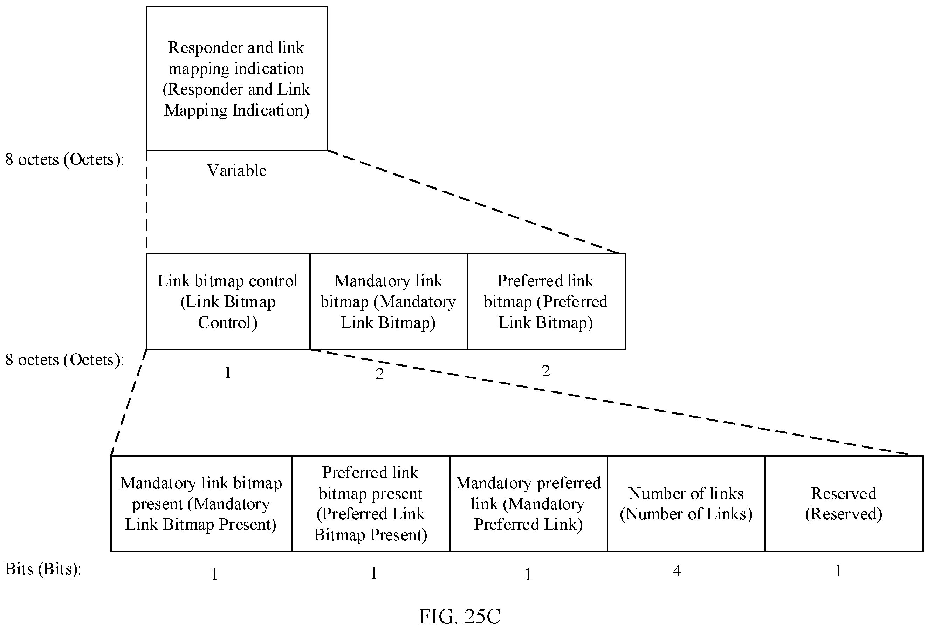

FIG. 25C is a diagram of a responder and link mapping indication in a responder and link mapping indication list according to an embodiment of this application. As shown in FIG. 25C, the responder and link mapping indication includes: a link bitmap control (Link Bitmap Control) field, a mandatory link bitmap (Mandatory Link Bitmap) field, and a preferred link bitmap (Preferred Link Bitmap) field. The mandatory link bitmap indicates a mandatory link for the sensing responder (for example, corresponding to the sensing responder address #1), and the preferred link indication field indicates a preferred link for the sensing responder (for example, corresponding to the sensing responder address #1). The link bitmap (for example, the link bitmap, the preferred link bitmap, or the mandatory link bitmap) in this application may be understood as a link identifier (Link ID). For example, a value of an i^{th} bit in the link bitmap is 1, a bit position (bit position) is i-1, and a corresponding link ID is i-1. For example, a value of a 3^{rd} bit in the link bitmap is 1, and a corresponding link ID is 2. For another example, a value of a 1^{st} bit in the link bitmap is 1, and a corresponding link ID is 0.

The link bitmap control field includes: a mandatory link bitmap present (Mandatory Link Bitmap Present) field, a preferred link bitmap present (Preferred Link Bitmap Present) field, a mandatory preferred link (Mandatory Preferred Link) field, a number of links (Number of Links) field, and a reserved (Reserved) field. The mandatory link bitmap present indicates whether the responder and link mapping indication includes a mandatory link bitmap. For example, if the mandatory link bitmap present field is set to 1, the mandatory link bitmap field exists, and the preferred link bitmap field does not exist; or if the mandatory link bitmap present field is set to 0, the mandatory link bitmap field does not exist. The preferred link bitmap present indicates whether the responder and link mapping indication include a preferred link bitmap. For example, if the preferred link bitmap present field is set to 1, the preferred link bitmap field exists, and the mandatory link bitmap field does not exist; or if the preferred link bitmap present field is set to 0, the preferred link bitmap field does not exist. The number of links indicates a number of links corresponding to the sensing responder. The preferred link indicates a link designated by an SBP initiator and preferred/optional for use in sensing measurement interaction or SBP reporting (it is also acceptable if an AP does not use the link).

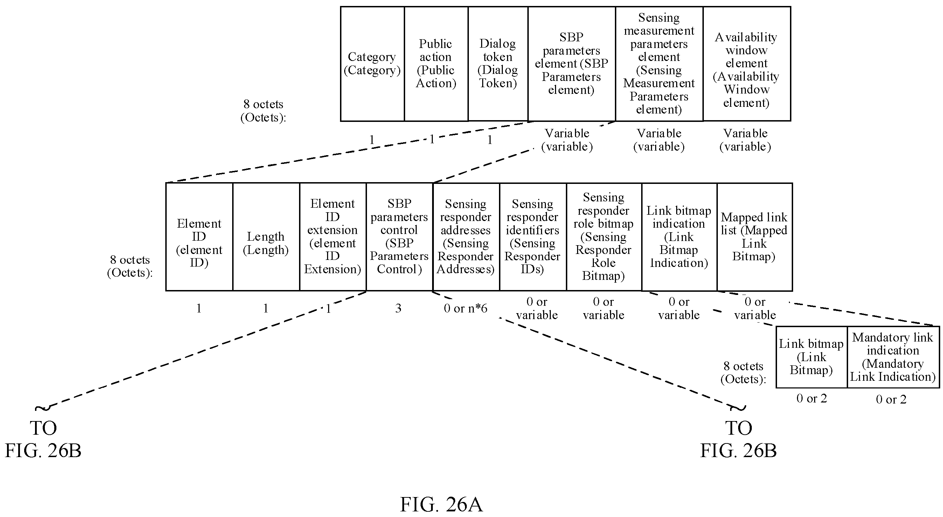

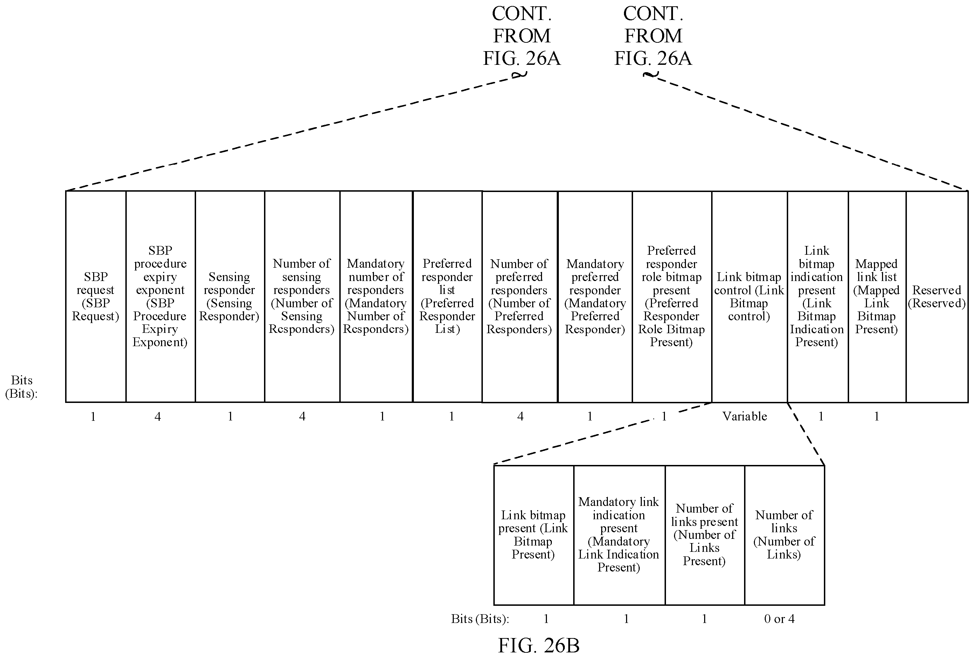

In a possible implementation, the multi-link SBP request frame indicates link IDs/numbers of links for all responders. FIG. 26A and FIG. 26B are a diagram of a frame structure of a multi-link SBP request frame according to an embodiment of this application. Compared with the multi-link SBP request frame shown in FIG. 25A, the multi-link SBP request frame shown in FIG. 26A and FIG. 26B has a different structure in an SBP parameters element. For the meanings of the fields in the multi-link SBP request frame shown in FIG. 26A and FIG. 26B, refer to the meanings of the fields in the multi-link SBP request frame shown in FIG. 25A. Refer to FIG. 26A and FIG. 26B. The SBP parameters element includes: element identifier (element ID), length (Length), element identifier extension (element ID Extension), SBP parameters control (SBP Parameters Control), sensing responder addresses (Sensing Responder Addresses), sensing responder identifiers (Sensing Responder IDs), sensing responder role bitmap (Sensing Responder Role Bitmap), link bitmap indication (Link Bitmap Indication), and mapped link list present (Mapped Link List Present) field. The link bitmap indication includes a link bitmap (Link Bitmap) and a mandatory link indication (Mandatory Link Indication). The link bitmap indicates an optional link provided by the SBP initiator. The mandatory link indication indicates whether a link ID corresponding to each bit in the link bitmap is preferred (preferred) or mandatory (mandatory). For example, when a bit in the link bitmap is set to 1, it indicates that a link ID corresponding to the bit is mandatory; or when a bit in the link bitmap is set to 0, it indicates that a link ID corresponding to the bit is preferred.

It can be learned from FIG. 26A and FIG. 26B that, compared with SBP parameters control in the SBP request frame shown in FIG. 5 and SBP parameters control in the SBP response frame shown in FIG. 6, SBP parameters control shown in FIG. 26A and FIG. 26B includes a link bitmap control (Link Bitmap control) field, a responder and link mapping indication list present (Responder and Link Mapping Indication List Present) field, and a mapped link list present (Mapped Link List Present) field. The link bitmap control includes a mandatory link bitmap present (Mandatory Link Bitmap Present) field, a preferred link bitmap present (Preferred Link Bitmap Present) field, a number of links present (Number of Links Present) field, a number of links (Number of Links) field, and a reserved (Reserved) field, where the number of links present indicates whether the number of links field exists.

It should be understood that sequence numbers of the foregoing processes do not mean execution sequences. The execution sequence of the processes should be determined based on functions and internal logic of the processes, and should not constitute any limitation on an implementation process of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, the methods and operations implemented by devices (such as the SBP initiator and the SBP responder) may alternatively be implemented by components (for example, chips or circuits) used in the devices.

It may be further understood that some optional features in embodiments of this application may be independent of other features in some scenarios, or may be combined with other features in some scenarios. This is not limited.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

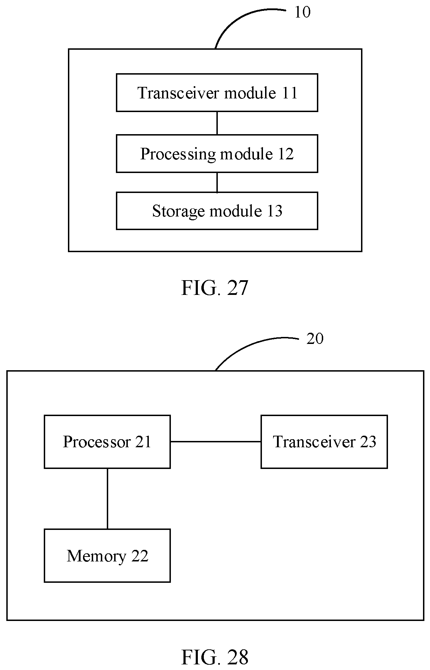

The following describes in detail communication apparatuses provided in embodiments of this application with reference to FIG. 27 to FIG. 29. It should be understood that descriptions of apparatus embodiments correspond to the descriptions of the method embodiments. Therefore, for content that is not described in detail, refer to the foregoing method embodiments. For brevity, details of a part of content are not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. The following uses an example in which functional modules are obtained through division based on corresponding functions for description.

FIG. 27 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the SBP initiator in the foregoing method embodiments, or may be a component (for example, a chip) of the SBP initiator.

The apparatus 10 may implement corresponding steps or procedures performed by the SBP initiator in the foregoing method embodiments. The transceiver module 11 may be configured to perform receiving and sending-related operations of the SBP initiator in the foregoing method embodiments, and the processing module 12 may be configured to perform a processing-related operation of the SBP initiator in the foregoing method embodiments.

In a possible implementation, the transceiver module 11 is configured to receive an SBP termination frame, where the SBP termination frame includes first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and the processing module 12 is configured to determine, based on the SBP termination frame, the reason why a sensing measurement session is unable to be set up between the SBP responder and the sensing responder or the reason why the sensing measurement session is terminated.

It should be understood that a specific process in which the units perform the foregoing corresponding steps is described in detail in the foregoing method embodiments, and for brevity, details are not described herein.

In another design, the apparatus 10 may correspond to the SBP responder in the foregoing method embodiments, or may be a component (for example, a chip) of the SBP responder.

The apparatus 10 may implement corresponding steps or procedures performed by the SBP responder in the foregoing method embodiments. The transceiver module 11 may be configured to perform receiving and sending-related operations of the SBP responder in the foregoing method embodiments, and the processing module 12 may be configured to perform a processing-related operation of the SBP responder in the foregoing method embodiments.

In a possible implementation, the processing module 12 is configured to generate a sensing by proxy SBP termination frame, where the SBP termination frame includes first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and the transceiver module 11 is configured to send the SBP termination frame.

It should be understood that a specific process in which the units perform the foregoing corresponding steps is described in detail in the foregoing method embodiments, and for brevity, details are not described herein.

In another design, the apparatus 10 may correspond to the sensing responders (including the third responder and the second responder) in the foregoing method embodiments, or may be a component (such as a chip) of the sensing responder.

The apparatus 10 may implement corresponding steps or procedures performed by the sensing responder in the foregoing method embodiments. The transceiver module 11 may be configured to perform receiving and sending-related operations of the sensing responder in the foregoing method embodiments, and the processing module 12 may be configured to perform a processing-related operation of the sensing responder in the foregoing method embodiments.

In a possible implementation, the transceiver module 11 is configured to receive a second notification frame; and the processing module 12 is configured to update a sensing measurement parameter of a fourth link based on the second notification frame, where the fourth link includes a link used in a sensing measurement session set up by a sensing by proxy SBP responder and one or more sensing responders.

It should be further understood that the apparatus 10 herein is presented in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function.

The apparatus 10 in each of the foregoing solutions has a function of implementing corresponding steps performed by the device (for example, the SBP responder) in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may alternatively be a transceiver circuit (for example, may include a receiving circuit and a sending circuit), and the processing module may be a processing circuit.

FIG. 28 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 28, the apparatus 20 further includes a memory 22, and the memory 22 is configured to store a computer program or instructions and/or data. The memory 22 and the processor 21 may be integrated together, or may be disposed separately. Optionally, there are one or more memories 22.

Optionally, as shown in FIG. 28, the apparatus 20 further includes a transceiver 23. The transceiver 23 is configured to receive a signal and/or send a signal. For example, the processor 21 is configured to control the transceiver 23 to receive a signal and/or send a signal.

In a solution, the apparatus 20 is configured to implement operations performed by the SBP responder, the SBP initiator, or the sensing responder in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes multiple forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described in this specification is intended to include, but is not limited to these memories and any memory of another appropriate type.

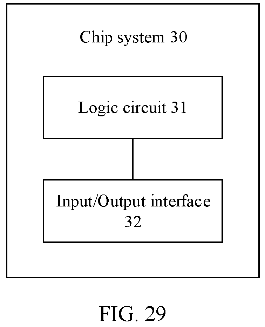

FIG. 29 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the SBP responder, the SBP initiator, or the sensing responder in the foregoing method embodiments.

For example, the logic circuit 31 is configured to implement a processing-related operation performed by the SBP responder, the SBP initiator, or the sensing responder in the foregoing method embodiments; and the input/output interface 32 is configured to implement a sending and/or receiving-related operation performed by the SBP responder, the SBP initiator, or the sensing responder in the foregoing method embodiments.

An embodiment of this application further provides a computer-readable storage medium. The computer-readable storage medium stores computer instructions for implementing the method performed by a device in the foregoing method embodiments.

For example, when the computer program is executed by a computer, the computer is enabled to implement the method performed by the SBP responder, the SBP initiator, or the sensing responder in the foregoing method embodiments.

An embodiment of this application further provides a computer program product, including instructions. When the instructions are executed by a computer, the method performed by the SBP responder, the SBP initiator, or the sensing responder in the foregoing method embodiments is implemented.

An embodiment of this application further provides a communication system, including the foregoing SBP responder, SBP initiator, and sensing responder.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for multi-link sensing measurement, comprising:
generating a sensing by proxy SBP termination frame, wherein the SBP termination frame comprises first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and
sending the SBP termination frame.

2. The method according to claim 1, wherein the reason, indicated by the first indication information, why a sensing measurement session is unable to be set up between the SBP responder and the sensing responder comprises that a requirement of setting up a sensing measurement session for a mandatory link or a number of mandatory links is not met.

3. The method according to claim 1 or 2, wherein parameters negotiated by the SBP responder and an SBP initiator for setting up a sensing measurement session comprise a mandatory responder and a mandatory link or a number of mandatory links on the mandatory responder, and the reason, indicated by the first indication information, why a sensing measurement session is unable to be set up between the SBP responder and the sensing responder comprises that the mandatory link or the number of mandatory links on the mandatory responder is not met.

4. The method according to claim 1 or 2, wherein parameters negotiated by the SBP responder and an SBP initiator for setting up a sensing measurement session comprise a number of mandatory responders, and a mandatory link or a number of mandatory links on the mandatory responder, and the reason, indicated by the first indication information, why a sensing measurement session is unable to be set up between the SBP responder and the sensing responder comprises that a number of sensing responders meeting the mandatory link or the number of mandatory links is less than the number of mandatory responders.

5. The method according to claim 1 or 2, wherein parameters negotiated by the SBP responder and an SBP initiator for setting up a sensing measurement session comprise a mandatory link or a number of mandatory links, and the reason, indicated by the first indication information, why a sensing measurement session is unable to be set up between the SBP responder and the sensing responder comprises that the SBP responder does not find a sensing responder meeting the mandatory link or the number of mandatory links.

6. The method according to claim 1, wherein the second indication information comprises identification information of a first link, and the reason why the sensing measurement session is terminated comprises that the first link is deleted by the SBP responder.

7. The method according to claim 1, wherein the second indication information comprises identification information of a first link and identification information of a first responder, and the reason why the sensing measurement session is terminated comprises that the first link is deleted by the first responder.

8. The method according to claim 1, wherein the second indication information comprises identification information of a first responder, and the reason why the sensing measurement session is terminated comprises that the first responder deletes a link used in the sensing measurement session.

9. The method according to any one of claims 1 to 8, wherein the SBP termination frame further comprises third indication information, the third indication information indicates parameter information recommended by the SBP responder for setting up a sensing measurement session, and the parameter information comprises at least one of the following: a sensing measurement parameter, a responder list, a number of responders, a link list, or a number of links.

10. A method for multi-link sensing measurement, comprising:
receiving a sensing by proxy SBP termination frame, wherein the SBP termination frame comprises first indication information or second indication information, the first indication information indicates a reason why a sensing measurement session is unable to be set up between an SBP responder and a sensing responder, and the second indication information indicates a reason why a sensing measurement session set up between the SBP responder and the sensing responder is terminated; and
determining, based on the SBP termination frame, the reason why a sensing measurement session is unable to be set up between the SBP responder and the sensing responder or the reason why the sensing measurement session is terminated.

11. The method according to claim 10, wherein the determining, based on the SBP termination frame, the reason why a sensing measurement session is unable to be set up between the SBP responder and the sensing responder comprises:
determining, based on the first indication information, that the reason why a sensing measurement session is unable to be set up between the SBP responder and the sensing responder comprises that a requirement of setting up a sensing measurement session for a mandatory link or a number of mandatory links is not met.

12. The method according to claim 10 or 11, wherein parameters negotiated by the SBP responder and an SBP initiator for setting up a sensing measurement session comprise a mandatory responder and a mandatory link or a number of mandatory links on the mandatory responder; and the determining, based on the SBP termination frame, that the reason why a sensing measurement session is unable to be set up between the SBP responder and the sensing responder comprises:
determining, based on the first indication information, that the reason why a sensing measurement session is unable to be set up between the SBP responder and the sensing responder comprises that the mandatory link or the number of mandatory links on the mandatory responder is not met.

13. The method according to claim 10 or 11, wherein parameters negotiated by the SBP responder and an SBP initiator for setting up a sensing measurement session comprise a number of mandatory responders, and a mandatory link or a number of mandatory links on the mandatory responder; and the determining, based on the SBP termination frame, that the reason why a sensing measurement session is unable to be set up between the SBP responder and the sensing responder comprises:
determining, based on the first indication information, that the reason why a sensing measurement session is unable to be set up between the SBP responder and the sensing responder comprises that a number of sensing responders meeting the mandatory link or the number of mandatory links is less than the number of mandatory responders.

14. The method according to claim 10 or 11, wherein parameters negotiated by the SBP responder and an SBP initiator for setting up a sensing measurement session comprise a mandatory link or a number of mandatory links; and the determining, based on the SBP termination frame, that the reason why a sensing measurement session is unable to be set up between the SBP responder and the sensing responder comprises:
determining, based on the first indication information, that the reason why a sensing measurement session is unable to be set up between the SBP responder and the sensing responder comprises that the SBP responder does not find a sensing responder meeting the mandatory link or the number of mandatory links.

15. The method according to claim 10, wherein the determining, based on the SBP termination frame, the reason why the sensing measurement session is terminated comprises:
when the second indication information comprises identification information of a first link, determining that the reason why the sensing measurement session is terminated comprises that the first link is deleted by the SBP responder.

16. The method according to claim 10, wherein the determining, based on the SBP termination frame, the reason why the sensing measurement session is terminated comprises:
when the second indication information comprises identification information of a first link and identification information of a first responder, determining that the reason why the sensing measurement session is terminated comprises that the first link is deleted by the first responder.

17. The method according to claim 10, wherein the determining, based on the SBP termination frame, the reason why the sensing measurement session is terminated comprises:
when the second indication information comprises identification information of a first responder, determining that the reason why the sensing measurement session is terminated comprises that the first responder deletes a link used in the sensing measurement session.

18. The method according to any one of claims 10 to 17, wherein the method further comprises:
obtaining, based on third indication information in the SBP termination frame, parameter information recommended by the SBP responder for setting up a sensing measurement session, wherein the parameter information comprises at least one of the following: a sensing measurement parameter, a responder list, a number of responders, a link list, or a number of links.

19. A communication apparatus, comprising a processor, wherein the processor is coupled to a memory, the memory is configured to store a computer program or instructions, and the processor is configured to execute the computer program or the instructions in the memory, to enable the communication apparatus to perform the method according to any one of claims 1 to 9, or enable the communication apparatus to perform the method according to any one of claims 10 to 18.

20. A communication system, wherein the communication system comprises a first communication apparatus and a second communication apparatus, the first communication apparatus is configured to perform the method according to any one of claims 1 to 9, and the second communication apparatus is configured to perform the method according to any one of claims 10 to 18.

21. A computer-readable storage medium, wherein the computer-readable storage medium stores a computer program or instructions, and when the computer program or the instructions are run on a computer, the computer is enabled to perform the method according to any one of claims 1 to 18.

22. A chip system, comprising a processor, configured to invoke a computer program from a memory and run the computer program, so that a communication device on which the chip system is installed performs the method according to any one of claims 1 to 18.

23. A computer program product, wherein when the computer program product is run on a computer, the computer is enabled to perform the method according to any one of claims 1 to 18.
